(19) Europäisches Patentamt

European Patent Office

Office européen des brevets

(11) Publication number: **0 191 134 B1**

# EUROPEAN PATENT SPECIFICATION

(45) Date of publication of patent specification: **18.12.91**

(51) Int. Cl.⁵: **B41B 19/00**, B41B 19/01, G09G 1/14

(21) Application number: 85110752.4

(22) Date of filing: 27.08.85

(54) Method for generating a set of signals representing a curve.

(30) Priority: **10.09.84 US 649011**
**10.09.84 US 649041**

(43) Date of publication of application:
**20.08.86 Bulletin 86/34**

(45) Publication of the grant of the patent:
**18.12.91 Bulletin 91/51**

(84) Designated Contracting States:
**AT CH DE GB LI**

(56) References cited:
**WO-A-83/02179**
**US-A- 4 029 947**
**US-A- 4 199 815**
**US-A- 4 331 955**

**COMPUTER, vol. 17, no. 5, May 1984, pages 40-48, IEEE, Long Beach, California, US; J. FLOWERS: "Digital type manufacture: an interactive approach"**

**Idem**

(73) Proprietor: **Linotype Company**
**425 Oser Avenue**
**Hauppauge New York 11788(US)**

(72) Inventor: **Schrieber, Ricky J.**
**60 Nassau Drive**
**Great Neck New York 11021(US)**

(74) Representative: **Schubert, Siegmar, Dipl.-Ing.**
**Patentanwälte Dr. V. Schmied-Kowarzik Dr.**
**P. Weinhold Dr.-Ing. G. Dannenberg Dr. D.**
**Gudel Dipl.-Ing. S. Schubert Dr. P. Barz**
**Grosse Eschenheimer Strasse 39**
**W-6000 Frankfurt am Main 1(DE)**

## Description

FIELD OF THE INVENTION

This invention relates to the field of encoding data related to a variable size character for access and display, and particularly, to the encoding of display points projected in the shape of a continuous smooth curve. The field of this invention is the field of character and symbol generation with continuous and smooth outline curves.

DESCRIPTION OF THE PRIOR ART

The prior art contains many examples of character generating methods and systems. One such example is U.S. Patent 4,029,947 ('947) which generates characters from a single encoded master but uses straight line interpolation to approximate curves between a set of given points. Other encoding systems are shown in U.S. Patent No. 4,298,945 ('945) and U.S. Patent No. 4,199,815 ('815) which also show a system of encoding straight lines using the end points and then interpolating points on the locus of straight lines between the end points and about the outline of a character. A further patent is U.S. Patent No. 4,338,673 ('673), which stores a character in a single size by encoding straight line outlines of the character and then uses that encoding to generate points along straight line approximations of the outline at a desired size, as in the '945 patent and the '815 patent.

However, these and other curve generation techniques do not use a system whereby the coordinate points on the outline of a character are encoded in a single master and then, by utilizing a parametric cubic expression of a single variable, a series of signals describing nodes on the locus of a smooth continuous curve between those points, are generated for display of the character at any variable size.

Parametric cubic curves are known and shown in "Fundamentals of Interactive Computer Graphics", J.D. Foley and Andries Van Dam; Addison Wesley, Reading Mass, 1982. Shown therein are parametric cubic curves, as functions of a single variable, used to represent curve surfaces.

Further, T$_E$X and METAFONT, Donald E. Knuth; American Math Society, Digital Press, Bedford, Massachusetts, 1979, shows the use of a parametric cubic curve wherein, given the coordinate positions of a set of end points and the first derivative (slope) of a curve at the end points, a parametric cubic polynomial (a function of a single parameter t), can be used to generate the locus of points on a smooth continuous curve segment between those end points. As shown by Knuth, the locus of each curve segment depends on the location of the two end points of that segment, for example, $Z_1$ and $Z_2$, and the angle of the curve at $Z_1$, determined by the location of adjacent points $Z_0$, $Z_2$ and $Z_3$. In fitting the curve between two end points, the angles at $Z_1$ and $Z_2$ are predetermined by Knuth. For example, where the curve is from $Z_0$ to $Z_1$ to $Z_2$, Knuth assumes, as a rule, the direction the curve takes through $Z_1$ is the same as the direction of the arc of a circle from $Z_0$ to $Z_1$ to $Z_2$. However, not all curved outlines will satisfy this rule and, in many cases, Knuth requires a further adaptation of that foregoing process to produce the desired shape, namely of a curve representing the actual smooth curved outline of a character.

Knuth's process starts using the rule described above specifying a circle when fitting a curve between three given points $Z_1$,$Z_2$,$Z_3$. Knuth does show that a parametric cubic curve as a function of a single parameter t, as also shown in "Fundamentals of Interactive Computer Graphics", can be modified, as shown on page 20 of Knuth, to include "velocities" specified as "r" and "s" and which are functions of the entrance angle and exit angle of the curve segment at the given end points. The velocities' values determine how the resulting curve will vary as a function of t, either slowly describing a longer curve distance or more quickly describing a shorter curve distance. The r and s formulas are arbitrary and, in the case shown by Knuth, are chosen to provide excellent approximations to circles and ellipses when $\theta$ equals $\phi$ and $\theta + \phi$ equals 90 degrees. Additional properties chosen to be satisfied by Knuth's arbitrary formulas for r and s are further described in T$_E$X and METAFONT.

In addition to Knuth's internal requirement to specify an entrance and exit angle at the curve end points, where no previous angle or curve history is given, Knuth also must use the circle approximation rule, specified above, for each of the end points on the curve. This means that where the actual curve to be generated is not accurately produced by the Knuth circle approximation, an adjustment must be made. Knuth makes this adjustment, manipulating adjoining points. For example, where the curve is to be fit between points $Z_1$, $Z_2$ and $Z_3$. Knuth may manipulate the locations of $Z_0$ or $Z_1$ or $Z_3$ or $Z_4$ to obtain an accurate fit. A further problem in Knuth occurs when the sign of $\theta$ is the same as the sign of $\phi$ implying a) the curve entrance angle at point $Z_1$, is in the same quadrant as the curve exit angle at $Z_2$, b) a sine wabe between $Z_1$ and $Z_2$ and c) an inflection point. Knuth must resort to a manipulation of point locations to obtain a desired smooth curve around the inflection point.

In summary, the processes described above for producing outlines and showing the use of a parametric cubic curve expressed as a polynomial capable of generating a series of points along the locus of a curve between two given points can only do so with the disadvantages noted above.

A graphic arts method is known (WO-A-8302179) for representation via display media of two dimensional figures. The method convert raw figure data into a reduced data set defining a two dimensional arbitrary shape. This is a curve series whose edges are defined by second order parametric curves. The boundary of the curve series is defined by a series of vertices or node points interconnected by a series of curves and straight lines. For determining the nodes only the interknot angle is used. The determination is effected on the basis of a quadratic equation. Consequently the approximation of the figure is smooth enough for high typographic demands. The present invention overcomes the deficiencies of Knuth by using an entirely different method of determining the angles (or slopes) to be input into the curve equations. The present invention determines the input angle (or slope) at an end point by determining the average angle (or slope) of straight lines connecting the end point to the next previous knot and next subsequent knot in the defined knot order. Since the input angles (or slopes) are determined as a function of adjacent knot locations and are not constrained to the circular arc criterion, a smoother and better fitting curve can be obtained. It is further known (COMPUTER, vol. 17, No. 5, May 1984. pages 40 - 48) to the Knuth method or a variation thereof derive the slope values to be input into the cubic equations. The Knuth method employs parametric cubic polynomial equations for interpolation. These equations (usually Hermite or Bessier type) require input of the positions of the end points of the curve segment and also the angle (or slope) of the curve at each end point. In the Knuth method, the angles, to be input into the curve equations, were obtained by fitting a circular arc to the end points and adjacent points. The Knuth method would then determine the angles of that arc at the end points and use those angles in the curve equations. This circle approximation technique for determining angles does not work well when the knots (or known points) of the curve are in a configuration which defines a circular arc construction. The Knuth method surrenders to this problem by changing the knot locations to fit the circular arc. Since the input angles (or slopes) are constrained to the circular arc criterion, it is not always possible to obtain a smooth and well fitting curve.

In the following summary of the invention, the method and system for using a parametric cubic curve which accurately reproduces a curve section between given points is shown and described.

## SUMMARY OF THE INVENTION

This invention has as its object the generation, encoding and display of a series of points (nodes) along the locus of a curve segment between two given end points which are defined as "knots". It has been specifically developed to generate the locus of points (nodes) along the smooth curved outline of characters or symbols between given knots (i.e., $Z_{a-1}$, $Z_a$, $Z_{a+1}$ ... $Z_{n-1}$, $Z_n$), but it should be understood that its use is not necessarily limited to that purpose but may be used to generate and display smooth continuous curves between any end points, regardless of the application.

In the case of the applicant's preferred embodiment, the knots are coordinate points along the outline of a character, which may be an alphanumeric or any other character or symbol and which coordinate points may be representative of a master size encoded character at a normalized size, on a dimensionless normalized encoding grid. The coordinate points may be decoded for display at a predetermined normalized display size or at an expanded or reduced size. The knots may be along any outline or surface whether two or three dimensional, although the applicant's preferred embodiment is shown in a two-dimensional model for use in smooth continuous curve generation. Using the method and system of applicant, the nodes along a two-dimensional curve or three-dimensional surface locus may be generated. The system shown herein generates the nodes using the encoded knot positions and the slopes of the curve at the knots. The process generates signals representing the nodes' coordinate values and is based upon the length (Z) between the knots and the angular interrelationship (B) of each of the knots with respect to a reference angle on the encoding grid.

In the preferred embodiment, the knots' coordinates are encoded in a closed data loop and represent dimensionless coordinates about the closed outline loop of the character or symbol. The method described herein enters the closed data loop at a set of encoded coordinates representing a knot on the closed outline loop and initiates the node generating process by using the angular interrelationships of the knots about that entry knot. However, other methods may be used to initiate the process without departing from the inventive concept. In applicant's preferred embodiment, once having entered the encoded closed data loop, the analysis may proceed in a clockwise or counterclockwise direction around the closed data loop.

It should be understood that the principles of this invention are not limited to a closed outline loop or closed data loop, but may be applied to open outline loops and to open data loops.

The process may be used to generate either a smooth continuous curve between the knots or some other form of curve, forming a cusp at a knot for example, and which although continuous, it is not smooth at all locations but angular, as in the shape of a "K" or "G". In the preferred embodiment of the invention, the selection of a smooth continuous curve or merely a continuous curve, having a cusp for example, is made using stored rules which serve as default command codes which use the interknot angles formed between the knots, and the distance between the knots to produce a desired result. For example, where the angle formed by two knots is in excess of a predetermined threshold angle, a default command code may direct that a cusp be formed. Other rules such as override control codes may be similarly used to force a cusp or smooth curve, regardless of the threshold conditions and which may be encoded in the closed data loop to override the default command codes as explained below.

Assuming, for the purpose of explaining the invention, it is desired to connect all knots in the closed outline loop with smooth continuous curves, the angles formed between an entrance knot at which the representative encoded data loop is entered and the first and second successive knots thereto in a chosen progression of knots in the closed outline loop are averaged to produce average angle values. As the curve formed between knots is a continuation of a curve which enters at the first of the knots ($Z_a$), and which exists at successive or at a second of the knots ($Z_{a+1}$), the tangent angles of the curve, which are the entrance angle at the first knot and exit angle at the second knot can be specified as average angles. The analysis continues by proceeding around the closed outline loop in the established progression of knots and the order thereof of the knots and examining the angles formed between the knots as described above.

As the knots form a master skeletal outline of the character or symbol when juxtaposed on a dimensionless encoding grid, arranged at a normalized size, the knots may be rotated or scaled relative to such a normalized encoding grid. Once the master encoded character or symbol (master encoded character) is scaled and positioned as desired, then the analysis described above, may continue wherein a) the encoded closed data loop of knots in the closed outline loop is entered at a first set of coordinates representing a first knot, b) the angular and spacial relationships of the knots on the normalized encoding grid are determined, using the representative encoded data and c) for each set of knots along the closed outline loop, assuming that each knot is to be connected by a continuation of a smooth curve, the average angles of the respective curve segments entering and exiting the respective knots are determined. Where a smooth continuous curve is desired, then the entrance angle of the curve segment at a knot would normally be the same as the exit angle of the curve from that same knot.

By using the foregoing method of analysis, namely, determining the average angles made by the curve passing through the knots, and using those average angles to represent the slope of the tangents to the particular curve segment at the respective knots, the disadvantages shown in the prior art are overcome.

In particular, in this inventive concept, there is no need to define a circle between the knots and then compute the locus of nodes on the circle as Knuth does. A faster process results using this invention which requires only the interknot angles of the knots relative to each other and to a reference angle be known. The process as stated above, uses a parametric cubic polynomial relationship of a single variable t to generate signals or data, indicative of and representing the coordinates of nodes on the locus of a smooth continuous curve segment between sets of respective knots. Where a greater resolution and greater number of nodes is needed to describe the locus, then the incremental value of the parameter t, may be decreased providing a greater number of discrete cumulative values of t and node coordinates. Where less resolution and fewer nodes are needed to define the locus, then the incremental value of t can be enlarged, producing fewer discrete cumulative values of t and nodes.

In the preferred embodiment, the dimensionless normalized master encoding grid represents an EM Square ($M^2$) of 864 by 864 Dimensionless Resolution Units (DRU's) in each of the X, Y axes. The $M^2$ is a measure used in the typesetting trade wherein a character is set within an $M^2$ and is shown herein in a manner consistent with the application of the inventive principles in the preferred embodiment. When the master encoded character is to be displayed, the master encoded character, at a normalized size on the normalized encoding grid is scaled, the knot coordinate positions at the scaled size are encoded and expressed in the appropriate display intercept units such as Raster Resolution Units (RRU's). These scaled encoded knots in the preferred embodiment are expressed in terms of the display RRU's and used to determine the incremental value of t. The incremental value of t is used to generate discrete cumulative values of t which are then applied to the cubic parametric polynomial to generate the node coordinates. Then through the cubic parametric polynomial relationship, signals indicative of the coordinates of the nodes are generated and stored as data. As defined by a parametric expression of a single parameter t, the resultant node's x, y coordinate values (X or Y are the axial directions in the preferred embodiment), vary separately as separate functions of t [i.e. x(t), y(t)]. At the scaled size, the incremental value of t may be related to the reciprocal of the distance between knots expressed in RRU's (i.e. $Z_d = |Z_n-Z_{n-1}|$) or any other suitable method may be used to produce a value of t. Values representing the node coordinates are then generated using these incremental values of t, each value being added, to the previous cumulative values (with the second incremental value of t being added to the first incremental value of t and the third incremental value of t being added to the previous cumulative value of t and so on). In the preferred embodiment, the value of t is set to vary from 0 to 1.

The resulting series of signals, stored as encoded data, represent knots and nodes which define the locus of the smooth continuous curve between the knots and the outline of the character or symbol is a machine part ultimately used to control or modulate a display to form the desired character or symbol at the desired size, in a visual image. The resultant data may be run length data, which is applied directly to a raster beam, to position the beam and energize the beam accordingly, or may be used to control a free running raster.

Interpolation, rounding or truncating of value may be used to locate the nodes on the display intercepts corresponding to the raster line locations, where exact coincidence is lacking.

As previously stated, as characters or symbols are not always smooth curves but may contain cusps, a threshold test may be used, such as one based on the exterior angle formed by lines between knots. Where that exterior angle at a knot is greater than a predetermined threshold angle, for example, a cusp may be assumed. It being understood, however, that if the exterior angle is less than the threshold angle, the analysis previously described with regard for producing a locus of nodes to define a smooth continuous curves would be used.

In the preferred embodiment, the master encoding grid is a Cartesian coordinate system. As the preferred embodiment is used in typesetting, the encoding grid relative to which the character is encoded is set within an $M^2$, which in the preferred embodiment contains 864 by 864 Dimensionless Resolution Units (DRU's). The master encoded character, at its normal size is set over a portion of the available normalized encoding grid area of the $M^2$ As is known in the typesetting field, expansion areas in the $M^2$ are also provided for large size characters. The character may be scaled, rotated or projected by ordinary known techniques and new coordinates for the knots may be determined accordingly, as is known in the art. In the preferred embodiment, the scaling is done in increments of 1/1024 DRU's. The new coordinate locations of the knots for the character at its scaled, rotated or projected positions are determined. As only integers are used in the preferred embodiment, any fraction or equivalent thereof is discarded. In the process, the percent of reduction or enlargement is first calculated in relation to a desired character size in units of typesetter's points. The precision of the scaling is increased by an autoscaling linear interpolation increasing the resolution of the linear interpolation, as explained below. The result is a scaled coordinate point in RRU's without the need to utilize floating point arithmetic.

In the preferred embodiment and as stated above, override control codes are accessed responsive to data stored with the stored knot coordinates to reduce storage and the processing time.

The code 0 is used to indicate the end of all the loops.

A code 1 is used to indicate the movement in a relatively long direction on an axis, for example, the X axis. In this case, an X value is replaced with a new X coordinate value.

The code 2 indicates the same process as a code 1 for another axis, for example, the Y axis direction, where the Y value is replaced with a new Y coordinate value.

A code 3, as in codes 1 and 2, indicates X and Y are both replaced with new coordinate values.

A code 4 indicates the finish of a previous encoded loop and the start of a new loop.

Codes 5, 6 and 7 indicate that the X,Y or XY directions are respectively altered.

Codes 8 to 11 are editing commands forcing predetermined conditions for the curve at the respective knots as will be described.

The knots may be encoded in the closed data loop on a 4-bit memory boundary (nibble) and in the preferred embodiment, the first nibble value of a complete information set of nibbles is used to specify the number of nibbles used in the complete information set.

Additionally, the data is packed in a novel manner which can be interpreted as spacial information or control codes, as will be explained.

In summary, the inventive concept is a process and system for transforming a machine part, in the form of signals, encoded as data and representing a pattern of knots on the outline of a master size symbol, into a similar pattern at a reduced or enlarged size or transposed in space, by generating a series of encoded data signals representing nodes which more definitely define the said pattern in the shape of smooth continuous curves or cusps and which data signals may be directly used to control a display process to visually display the pattern.

Accordingly, what is disclosed is a method of creating a data base on a storage medium useable in defining a memory in a computing device including the step of encoding data in the memory, said data representing knots on an outline defined relative to a coordinate plane, said step of encoding said data including the substeps of

(i) generating signals representing nodes on a locus of a curve defined by a set of said knots, and

(ii) encoding said node signals in said storage medium for use in representing said curve in a separate curve generating process in correspondence to said curve locus.

The method of creating said data base comprises the steps of:

(a) selecting sets of coordinates on said outline to represent said knots,

(b) establishing a successive order of said knots,

(c) encoding said knots in a data order in said memory, which is indicative of said successive knot order,

(d) said encoding in step (c) providing an information set of data in the form of a control code indicative of at least one of:

i. the coordinate locations of said knots,

ii. a direction to be followed to reach a knot from a preceding knot,

iii. a predetermined desired shape of said outline between a pair of said knots, and

iv. a shape of said outline at a knot,

(e) for a first knot $(Z_a)$, representing a first end point of a first curve segment (21) to be generated, deriving a first angle (a) measured with respect to an arbitrary reference line and indicative of an average of two interknot angles $(B_{a-1}$ and $B_a)$, wherein $(Z_{a-1})$ is the knot immediately preceding knot $(Z_a)$ in said successive order and interknot angle $(B_{a-1})$ is the angle formed between the reference line and a straight line connecting the two knots $(Z_a$ and $Z_{a-1})$ and wherein $(Z_{a+1})$ is the knot immediately succeeding knot $(Z_a)$ in said successive order and interknot angle $B_a$ is the angle formed between the reference line and a straight line connecting said knots $(Z_a$ and $Z_{a+1})$, and coding as data in said memory, signals indicative of said first angle (0),

(f) at a second of said knots $(Z_{a+1})$, representing a second end point of said first curve segment (21), establishing a second angle $(B_{a+1})$ for said first curve segment, and encoding as data in said memory said computing device signals indicative of said second angle $(B_{a+1})$,

(g) establishing a compiler in said memory, which generates locus points for compiling data as a function of:

i. a predetermined cubic parametric polynomial function of a parameter "t" which is incremented in steps;

ii. said knots; and

iii. said angles at said end points of said first curve segments;

(h) establishing a limited range "R" of values for parameter "t" in the compiler,

(i) in said memory, applying said signals indicative of said locations of said first and second knots of said first curve segment to said compiler,

(j) in said memory, applying said signals indicative of said first and second angles of said first curve segment (21) to said compiler,

(k) generating a signal indicative of a distinct selected value of parameter "t" within range "R" by incremental signal generation, and applying said signal to said compiler to derive a signal indicative of a respective node location on said first curve segment according to said predetermined cubic parametric polynomial function,

(l) repeating step (k) by applying signals indicative of additional distinct selected values of said parameter "t" within said range "R" to derive a plurality of signals indicative of respective node locations on said locus of said first curve segment for respective values of paramter "t", and

(m) encoding said signals derived in steps (k) and (l), in said data base in said memory for later sorting to represent said first curve segment for later generation of a visual representation of said curve by using said data encoded signals directly to control a display process and visually display the curve.

Further features of the invention are indicated in the subclaims.

## BRIEF DESCRIPTION OF THE DRAWINGS

FIG. 1a shows a set of knots (i.e. $Z_a$, $Z_{a+1}$, $Z_{a+2}$, ...) forming the skeletal outline of a master encoded character.

FIG. 1b shows the closed outline loops with reference to a character.

FIG. 1c shows curve segments $Z_{a-1}$, $Z_a$, $Z_a$, $Z_{a+1}$, and curve $Z_{a+1}$, $Z_{a+2}$ and the relationships of the deviance angles $\theta$ and $\phi$, at knot $Z_a$ and $Z_{a+1}$.

FIG. 1d and FIG. 1e shows in greater detail the deviance angles of the curve segment $Z_a$, $Z_{a+1}$, at the

respective entrance and exit knots, as functions of the interknot angle (B) and the entrance and exit angles, and.

FIG. 2 shows the relationships of the knots, tangent angles and angles and to a curve, for the purpose of explaining the Hermite interpolator.

FIG. 3 shows a master encoding grid as may be used in the preferred embodiment, at a normalized size, for encoding a character or symbol such as the character G shown in FIG. 3, as a master encoded character, at a normalized size.

FIG. 4 shows the manner a look-up table may be arranged so access in one direction would provide a value equal to $T_2$, as explained herein, and in the opposite direction, a value of $T_3$, as explained herein.

FIG. 5 shows the angular relationships between a set of knots $Z_a$, and $Z_{a+1}$ when a sharp knot or cusp is to be produced.

FIG. 6a shows the angular relationships at a set of knots when a knot between a straight line and a curve is desired to be smooth.

FIG. 6b shows the angular relationships at a smooth knot, and between a curve line and a straight line.

FIG. 7a shows the angular relationships at a knot between a curve line and straight line, forced by a control code to override a default command code, which otherwise would produce the results shown in FIG. 7b.

FIG. 8 shows the angular relationships about a set of knots $Z_a$ and $Z_{a+1}$ when it is desired that a smooth continuous curve pass between the knots.

FIG. 9 shows a character as may be produced according to the principles of the invention.

FIG. 10 illustrates in block diagram a general type of system with which the method of this invention can be practiced.

## DESCRIPTION OF THE PREFERRED EMBODIMENT

As stated in the summary, the object of this invention is to generate a series of display signals, representing nodes describing the locus of a smooth continuous curve at a desired size, from a normalized curve encoded as a set of encoded knots. Normalized is used in its general and ordinary meaning to denote a norm or standard size. However, as would be apparent to those skilled in the art, the displayed curve, described in terms of display intercept coordinates (RRU's) is dependent upon the resolution of the display, and the rate or relationship between the number of raster resolution units (RRU's) at a given display resolution to the dimensionless resolution units (DRU's) in which the curve is encoded at its normalized size and on the normalized grid. The normalized encoded curve may also be thought of as a master which is encoded at a master size relative to the master encoding grid which may have any suitable coordinate system and which after scaling, may be used to generate the encoded data representing display intercepts in raster units, at a given raster resolution for any desired display size character. As the inventive concepts disclosed herein are used in the typesetting industry to produce typeset composition containing characters having curved outlines in conformance to the highest graphic standards, scaling starts with a determination of the desired size of the character in any chosen system of measurement. In the preferred embodiment, character size is expressed in printer's points (351.282 micrometers/point or 0.01383 inches/point). It being understood, however, that the invention can be used in connection with other units of measurements and with applications outside the printing or typesetting industry, without deviating from or changing the inventive concepts shown herein. The invention, as described herein is with reference to the printing industry, where the master encoding grid is made synonymous with a dimensionless encoding grid in the form of a typesetting $M^2$. This is the application of the preferred embodiment of the invention and discloses the best mode of using the invention.

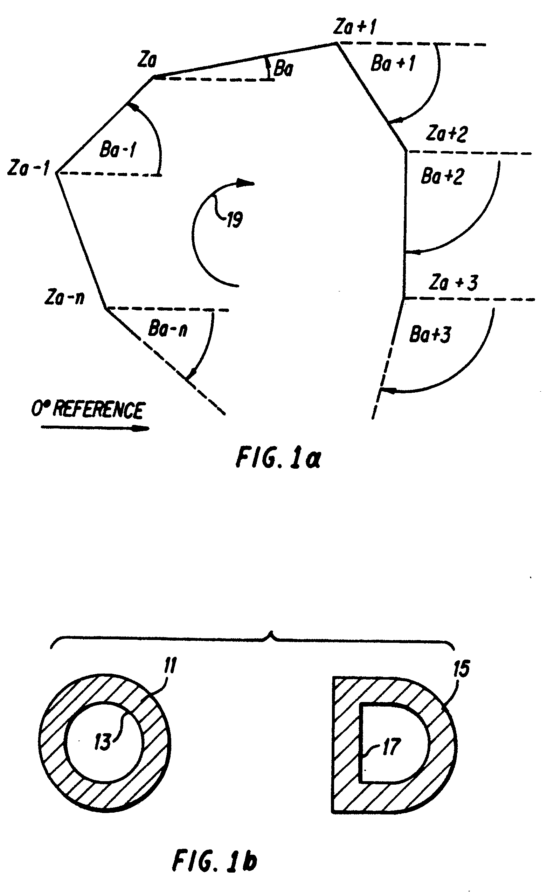

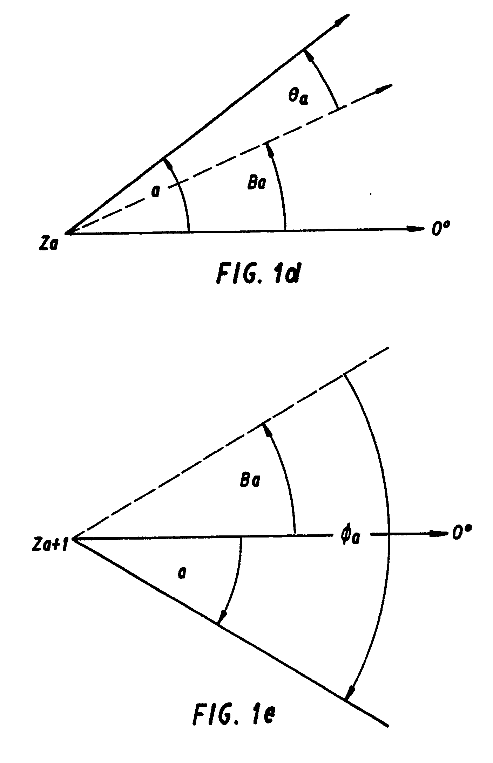

The problem solved by this invention may be best considered by viewing FIG. 1a which shows a series of data encoded knots ($Z_{a-1}$, $Z_a$, $Z_{a+1}$, $Z_{a+2}$ ...) on a dimensionless encoding grid having coordinates in the X and Y axial directions, with the X direction coinciding with a zero degree ($0°$) reference angle. It should be understood, however, that any system of coordinates can be used with any reference angle chosen without changing the manner in which the inventive concepts are used.

As shown in FIG. 1a, a number of knots $Z_{a-1}$, $Z_a$, $Z_{a+1}$, $Z_{a+2}$, $Z_{a+3}$ inclusive to $Z_{a-n}$ represent and outline loop which may be smooth and continuous over a series of such knots or continuous without being smooth over a series of such knots or a combination of the foregoing. As stated, the knots represent the skeletal outline of a predetermined normalized or master size character or symbol (hereinafter referred to as master size character), on a juxtaposed dimensionless encoding grid where the coordinates have dimensions of Dimensionless Resolution Units (DRU's). In the case of the encoded character, the master size is with reference to the normalized encoding grid and the area within the grid. The interknot angles between the knots, with reference to the reference angle, are shown as generally denoted by "B" and particularly as $B_{a-1}$, $B_a$, $B_{a+1}$ and so on for the interknot angles at respective knots $Z_{a-1}$, $Z_a$, $Z_{a+1}$ and so on. FIG. 1a shows a skeletal outline as may be typically used for symbol wherein all the knots $Z_{a-1}$ through $Z_{a-n}$ on the symbol outline are arranged on a closed outline loop. This relationship in its simplest form could be shown by the knots for the outline of an O or D, encoded with two such closed outline loops, for the exterior closed outline loops 11 and 15 and one for the interior closed outline loops 13 and 17 respectively, as shown in FIG. 1b.

As shown in FIG. 1a, a direction of progression of the curve outline is chosen with reference to an defined by the order of the knots around the outline. That progression of the curve locus and order of knots is shown by numeral 19 in FIG. 1a. The chosen order of knots defining the said progression, (i.e. $Z_{a-1}$, $Z_a$, $Z_{a+2}$ ... $Z_{a-n}$) establishes an outline loop of knots. That outline loop may be a closed outline loop which ends upon itself, as shown in FIG. 1b, by closed outline loops 11, 13, 15 and 17. As will be explained below, a compiler functioning according to a parametric cubic polynomial is used to generate signals indicative of nodes which are the coordinates of locations on the locus of a smooth continuous curve between the knots. The order of the knots, defines an outline loop and the respective order of the nodes by their locations relative to the knots and to each other on the outline loop, as would be apparent to one skilled in the art. As explained below, the data representative or indicative of these knots and nodes are encoded in a data order indicative of the order of the knots and nodes on the outline loop. This data order establishes a data loop. As further explained below, the data loop may be designed to close upon itself so that the ending data location for the data loop is the starting data location where data was accessed therefrom in the encoding process and forming a closed data loop corresponding to the closed outline loop.

As stated above, the knots $Z_a$, $Z_{a+1}$, etc., may be encoded in the Cartesian coordinate system as X-Y points, using as a reference the normalized encoding grid, or may be encoded in any other system of coordinate points. The outline between the knots is not encoded initially as it will be represented by a generated series of nodes and which will represent the smooth continuous curve locus of the outline, according to the principle of the invention. The display intercept values for the nodes on the curve locus, at a predetermined display size, are related to the encoded knots on the dimensionless encoding grid shown in FIG. 1a by a parametric cubic polynomial relationship. Since the invention is used in a two-dimensional system, the parametric representation represents the curve locus of such nodes Z(X,Y) independently as a third order polynomial function of a parameter "t" which is independent of the encoding grid coordinates. In the preferred embodiment, the parametric cubic polynomial is shown in a Hermite form, it being understood that those skilled in the art can use other forms for defining the polynomial such as the Bezier form, defined in "Fundamentals of Interactive Computer Graphics", referred to in the foregoing, and to which the improvements of this invention are applicable.

The parametric representation of a curve is one for which X and Y are represented as a third order (cubic) polynomial relationship of a parameter "t" where:

1.1 $\quad x(t) = a_x t^3 + b_x t^2 + c_x t + d$
1.2 $\quad y(t) = a_y t^3 + b_y t^2 + c_y t + d$

The Hermite representation of the parametric cubic polynomial uses the coordinate positions, of the knots, and the tangent angles at the knots, such as $Z_a$, $Z_{a+1}$, etc. The Bezier representation uses the positions of the curve's end points and two other points to define, indirectly, the tangents at the curve's end points. The improvements of this invention shown herein are applicable to any representation by the parametric cubic polynomial which uses the position of the curve's end points and the tangent angles of the curve at the end points, directly or indirectly. For sake of explanation, only the Hermite form will be discussed.

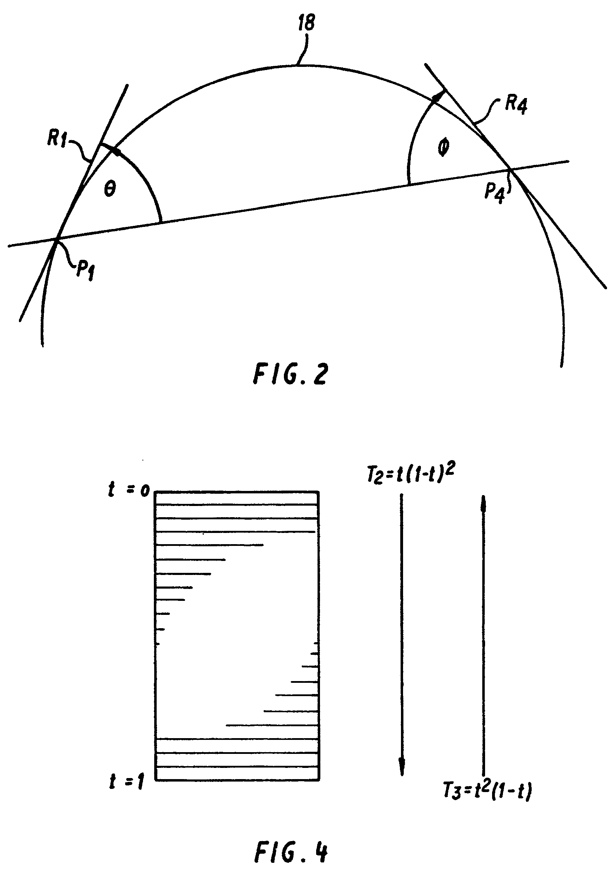

As shown in FIG. 2, given end points $P_1$, $P_4$ and the respective tangent vectors $R_1$, $R_4$ at the two end points $P_1$, $P_4$ and along the smooth continuous curve segment 18, a cubic parametric polynomial relationship between a parameter "t" and the locus of a curve segment 18, between a pair of end points, $P_1$, and $P_4$, may be represented as the following relationships below.

2.1 $\quad x(t) = P_{1x} + (3t^2 - 2t^3)(P_{4x} - P_{1x}) + t(t-1)^2 R_{1x} + t^2(t-1)R_{4x}$
2.2 $\quad y(t) = P_{1y} + (3t^2 - 2t^3)(P_{4y} - P_{1y}) + t(t-1)^2 R_{1y} + t^2(t-1)R_{4y}$

where $(P_{1x}, P_{1y})(P_{4x}, P_{4y})$ are the coordinate values at $P_1$ and $P_4$ respectively, and $(R_{1x}, R_{1y})$ and $(R_{4x}, R_{4y})$ are the tangent values at $P_1$ and $P_4$ respectively, with respect to a straight line between $P_1$ and $P_4$ thereafter called entrance and exit angles, respectively.

Cubic curves as a minimum are used, as no lower order representation of curve segments can provide continuity of position and slope at the end points where the curve segments meet, and at the same time can assure that the ends of the curve segment pass through specific points.

The derivation of the Hermite parametric cubic polynomials are shown in "Fundamentals of Interactive Computer Graphics" and the manner of using such parametric cubic polynomials to define the points along a curve are further discussed in $T_EX$ and METAFONT referred to in the foregoing.

The Hermite form of the parametric cubic polynomial is as stated is a series of curves as shown by Knuth in Chapter 2 in $T_EX$ and METAFONT and which is written in Euler notation as:

3.1 $\quad Z(t) = Z_a + (3t^2 - 2t^3)(Z_{a+1} - Z_a) + rt(1-t)^2 S_1 - st^2(1-t)S_2$

3.2 $\quad S_1 = e^{j\theta}(Z_{a+1} - Z_a); S_2 = e^{j\phi}(Z_{a+1} - Z_a); 0 \leq t \leq t$

and, where r and s are positive real numbers. Equations 3.1, 3.2 define a curve having directions represented by the deviance angles $\theta$ and $\phi$ at $Z_a$, $Z_{a+1}$ respectively.

The relationship shown in 3.1, 3.2 may be encoded into a compiler designed to process input data related to the knot locations, the angles of the curve segment at its end points, and then for separate selected values of a parameter "t" to produce signals indicative of node locations on the locus of the curve segment. The compiler is shown at the end of the specification.

As stated above, the Hermite form of the parametric cubic polynomial is used in the preferred embodiment of the compiler but the principles of the invention can be used with any other cubic polynomial using the directions of the curve at end points of the curve and the end point locations.

Assuming a curve direction for a given knot order from knot to knot, and in particular, from knot $Z_a$ to knot $Z_{a+1}$, with knot $Z_a$ being the entrance knot for curve segment $Z_a$, $Z_{a+1}$ (hereafter curve segments will be defined by the respective segment and knots such as "curve $Z_a$, $Z_{a+1}$") and knot $Z_{a+1}$ being the exit knot for curve $Z_a$, $Z_{a+1}$, then $\theta$ is the angular direction of the curve $Z_a$, $Z_{a+1}$ at entrance knot $Z_a$ and $\phi$ is the direction of curve $Z_a$, $Z_{a+1}$ at exit knot $Z_{a+1}$. In the preferred embodiment, the interknot angle (B) made by the straight line from knot $Z_a$ and $Z_{a+1}$, is defined in terms of a reference angle given for the normalized encoding grid. Also, the angles ᶏ and ᶀ of the curve are related to that same reference angle. Therefore, the interknot angle expressed below as B and the angles of the curve at the entrance knot, defined below as ᶏ and the angle of the curve at the exit knot, defined below as ᶀ , are all defined with regard to a reference angle.

As further explained below, according to the inventive principles, deviance angles $\theta$ and $\phi$, shown used in equation 3.1 and 3.2, are the curve entrance and exit angles ᶏ, ᶀ, respectively, defined with regard to the interknot angles B and applied to the compiler in the form of the parametric cubic polynomial, as shown in equation 3.1.

Angles $\theta$ and $\phi$ correspond to angles ᶏ and ᶀ respectively. The difference between $\theta$ and ᶏ is that $\theta$ is measured using the line connecting knots $Z_a$ and $Z_{a+1}$ as the reference line whereas ᶏ is measured using a different reference line, shown as "0° REFERENCE" in Figure 1c. $\phi$ and ᶀ are related in a similar manner.

The angle $\theta$ is measured between the line tangent to $Z_a$ and the reference line connecting $Z_a$ and $Z_{a+1}$. The angle ᶏ is measured between the line tangent to $Z_a$ and the 0° reference line. The angle $\phi$ is measured between the line tangent to $Z_{a+1}$ and the reference line connecting $Z_a$ and $Z_{a+1}$. The angle ᶀ is measured between the line tangent to $Z_{a+1}$ and the 0° reference line.

In explaining the invention, ᶏ and ᶀ are used to identify the entrance angle of a curve segment at a first knot end point and the exit angle made by that same curve segment at a successive second knot end point, in the knot order. The first and second knots define the entrance and exit knots of the curve segment, with regard to the order of knots and the outline loop, as explained below. However, ᶏ and ᶀ are defined relative to a reference angle "q" on the master encoding coordinate grid $\theta$ and $\phi$ are the entrance angle and exit angle in the cubic parametric polynomial of 3.1 and 3.2, defined relative to an interknot angle B between the entrance and exit knots (i.e. in the preferred embodiment, $\theta$ = ᶏ-B; $\phi$ = B-ᶀ).In Fig. 1c, ᶏ equals ᶀ so that the curve exit angle is also designated ᶏ. The preferred embodiment uses a process of defining the entrance angle ᶏ and exit angle ᶀ in terms of the interknot angles on the outline loop, and with respect to a reference angle and uses the definition of the entrance and exit angles shown as $\theta$ and $\phi$ when applying the angles a and g, at the respective entrance and exit knots, to the compiler, as based on and as required by the derivation of the cubic parametric polynomial, described herein. However, the angles $\theta$ and $\phi$ could be derived directly from the interknot angles B or precomputed from the relationship of the outline loop knots and accessed directly without first deriving ᶏ and ᶀ and without deviating from the principles of the invention.

The parameter "t" of 3.1 is allowed to vary over a defined range as further explained below, and for each discrete selected value of t, a discrete node on the locus of the curve between the entrance and exit knots and defined by the parametric cubic polynomial is generated by the compiler. The nodes would be the coordinate location of points on the locus of the curve described by equation 3.1 for each selected value of "t" and where knots $Z_a$ and $Z_{a+1}$, and the angle of the curve at those knots, given as $a$ and $g$, derived above, was specified. The derivation of $a$, B, $g$, $\theta$, and $\phi$ of "t" and their relationship according to the principles of the invention are further explained and shown below.

It should be noted, however, that the form of the Hermite interpolator used in the preferred embodiment imposes an opposite sign for $\phi$ than that shown in $T_EX$ and METAFONT shown in Knuth.

It should also be noted that the deviance angles $\theta$ and $\phi$ representing the divergence between the straight line angle interknot angle (B), as used in the cubic parametric polynomial of 3.1, 3.2.

"r" and "s" affect the curve velocities, as described below and the length of the curve between its respective end points (i.e., curve $Z_a$, $Z_{a+1}$, between $Z_a$, $Z_{a+1}$) "r" and "s" are velocities at $Z_a$, $Z_{a+1}$ respectively, a large velocity value meaning the curve direction changes slowly while small values indicate the curve undergoing more pronounced directional changes [small values of r and s will then have less influence on the value of x(t) or y(t)]. The velocities, r and s, in $T_EX$ and METAFONT are represented as

$$4.1 \quad r = \left| \frac{2 \cdot \sin\phi}{(1+|\cos\psi|) \sin\psi} \right|$$

$$4.2 \quad s = \left| \frac{2 \cdot \sin\theta}{(1+|\cos\psi|) \sin\psi} \right|$$

$$4.3 \quad \psi = (\theta+\phi) / 2$$

Considering the effect of r and s on the curve locus defined by the nodes, produced through the cubic polynomial relationship, the values of r and s may be limited to control the direction of the curve from the entrance knot to the exit knot. In the preferred embodiment, r and s are limited to the values of 0.1 tc 4.0. However, these values of r and s could be changed without departing from the principles of the invention.

As discussed in the foregoing, the system shown therein for using the relationship of the points along the smooth curve in $T_EX$ and METAFONT have disadvantages which are eliminated by this invention which will become apparent by reading the following explanation.

As explained above, in using the parametric cubic polynomial relationship to define the nodes along a smooth curve, $T_EX$ and METAFONT start with a circle approximation rule and then must make adjustments to produce a smooth continuous curve between given points. In this invention, those disadvantages are eliminated by the invention described in the following.

In the preferred embodiment, the sign of $\phi$ is reversed relative to the angle rotation used in $T_EX$ and METAFONT.

The principles of this invention as applied to the preferred embodiment, may now be particularly seen with reference to FIG. 1a. As stated above, a skeletal outline is described by a progression of a series of knots in the order of $Z_a$, $Z_{a+1}$ .. $Z_n$, $Z_{a-1}$, which defines a closed outline loop about the outline of the character or symbol. The knots are encoded as coordinate points in a closed data loop, representing the closed outline loop. As stated, the object of the invention is to produce a series of nodes representing display coordinates on the locus of a curve between each of the knots, the curve being smooth and continuous. However, as will be shown, the principles of the invention can be modified so a series of points describing straight lines between knots can be generated and smooth continuous curves can be generated between knots which are interspersed with straight lines. In addition, cusps can be formed between smooth continuous curve and/or straight lines.

The smooth continuous curve is produced through the parametric cubic polynomial relationship described above. In using the invention, the following principles are applied. The data loop may be entered at the data values representing a knot, $Z_a$ for example, and the angular relationship of the knot ($Z_a$) referenced to a preceeding knot ($Z_{a-1}$) and to a succeeding knot in the loop analyzed. The analysis may then proceed in a clockwise direction around the loop which may be considered in the forward direction. However, as stated, the analysis can proceed in a counter- clockwise or backward direction with the direction being used to denote or indicate other values, such as color, or other characteristics as may be needed. As will be understood, the directions used herein are chosen for explanation and do not limit the inventive principles.

FIG. 1a represents a series of knots $Z_a$, $Z_{a+1}$, $Z_{a+2}$ --- $Z_{a+n}$, $Z_{a-1}$ arranged in a closed outline loop, encoded relative to a master encoding grid and partially defining, in skeletal form, the points on a closed outline loop, such as outline ll, 13, 15, or 17, shown in FIG. 1b. The interknot angles, the angles from knot to knot (i.e. from knot $Z_{a-1}$ to knot $Z_a$) are denoted generally by the letter "B" with a subscript reference indicating that the angle is formed by a straight line from a respective knot, $B_{a-1}$ for example, to a successive knot $B_a$ in the outline loop. The terms "preceding" and "successive" can be used with reference to the defined order of knots in the outline loop, i.e. either clockwise or counterclockwise, as the case may be. In FIG. 1a, the knot angles B are shown as $B_a$, $B_{a+1}$, $B_{a+2}$, and so on for respective knots.

The manner of applying the cubic parametric polynomial compiler in the preferred embodiment to define nodes between the knots along the locus of a smooth curve utilizes the deviance angle $\theta$ at the curve entrance knot and the deviance angle $\phi$ at the curve exit knot. The deviance angles $\theta$ and $\phi$ may also be referred to as entrance and exit angles.

According to the principles of the invention, and assuming a smooth and continous curve segment is desired to be developed between a first knot $Z_a$ and a second knot $Z_{a+1}$ for the curve $Z_a$, $Z_{a+1}$, shown as numeral 21, in FIG. 1c, then the inventive principles may be used to generate a series of signals representing the display coordinates for the nodes along the locus of the smooth continuous curve 21 as follows and similarly for the curves between others of respective pairs of knots. The data encoding of the knots representing each of the closed outline loops may also be thought of as a loop, or closed data loop, indicative of and representing the physical arrangement of the knots in the closed outline loop about the character or symbol outline. As stated, the outline loop and the data loop therefore, may be thought of as an order of knots in the loop path and related to a predetermined loop direction for such order (clockwise or counter- clockwise, for example). Within that progression, and for the respective outline loop direction, it can be easily seen that each knot (i.e. $Z_a$) represents an exit point for the curve segement of the outline loop in the knot order shown by the direction of arrow 20, from a preceding loop knot (i.e. $Z_{a-1}$) and at the same time, the entrance point for the curve segment from that knot (i.e. $Z_a$) to a successive knot (i.e. $Z_{a+1}$). The nodes, generated as explained below are given an order in the outline loop related to the order of knots on the outline loop and the encoding for the nodes is similarly arranged on the data loop in the order of the knots.

In explaining the invention, the convention used for identifying a curve part of the outline loop between knots is to refer to it by its knot end points, (i.e. curve part 21 is curve $Z_a$, $Z_{a+1}$). Similarly, a convention is used to identify a curve entrance and exit angle as explained below.

The entrance angle $\theta$ for curve $Z_a$, $Z_{a+1}$ (between knots $Z_a$ and $Z_{a+1}$), according to our convention, would be the angle represented by the first derivative of the curve $Z_a$, $Z_{a+1}$ at knot $Z_a$ and the exit angle $\phi$ would be the angle represented by the first derivative of the curve segment at the next successive knot $Z_{a+1}$.

As would be understood, where a smooth continuous curve is desired to pass through a knot, (i.e. $Z_a$) then the entrance angle $\theta$, at a knot would be the same as the exit angle $\phi$ at that same knot for the preceding curve segment $Z_{a-1}, Z_a$.

In explaining the principles of the invention, the entrance angles $\theta$ and exit angles $\phi$ for curve segments starting and ending at knots are defined for the respective knots according to the following convention. The curve segments may be thought of as having an entrance angle $\theta$ at the knot where the outline loop, in the defined progressive order of knots, enters a respective curve segment (i.e. curve $Z_a$, $Z_{a+1}$) forming an entrance angle $\theta_a$ at that entering knot, and an exit angle $\phi$ at the next successive knot in the loop where the loop exits curve segment $Z_a$, $Z_{a+1}$ forming exit angle $\phi_a$ at knot $Z_{a+1}$. In the convention chosen, the entrance and exit angles ( $\theta_a$, $\phi_a$) for a curve segment ($Z_a$, $Z_{a+1}$) of the loop are referenced to the entrance knot ($Z_a$). The entrance angle, $\theta_a$, and the exit angle, $\phi_a$, therefore have a subscript reference to the entrance knot $Z_a$, but refer to the curve segment of the loop and the angle that curve segment makes at a first knot $Z_a$ where the loop enters the curve $Z_a$, $Z_{a+1}$ and the angle at a successive knot ($Z_{a+1}$) relative to the outline loop direction where it exits the curve $Z_a$, $Z_{a+1}$. The entrance angle, $\theta_a$, is then the angle the loop makes as it passes through knot $Z_a$, enters curve $Z_a$, $Z_{a+1}$, and continues on to knot $Z_{a+1}$. The exit angle, $\phi_a$, is the angle the loop makes as it passes through knot $Z_{a+1}$, exits curve $Z_a$, $Z_{a+1}$, enters the next successive curve $Z_{a+1}$, $Z_{a+2}$ and continues on to the next subsequent exit knot, $Z_{a+2}$. In summary, the entrance angle , $\theta$, and exit angle, $\phi$, according to the convention chosen to explain the principles of this invention, refer to a curve segment of a loop outline between two knots such as $Z_a$ and $Z_{a+1}$, the entrance angle $\theta_a$ being the tangent angle or first derivative the outline loop makes as it enters curve $Z_a$, $Z_{a+1}$ at preceding knot end point $Z_a$ in the outline loop direction, and the exit angle, $\phi_a$, the tangent or first derivative of the outline loop it makes as it exits that curve $Z_a$, $Z_{a+1}$ at knot end point $Z_{a+1}$ and enters the next successive curve $Z_{a+1}$ $Z_{a+2}$, in the outline loop direction. As can be seen, the exit angle, $\phi_a$, for the curve $Z_a$, $Z_{a+1}$ is the same angle as the entrance angle $\theta_{a+1}$ for the next successive curve $Z_{a+1}$, $Z_{a+2}$, in

the outline loop direction. Similarly, the entrance angle, $a_a$ is the exit angle, $g_{a-1}$ for the preceeding curve $Z_{a-1}$, $Z_a$. It will be understood by those skilled in the art that these conventions can be changed without changing the principles of the invention.

Whereas Knuth uses the rule that a smooth continuous curve locus between points, such as from $Z_{a-1}$ to $Z_a$ to $Z_{a+1}$, must take the direction of a circle, the invention herein avoids that rule and the problems created thereby by using an average of the interknot angles (B) relative to a knot to define the respective knot entrance and exit angles, $a$ and $g$ respectively, and thereby $\theta$ and $\phi$ respectively.

For example, in FIG. 1c, for the curve $Z_a$, $Z_{a+1}$, shown as numeral 21, the entrance angle $a_a$ at knot $Z_a$ of the curve $Z_a$, $Z_{a+1}$, for example, is related to the average of the interknot angles $B_{a-1}$ (from the preceeding knot $Z_{a-1}$ to knot $Z_a$) and $B_a$ (from $Z_a$ to the succeeding knot $Z_{a-1}$). That average angle of the outline loop at any knot Z is a;so expressed as $a$ when referring to the entrance angle at a knot and into a curve segment and $g$ when referring to the exit angle from a knot and out of a curve segment. In the case of knot $Z_a$, the average entrance angle would be $a_a$ for the curve $Z_a$, $Z_{a+1}$ (shown by numeral 21), proceeding from $Z_a$ to $Z_{a+1}$ in the order shown by arrow 20 and $g_{a-1}$ for the average exit angle for the curve $Z_{a-1}$, $Z_a$ (shown by numeral 23), proceeding from $Z_{a-1}$ to $Z_a$ in the order shown by arrow 20.

The angles $a$ or $g$ are always referred to as entrance and exit angles respectively herein, but may or may not be average angles or not depending on the application of each, as explained herein.

The invention is explained with reference to the example of curve $Z_a$, $Z_{a+1}$, wherein $Z_a$ is the entrance knot and $Z_{a+1}$ is the exit knot, it being understood that the same analysis would apply to other curve segments either adjoining or further remote from curve $Z_a$, $Z_{a+1}$ and having respective entrance and exit knots.

In using the compiler to generate the nodes along a smooth continuous curve, the encoded data loop representing the knots along the closed outline loop may be entered at any set of data representing any knot Z, for example, designated to be the entrance knot and the average angle determined by proceeding in the chosen loop direction using the interangular relationships of a knot to its related knots in the loop, to determine the average angles $\alpha$ and $\gamma$ at such related knots. In the preferred embodiment, these related knots are adjacent knots to the next successive knot to the entrance knot.

In the preferred embodiment, the inventive principles of generating the nodes on the smooth continuous curve locus, starts with a first average angle, determined for the knot coordinate successive to the data loop entrance knot, and which is represented by the data residing at the location in the closed data loop where that data loop was entered. The interknot angle for the entrance knot is then saved and used at the completion of the loop analysis to determine the average entrance and exit angles at that entrance knot when the outline loop analysis reaches that entrance knot in the closed outline loop knot. Where the data loop entrance knot is $Z_{a-1}$, its average angle would be determined using the preceding interknot angles $B_{a-2}$ and $B_{a-1}$ for related knots $Z_{a-1}$ and $Z_{a-2}$.

Following the above, the average angle $a_a$ and exit angle $g_{a-1}$ at knot $Z_a$ is the average of $B_{a-1}$ and $B_a$ and expressed as

$$a_a = \frac{B_{a-1} + B_a}{2} = g_{a-1}$$

The average exit angle $g_a$ and entrance angle $a_{a+1}$ at knot $Z_{a+1}$ is the average of $B_a$ and $B_{a+1}$ and expressed as

$$g_a = \frac{B_{a+1} + B_a}{2} = a_{a+1}$$

As shown, the average entrance angle $a_a$ for any curve segment is the average of the interknot angles at the respective curve segment knot and at related knots, (i.e. the preceding knot in the outline loop) and the average exit angle $g$ is the average of the interknot angles at the respective curve segment exit knot and at related knots (i.e. the next successive knot in the outline loop), as shown above.

The parametric cubic polynomial compiler may then be employed to relate the entrance and exit angles $a$, $g$ for the respective entrance and exit knots to a series of nodes describing the locus of a smooth curve between the respective entrance and exit knots (i.e. $Z_a$, $Z_{a+1}$). For the example above, the knots are $Z_a$, $Z_{a+1}$ and the respective entrance and exit angles are $a_a$ and $g_a$ for curve $Z_a$, $Z_{a+1}$.

The curve velocities r and s are related to the deviance angles $\theta$ and $\phi$, as set forth above and as used in equation 4.1, 4.2, 4.3. As stated in the foregoing, $\theta$ is the deviance between the average entrance angle, for example, $\mathfrak{a}_a$ for curve $Z_a$, $Z_{a+1}$, at an entrance knot $Z_a$ and the interknot angle $B_a$ at that entrance knot $Z_a$. Similarly, $\phi$ is the deviance between the average exit angle, for example, at the exit knot, $Z_{a+1}$, for the curve $Z_a$, $Z_{a+1}$ and the interknot angle $B_a$ at that entrance knot $Z_a$.

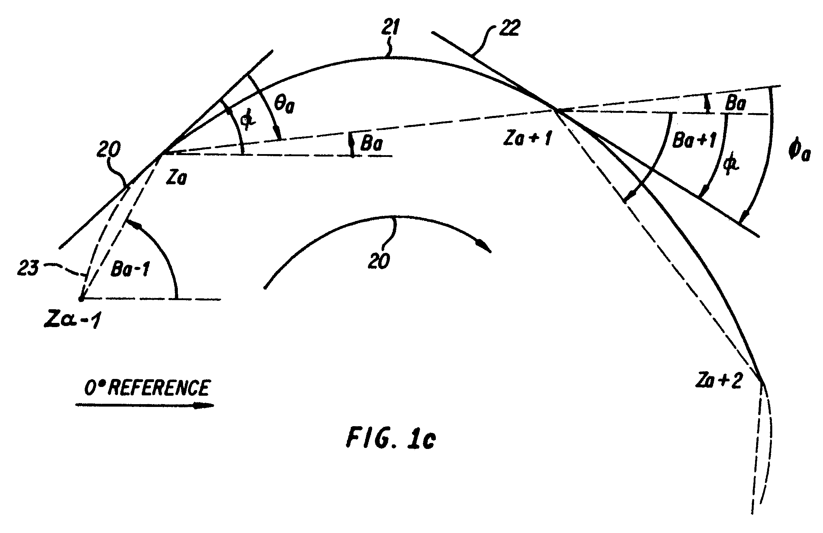

The relationships between $\mathfrak{a}_a$, $B_a$, $\mathfrak{g}_a$, $\theta_a$ and $\phi_a$ may be more clearly seen in FIGS. 1d and 1e for knots $Z_a$ and $Z_{a+1}$ respectively.

As a reminder, it should be remembered that the angles, $\theta$ and $\phi$ are the tangents to the locus of the curve represented by the nodes generated using the cubic parametric polynomial compiler with respect to the respective interknot angles.

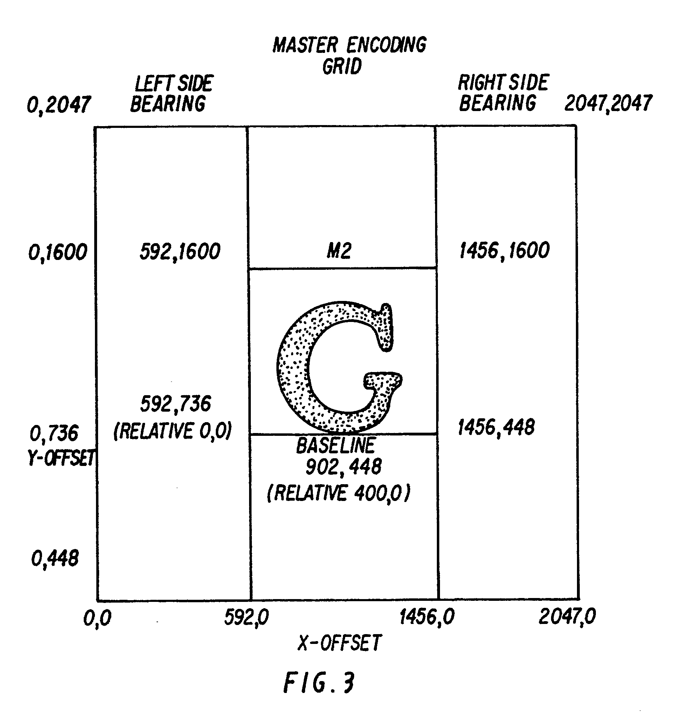

The coordinate values of $Z_a$, $Z_{a+1}$, used through the parametric cubic polynomial compiler to generate the node values are the scaled intercept values given in RRU's, derived from the master encoded values of the knots, in DRUs. For example, assuming an encoding grid shown as an $M^2$ in FIG. 3 and defined as 864 X 864 DRU's between master encoding grid (x,y) coordinates 592, 736; 592, 1600; 1456, 1600 and 1456, 448 (wherein x,y points 592, 736 are defined as relative 0,0, relative to an x,y offset of 592, 736 respectively) and wherein the encoding grid is defined as 2047 by 2047 DRU's.

In the preferred embodiment, the universe of the master encoding grid comprising the $M^2$ is 32768 X 32768 DRU's and the offset which positions the origin of the $M^2$ can be positioned anywhere in that universe. In the preferred embodiment, the x and y offsets and shown in FIG. 3.

The x,y coordinates of the intercept locations for knots $Z_a$ at the displayed size in RRU's may be derived prior to generating the nodes by scaling, using the following conversion factor (CF), for the preferred embodiment.

Where:

"P"  in the desired display size in points per $M^2$ (Pt/$M^2$),

"Res"  is the ratio of micrometers per point (uM/Pt) and serves to convert the display size from points to metric units;

"RRU/MM"  is the display resolution in Raster Resolution Units per micrometer;

$M^2$/DRU  is the inverse of the encoding grid resolution, in DRUs per $M^2$;

and

(P) * (Res) * (RRU/MM) * ($M^2$/DRU) = (CF) * (RRU/DRU)

For Master Coordinate $Z_n(X_n, Y_n)$,

$(X_n \text{ DRUs}) (CF_x \text{ RRUs/DRU}) = X_n \text{ RRUs}$, and

$(Y_n \text{ DRUs}) (CF_y \text{ RRUs/DRU}) = Y_n \text{ RRUs}$

The value of the parameter t may be derived from the respective curve segment interknot distance $Z_d = |Z_{n+1} - Z_n|$ given after scaling in RRUs, as described below. The generated coordinates for the nodes are expressed in RRU's permitting run length encoding of the display outline coordinates. Where $Z_d$ is a non-integer, the fractional value may be discarded or rounded with redundant values eliminated.

In the preferred embodiment of this invention, the incremental value of t is related to the inverted value of the absolute difference $Z_d$ between the entrance and the exit knots,

i.e. $t\_inc = 1/Z_d = 1/|Z_{n+1} - Z_n|$

$Z_d$ may be easily derived from the axial difference in the X direction, [i.e. $Z_d = [(X_{n+1} - X_n)/\text{Cosine}(B_n)]$, or the axial difference in the Y direction, [$Z_d = [(Y_{n+1} - Y_n)/\text{Sine}(B_n)]$; Where $X_n Y_n$; $X_{n+1}$, $Y_{n+1}$ are successive knots defining end points for a curve segment of the closed outline loop and $B_n$ is the interknot angle there between).

In practice, it is better to use the larger axial value in the X or Y direction, to minimize error. In implementing the invention, the preferred embodiment limits increments of t to 1/1024. Discrete values of $T_1 = 3^2 - 2t^3$, $T_2 = t^2(1-t)$ and $T_3 = t(1-t)^2$ (see equation 3.1, 3.2) may be stored in a look-up table for 1024 values of t in the range 1/1024 t 1024/1024.

In practice t is stored in the range of 1023/1024 because the knot end point coordinate corresponding to t = 1024/1024 or 1 is saved, avoiding the need to calculate that knot end point and providing a more reliable result.

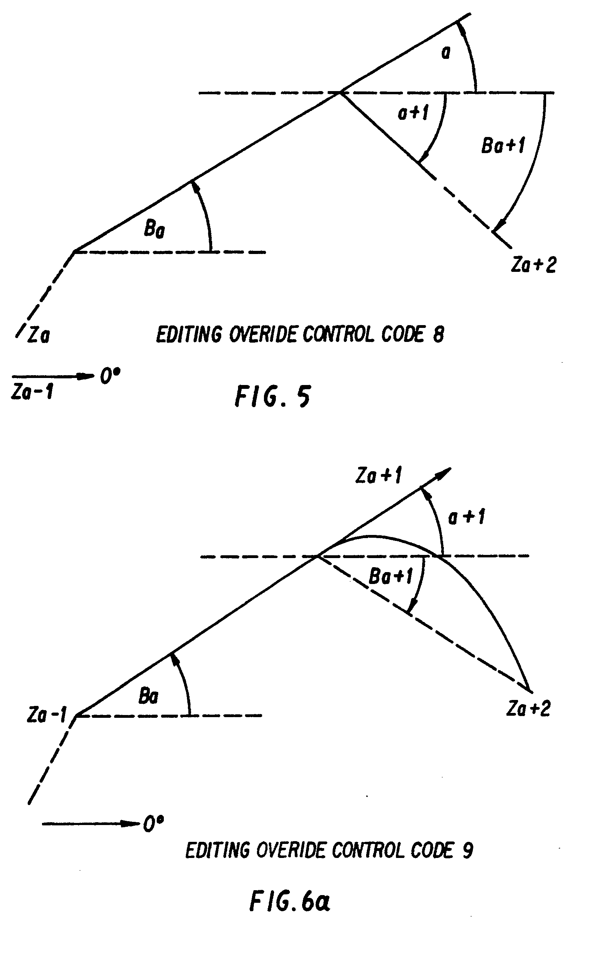

Further, because of the relationship of $T_1$, $T_2$ and $T_3$, a look-up table as shown in FIG. 4, having values of $T_2$ starting with t = 0 and ending with a value of $T_2$ for t = 1 may be accessed in reverse order for values of $T_3$, as shown in FIG. 4.

The values, shown stored in a look-up table in FIG. 4, are for discrete values of t in discrete steps of

1/1024 (i.e. 0/1024 to 1023/1024). However, t is shown being inclusive from 0 to 1 for the purpose of explanation, it being understood that in the preferred embodiment, varies between 0 and 1023/1024 as the end point for $T_2$ 1024/1024 is known.

Because the functions domain of the variable t for the solution sets $T_2 = t(l-t)^2$ and $T_3 = t^2(l-t)$ overlap, a table of values may be accessed in one data direction with respect to a first domain of variables for which the value represents a solution set. Similarly, that solution set may be accessed in an opposite data direction for a second domain of a variable.

Also, because the function $|1 + Cos\Psi|$ $Sin\Psi$ is symmetric about 45 degrees, it is only necessary to store values thereof for 0 to 45 degrees in half angle steps.

The solution set of values for the functions $T_2$ and $T_3$ may be accessed in a first data direction to provide the functional solution set values for the domain t = 0 to t = 1 and in reverse order for the domain t = 1 to t = 0. Values of Sine may be stored in half angle steps between 0 and 90 degrees. Further, any derived nodes may be stored and used again where the respective curve or corresponding symbol outline loop is to be duplicated.

By forming a cumulative value of t as a multiple of the incremental value of t and applying cumulative discrete selected values of t within the parametric cubic polynomial compiler, according to equation 3.1, display intercepts represented by the generated nodes are produced which may then be used as the display coordinates for the closed loop outline at the desired display size.

As stated above, the value of $\theta$ and $\phi$ used in the compiler are derived, according to the principles of the invention from the average entrance and exit angles, $\hat{a}$ and $\hat{g}$ at a respective set of entrance and exit knots. The nodes which are generated using the incremental value of t to increment the cumulative value of t and by applying discrete selected cumulative incremented t values to the cubic parametric polynomial compiler to produce respective node coordinates for such discrete selected values of t.

The nodes, represent locations on the curve, which, as stated above, form an angle at the entrance knot of the curve as given by $\theta$, and forms an angle at the exit knot given by $\phi$ As stated, an order is chosen for the knots and the order of knots defines an outline loop of knots, the nodes being locations on the curve, between the knots also have an order defined by that knot order and by the defined outline loop. As would be understood by those skilled in the art, that order is the succession of knots and nodes encountered as one progresses along the outline loop as specified. The data for the knots and nodes, as stated above, is encoded in a data loop in that same order of knots and nodes. The encoded knots and nodes are placed in the data loop, in that order corresponding to the outline loop. Then, as one progresses in the defined order along the data loop, corresponding to the outline loop, one would encounter the encoding for the knots and nodes in the data loop in an order, corresponding to the order one would encounter the respective knots and nodes on the outline loop represented by that said encoding.

In summary, given the knot locations, and the angles of the curve at an entrance and exit knot as defined above, and given an incremental value of t, then each discrete selected cumulative value of t, as described above, applied to the cubic polynomial parametric compiler would produce respective nodes, indicative of locations along the smooth continuous curve described by the cubic parametric polynomial. The encoding for the knots and nodes would be in the same order along a data loop as one would encounter the corresponding knots and nodes along the outline loop, when proceeding in a chosen order along the outline loop.

The outline loop, when closing upon itself as shown in FIG. 1b, for example, is called a closed outline loop. The data when encoded in a data loop which closes upon itself corresponding to the closed outline loop is called a closed data loop. In this way, accessing the closed data loop, in a direction corresponding to the chosen direction along the closed outline loop will return one to the initial or starting data loop entrance location. As described below, the data loop decoding is not complete until a determination is made that the accessed location for the closed data loop is starting location point and that accessing of all the encoded data in the closed data loop has been completed.

Of course, as one skilled in the art would realize, variations of the above closed outline loop and closed data loop can be made without departing from the principles of the invention.

These node coordinate values given in Raster Units may then be used in run length or other suitable data forms to modulate a display to produce the curve at the desired size, as is well known.

The compiler according to the foregoing is shown below.

ENCODING

The novel manner of encoding the data pack, according to the principles of the invention, is shown in the Table I below, wherein p is the value of dx, q is the value of dy and 0, 1, 2, ... D, E, F, are bit positions in the encoded data pack. In the preferred embodiment, the bit positions are valued according to the binary number system. The Control Codes, explained below, are shown in Table II. The encoding, shown for a maximum 12 binary words of 3 nibbles, in the preferred embodiment, is used to define a control code or coordinate position for the master encoding grid. It should be understood that the size of the word and the number of nibbles used, as described below would increase to accommodate a larger universe, commensurate with a larger size master encoding grid.

The binary words are encoded in a series of nibble length data words, arranged in the order of the data loop. In this way, as will be shown below, the values of selected data words with a nibble series may be used to define the number of nibbles in a complete information set and the initial nibble or bit positions in the next successive complete information set.

A complete information set (CIS) would be the set of data words necessary to completely define the next coordinate or a control code, as shown below.

## TABLE I

| Case Indicated by a 1st nibble value of | F | E | D | C | B | A | 9 | 8 | 7 | 6 | 5 | 4 | 3 | 2 | 1 | 0 | Case | Limits | |
|---|---|---|---|---|---|---|---|---|---|---|---|---|---|---|---|---|---|---|---|
| 1-3 | | | | | | | | | | | | | 0 | 0 | $q_1$ | $q_0$ | .I.a | p=0 | q=[1..3] |
| .0. | | | | | | | | | | $q_3$ | $q_2$ | $q_1$ | $q_0$ | 0 | 0 | 0 | .I.b | p=0 | q=[0,4..18] |
| 4-7 | | | | | | | | | $q_2$ | $p_2$ | $p_1$ | $p_0$ | 0 | 1 | $q_1$ | $q_0$ | .II. | p=[1..8] | q=[1..8] |
| 8-B | | | | | $q_3$ | $q_2$ | $q_1$ | $q_0$ | $p_3$ | $p_2$ | $p_1$ | $p_0$ | 1 | 0 | $q_4$ | $p_4$ | .III. | p=[1..32] | q=[1..32] |
| C-F | $p_6$ | $q_6$ | $q_5$ | $q_4$ | $q_3$ | $q_2$ | $q_1$ | $q_0$ | $p_3$ | $p_2$ | $p_1$ | $p_0$ | 1 | 1 | $p_5$ | $p_4$ | .IV. | p=[1..128] | q=[1..128] |

## TABLE II

| Case | Definition | Override Control Code Value | Total No. of Data Words Needed incl. 1st Data Word | Purpose |
|---|---|---|---|---|
| Ib | end last | 0 | 2 | end of last loop |
| Ia | horizontal(x) | 1 | 1+3=4 | horizontal motion |
| Ia | vertical(y) | 2 | 1+3=4 | vertical motion |
| Ia | diagonal(x,y) | 3 | 1+3+3=7 | diagonal motion |
| Ic | start loop | 4 | 2 | end/start new loop |
| Ib | x negate | 5 | 2 | invert x direction |
| Ib | y negate | 6 | 2 | invert y direction |
| Ib | xy negate | 7 | 2 | invert x y direction |
| Ib | line sharp | 8 | 2 | inear interpolate sharp knot |
| Ib | line smooth | 9 | 2 | linear interpolate smooth knot |
| Ib | sharp | 10 | 2 | curve interpolate sharp knot |
| Ib | smooth | 11 | 2 | curve interpolate smooth knot |

The data pack forming the closed data loop is used for encoding the axial distances in DRUs (p = dx, q = dy) between knots, and for the double purpose of identifying and accessing override control codes. These override control codes are used to speed the decoding process and reduce the requirement for encoded data describing coordinate points while offering the further option of edit commands.

The data pack override control codes may be used to override machine default command codes which would otherwise be responsive to parameters expressed within the data pack. As can be seen, the data pack offers the option of following default command codes, responsive to predetermined parameters, such as angles between knots or interknot distances, or override control codes for generating the desired series of nodes and curve locus between knots.

In the preferred embodiment, the default command codes are selected responsive to the parameters of the closed outline loop described by the interknot distances expressed within the data pack. The process of

15

the invention described above for generating a series of nodes forming a smooth continuous curve between a set of end points would normally be used except where the distance between those end points was greater than a predetermined distance, such as 128 units for the preferred embodiment. In that case, where the interknot coordinate distances were greater than 128 units, the default command code responsive thereto would direct straight line interpolation and the formation of a series of nodes to find the locus of that straight line between the knots defining that respective coordinate distance.

Similarly, where the exterior angle formed by a line from the entrance knot to the exit knot and by a line formed from the exit knot to a successive knot is greater than a predetermined angle, such as 40° in the preferred embodiment, then a default command code responsive thereto would direct that a cusp be formed at the exit knot.

Straight line interpolation is well-known in the art. However, within the inventive scheme herein is provided an auto-scaling interpolation which provides an innovative and simpler method of linear interpolation and at the same time increases its accuracy and the precision of the closed outline loop as defined by the series of generated nodes. The auto-scaling linear interpolator is described below.

The format of the data pack shown in Table 1 is based 4 bit boundries defining data words of 4 bits each. Data from the data pack, representing discrete complete information sets is accessed in a series of data words in nibbles of 4 bits at a time with the significance of that complete information set (CIS) and the number of data words therein indicated by the value of the first nibble. The correspondence between the first data word value of a series of data words forming a CIS and the Case indicated by that first data word value is shown below.

| First data word value | Case | Purpose |
|---|---|---|
| 1-3 | 1a | Control Code |
| 0 | 1b | Control Code |
| 4-7 | II | Coordinate Distance |
| 8-B | III | Coordinate Distance |
| C-F | IV | Coordinate Distance |

A series of data words may be a control code as in the Cases 1a and 1b or the coordinate distances between knots, represented by the x,y incremental values between such knots in the preferred embodiment, in Cases II, III and IV.

Where the data words are nibbles, in the preferred embodiment the first nibble value of a nibble series then indicates the Case, and directs the access of a predetermined number of successive nibbles or data words within the closed data loop from the CIS and to complete the override control code, as in Case Ia or Ib or to assemble the number of data words necessary to complete the values corresponding to the coordinate distance between the next knot in the closed outline loop, as in Cases II, III and IV.

The number of nibbles or data words accessed responsive to the first nibble or data word value are the nibble or data word series necessary to form the CIS for the particular Case, after the first nibble or data word, as follows:

In Case II, one nibble or a total of 2 nibbles are required. In Case III, two more nibbles after the first nibble, or a total of 3 nibbles are required, and in Case IV, three more nibbles after the first nibble, or a total of 4 nibbles are required to provide the value of the interknot coordinate distance.

In the Cases Ia and Ib, the number of successive nibbles which must be accessed, responsive to the value of the first nibble, is ordered responsively to the Case indicated and as explained in detail below. For example, Case I may require the accessing of 3 or 6 nibbles to complete the Case Ia control code.

At the end of the data word series of a CIS, accessed responsive to the first data word value, the next successive nibble in the closed data loop would then be considered the first data word value of the next data word series and corresponding CIS. That new first data word value of the next data word series would then in a similar manner indicate the number of successive data words to be accessed to complete the completed information set for the override control code or the value of the interknot coordinate distance, as the case may be. By encoding the closed data loop on 4 bit boundries, the data with respect to control codes may be packed successively within the closed data loop with the data respecting the interknot coordinate distances and, as such, the closed data lcop may serve the double function of providing override control codes as well as interknot distance data.

Table II provides a definition of the control codes, control code value, the number of nibbles including the first nibble to complete the control code instruction and the purpose of the control code.

Further, as shown in Table I, and as stated above, a first nibble value of 1 to 3 is indicative of Case Ia

and with that first nibble value indicating the particular control code value for case Ia, either 1, 2, or 3, and the number of subsequent nibbles to be accessed for the CIS forming that particular Case Ia control code.

As shown in Table II, 3 additional nibbles are required for a total of 4 nibbles, including the first nibble, to complete the CIS responsible to a control code value 1, 3 additional nibbles for a total of 4 nibbles are needed to complete the CIS responsive to a control code value of 2 and 6 additional nibbles for a total of 7 nibbles are needed to complete the CIS responsive to a control code value of 3.

Where the first nibble value of a CIS is zero, then Case Ib is indicated, as shown in the Table I, and the access of the next successive nibble directed for completion of the Case Ib instruction. In Case Ib, 4 is added to that next nibble value to obtain the control code value for case Ib. The control code values for Case Ib are shown in table II with their corresponding purposes.

In summary, a first nibble value of 0, or 1 to 3, indicates Case Ia or Case Ib as shown above, and directs the accessing of a predetermined number of nibbles in the closed data loop successive to the first nibble, to form the CIS for that Case and which is then used to determine the control code value which in turn directs the processor. The next nibble subsequent in the order of the closed data loop to the last nibble of the previous nibble series corresponding to a CIS then becomes a new first nibble value and is used to indicate either an override control code or interknot coordinate distance. Further, and as shown below, where the first nibble bit as shown above indicates a Case II, the ordering of one more nibble for a total of 2 nibbles is required to complete the CIS and to provide the incremental coordinate distance. For Case III, 2 more nibbles for a total of 3 nibbles are required to complete the CIS for the incremental coordinate distance. For Case IV, 3 more nibbles for a total of 4 nibbles are required to complete the CIS for the incremental coordinate distance for code 4. Then the next successive nibble in the closed data loop after the CIS would be the new first nibble value indicative of case Ia, Ib, II, III or IV, as the case may be, leading to an indication of the number of successive nibbles needed to complete the CIS to complete the control code or incremental coordinate distance.

For the override control code Case Ia, where the next successive knot in the closed outline loop is to be defined by Case Ia, control code values 1, 2 or 3, as shown in Table II, then, the first nibble value will have a value of 1, 2 or 3 (thereby indicating override control code Case Ia), and with the control code value being indiated by the specified first nibble value (i.e. 1, 2, or 3). The number of successive nibbles to be accessed to form the CIS for that Case Ia control code are indicated by the value of the first nibble value.

Where the value of that first nibble value is 1, then as shown in Table II, the next three nibbles in the closed data loop are accessed and used to denote horizontal or motion in the X direction with the next knot X coordinate given by the next three nibbles, completing the nibble series necessary to form the Completed Information Set for that control code.

Where the value of that 1st nibble is 2, then as shown in table II, a vertical motion in the Y direction is indicated with the next three nibbles in the closed data loop being accessed, to complete the nibble series necessary to form the CIS and indicating the Y coordinate value of the next knot.

Where the value of that 1st nibble is 3, then the next six nibbles in the closed data loop are accessed to complete the nibble series and necessary to form the CIS and indicating the next knot, diagonally related to the immediate knot, and with the X, Y coordinates therefore given in each of the next 3 nibbles.

In the preferred embodiment, the least significant bit of the control codes for Case Ia, namely control codes 1, 2, and 3 is used to provide a direction instruction for new X, Y or X, Y coordinate values relative to the preceding knot in the closed outline loop. That relative direction between the new knot position and the preceding knot is then followed when locating the positions of successive knots corresponding to the information in a Case II, III or III instruction indicating the incremental coordinate distance. As will be seen below, the direction may also be changed by a Case Ib control code 5, 6 or 7 which would negate the established X, Y or XY direction.

In summary, in the closed outline loop new knot coordinates as indicated by Case Ia, control code values 1, 2 or 3, shown in table II, would be located in a direction consistent with a previous X and Y direction instruction, unless the least significant bit of the first nibble value for the CIS indicates a change in direction, as in Case Ib, control code values 5, 6 and 7.

In summary, the first data word value is the value of the first data word of a series of data words forming the Completed Information Set (CIS) of the closed data loop, indicating a override control, code as in case Ia, for first nibble values 1, 2 and 3, or as in Case Ib, for value 0, or the incremental coordinate distances as for first nibble values 4-F, for cases II, III or IV.

Then, as stated above, if the 1st data word value, in a nibble size data word series is a zero, then control code case Ib is denoted. Case Ib, directs the access of another nibble of 4 bits in the closed data loop and, if that nibble is not equal to 0, its value is added to value 3 to obtain the proper control code, as shown in Table II. In this way, a total value of control codes 0 and 4 to 18 may be defined. The meanings of each of the control codes having values 4-11 is shown in Table II.

If the control code value for the additional 4 bits is zero, the end of the last loop is indicated (i.e. bits 4-7 are 0 value).

Code 4 indicates the start of a loop.

Codes 5, 6 and 7 provide direction information for the next knot in the closed outline loop relative to the preceding knot.

Codes 8, 9, I0 and II are editing override control codes, which override the default command codes.

The editing override control codes are used to override the default command codes, which would normally be responsive to and result from a machine interpretation of the data pack values for cases II, III and IV.

Code 8 directs Linear Interpolation Sharp Knot. As shown in FIG. 5, it may be used to force the exit angle at a knot (i.e. $\phi_a$ at knot $Z_{a+1}$) for curve $Z_a$, $Z_{a+1}$, to be equal to the interknot angle $B_a$ at the entrance knot, $Z_a$ of that same curve $Z_a$, $Z_{a+1}$. As shown in FIG. 5, Code 8 forces the curve $Z_a$, $Z_{a+1}$, at knot $Z_{a+1}$ to have the same exit angle at the exit knot ($Z_{a+1}$) as the interknot angle $B_a$ at its entrance knot $Z_a$ and produces a sharp cusp at $Z_{a+1}$. To complete the cusp at $Z_{a+1}$, the entrance angle $\mathring{a}_{a+1}$ for curve $Z_{a+1}$, $Z_{a+2}$ would be forced equal to the interknot angle $B_{a+1}$ at $Z_{a+1}$.

Code 9 denotes Linear Interpolation - Smooth Knot and may be used, for example, to force a smooth knot located at the end of a curve $Z_a$, $Z_{a+1}$ which then becomes a straight line, or at the end of a straight line, which then becomes a smooth continuous curve.

The use of override control code 9 is shown in FIG. 6a where a knot joins a straight line curve $Z_a$, $Z_{a+1}$ to a smooth continuous curve, $Z_{a+1}$, $Z_{a+2}$. In this case, $\mathring{a}_{a+1}$ is set equal to $B_a$.

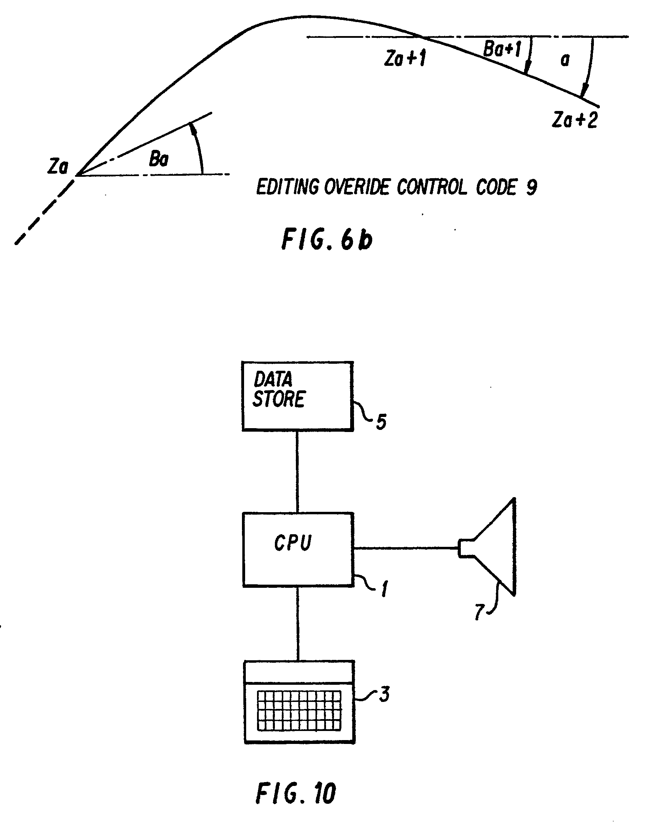

Where a knot joins a curve section $Z_a$, $Z_{a+1}$ to a straight line curve, $Z_{a+1}$, $Z_{a+2}$, as shown in FIG. 6b, then $\phi_a$, the exit angle for curve $Z_a$, $Z_{a+1}$ is made equal to $B_{a+1}$, the interknot angle between $Z_{a+1}$, $Z_{a+2}$.

It should be understood, however, that if a knot joins two straight lines, this rule shown with respect to FIG. 5 is used in the preferred embodiment.

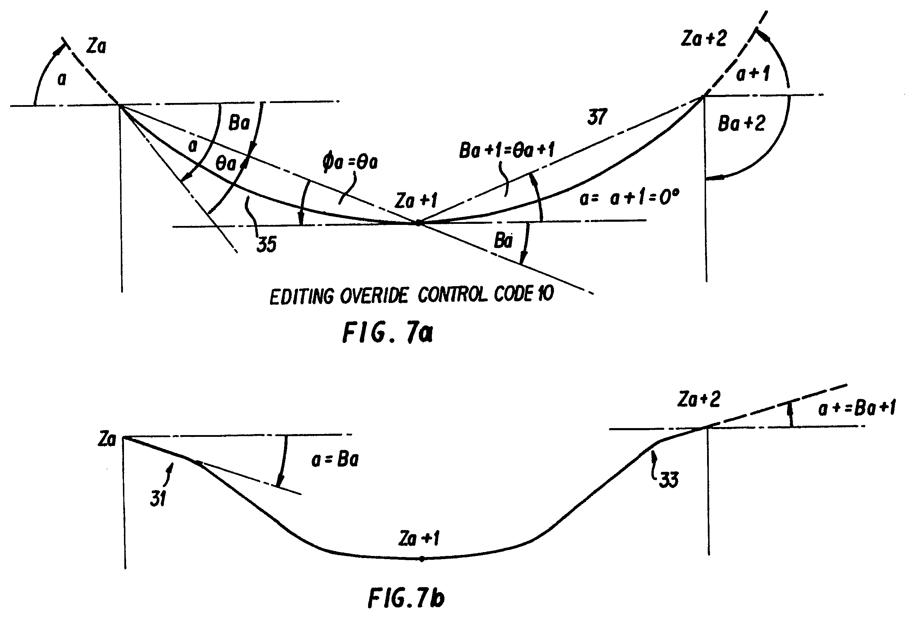

Control code 10 directs a curve interpolation at a sharp knot and is used to form a cusp at the entrance knot or the exit knot of a smooth continuous curve segment joined by that knot to a straight line. Shown in FIG. 7a, are two examples, i.e. the curve $Z_a$, $Z_{a+1}$ is formed with a sharp knot at the entrance knot $Z_a$ and the curve $Z_{a+1}$, $Z_{a+2}$ is formed with a sharp knot at the exit knot $Z_{a+2}$. This control code is useful in overriding a default command code which would otherwise require that the sharp knot at $Z_a$, for example have an entrance angle for curve $Z_a$, $Z_{a+1}$ equal to $B_a$ which would introduce a distortion in curve $Z_a$, $Z_{a+1}$ at area 31, approximate the entrance knot $Z_a$ for curve $Z_a$, $Z_{a+1}$, as shown in FIG. 7b. Similarly, a distortion would be introduced in a smooth continuous curve terminating in a sharp knot. For example, in curve $Z_{a+1}$, $Z_{a+2}$ as shown by numeral 33 in FIG. 7b, approximate the exit knot $Z_{a+2}$, where $\phi_{a+1}$ would be forced to equal $B_{a+1}$ to form a cusp. code 10 overrides the default command code and forces $\theta$ (i.e. $\theta_a$) to be equal to $\phi$ (i.e. $\phi_a$).

Where a cusp is to be formed at knot $Z_a$, the default command code would specify that the exit angle, $\phi_a$ at knot $Z_a$ would be equal to the interknot angle $B_{a-1}$ at the preceding knot $Z_{a-1}$, for curve $Z_{a-1}$, $Z_a$, and the entrance angle $\mathring{a}_a$ for curve $Z_a$, $Z_{a+1}$ would be equal to the interknot angle $B_a$ between the entrance knot $Z_a$ for curve $Z_a$, $Z_{a+1}$ and its exit knot $Z_{a+1}$. As stated above, this would produce the result shown in FIG. 7b, and a distortion of the smooth continuous curve $Z_a$, $Z_{a+1}$ shown in FIG. 7a. With the result of FIG. 7b, the deviance angle $\theta_a$ between $B_a$ and $\mathring{a}_a$ would be zero as stated above. In this case, to avoid the distortion shown by numerals 31, 33 in FIG. 7b and to produce the smooth continuous curve as shown in FIG. 7a, $\theta_a$ is forced equal to $\phi_a$ the deviance angle, at exit knot $Z_{a+1}$, as stated above. In the case shown in FIG. 7a, arranged, for the sake of explanation $\phi_a$ is equal to zero, $\phi_a$ is equal to both $B_a$ and $\theta$.

A similar result is forced by using a code 10 to control the shape of curve $Z_{a+1}$, $Z_{a+2}$ at exit knot $Z_{a+2}$. As stated above, the default command code responsive to a cusp at $Z_{a+2}$ for example, would direct the curve $Z_{a+1}$, $Z_{a+2}$, to the shape shown in FIG. 7b and particularly shown by numeral 33 approximate $Z_{a+2}$ by directing that the exit angle $\phi_{a+1}$ at knot $Z_{a+2}$ is equal to the interknot angle $B_{a+1}$ at the entrance knot $Z_{a+1}$ for that same curve. However, by using code 11 to direct that $\phi_{a+1}$ is equal to $\theta_{a+1}$, then at exit knot $Z_{a+2}$ for curve $Z_{a+1}$, $Z_{a+2}$ $\phi_{a+1}$ is equal to $2*B_{a+1}$ ($\phi_a = 0$, $\mathring{a}_{a+1} = 0$, $\theta_{a+1} = \mathring{a}_{a+1} - B_{a-1}$).

For the sake of explanation, $\mathring{a}_{a+1}$ is equal to 0, for curve $Z_{a+1}$, $Z_{a+2}$.

The effect of code 10 is to produce a smooth continuous curve from or to a cusp such as at entrance knot $Z_a$ or at exit knot $Z_{a+2}$ and symmetrical about the respective curve midpoints, as shown by numeral 35 and numeral 37, respectively for curve $Z_a$, $Z_{a+1}$ and for curve $Z_{a+1}$, $Z_{a+2}$.

Control code 10 is to override a default command code which would otherwise specify a cusp, such as where the exterior angle as described above was above a threshold such as 40° as shown in the preferred embodiment, or the interknot distance was greater than a predetermined distance, such as 120 units in the preferred embodiment. In this case, a smooth knot would be formed as described above, by taking the average of the interknot angles between a preceding knot and the subject knot and the subject knot and a successive knot in the outline loop direction of the closed outline loop. However, as explained above, if the absolute value of the interknot angles between the preceding knot and the subject knot and the subject knot and the successive knot is greater than 180°, then the supplemental average is used by supplementing the average angle by 180°. This is to orient the angle in the correct direction where the relationship of the average angle described above would result in a resultant angle 180° out of phase with its correct direction.

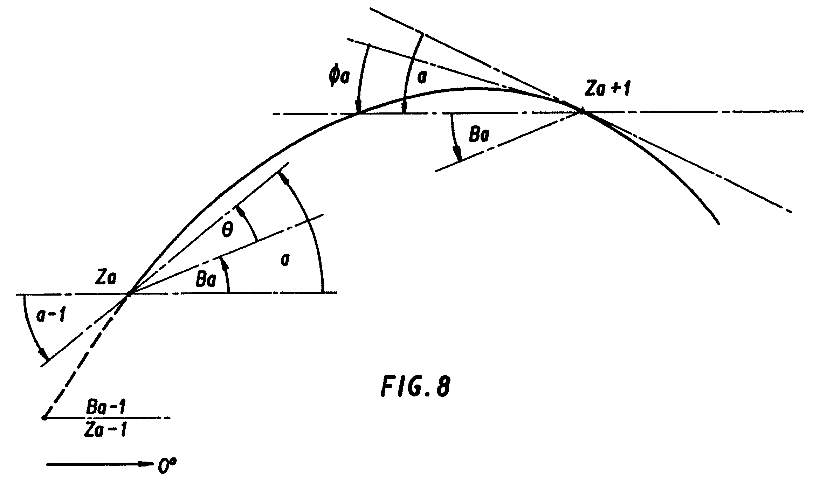

The application of the inventive principles will force the angular relationships of $\alpha$, $\beta$, $\theta$ and $\phi$ at the respective knots to conform to the rules described above, as necessary to produce the desired curve, straight line, cusp, or smooth knot, whether directed by the default command codes or by the override control codes. It should be noted, however, that where an override control code is used, it is used to force a result contrary to what would ordinarily be produced using the default command codes. For example, if the default command code would produce a cusp and a smooth knot was desired followed by a smooth continuous curve or preceded by a smooth continuous curve, then a code 10 would be used. If the default command code would have produced a smooth continuous curve, and a straight line joining a sharp knot is desired, then a code 8 would be selected. If a smooth knot is desired joined to a straight line, then a code 9 may be selected to override the default command control. All of the foregoing is shown in connection with FIGS. 5, 6, 6a, 7, 7a and 8 and in the text accompanying these figures.

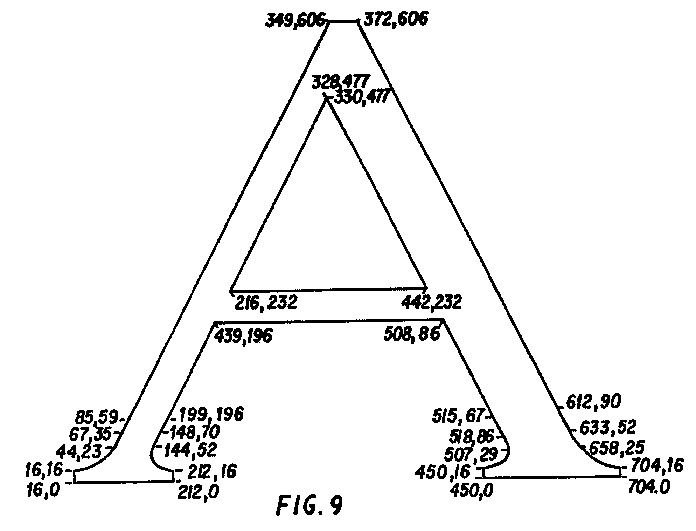

A typical encoding for an A as shown in FIG. 9 is shown in the appendix. The compiler for decoding the packed encoded information is also shown below, and is used with a Motorola 68000 processor. As the desired output is a series of intercepts at the intersection of the locus of the character outline, and the display raster lines, these intercepts can be converted into modulating information for imaging the character on an imaging surface by any suitable well-known imaging device.

For the sake of explanation and in the way of an example, a closed data loop for the encoded A shown in FIG. 9, is set forth below and described.

## CLOSED DATA LOOP FOR THE "A" OF FIG. 9
### (Given in hexadecimal Notation)

```
83 98 3C 82 E8 5E 02 4C 01 5C 02 5E 16 49 00 5B
30 B2 54 D6 75 96 83 78 81 A7 D7 5A 37 1B 80 7C
57 3A 83 89 0E 85 E0 28 24 15 C0 20 49 77 96 88
7D 2F 30 60 62 F1 6D 0F 60 26 AD 28 20 C1 8A 88
06 50 10 06 95 99 7B 88 58 80 B0 82 08 01 3A 70
FF FF 00 10 79 06 50 37 31 19 7B 73 53 81 51 79
```

As stated above, the closed data loop is encoded on data words of 4 bit or nibble boundries and the sequence of the nibbles is as given below. In accordance with the preferred embodiment, the first two bytes 5B of the closed data loop indicate the total number of bytes in the data loop for a closed outline loop. The first two bytes, 00 5b indicates that there are 91 bytes total in the data loop for the symbol A, describing outside closed outline loop 31 in the direction of arrows 31 and inside closed outline loop 35 in the direction of arrows 35.

In accordance with the preferred embodiment, the starting X and Y coordinates are given in three nibble packs of information for each respective X and Y location. Accordingly, the next three nibbles, 6 49 relates to the starting X location. In accordance with the principles of the invention and the preferred embodiment, the least significant bit of the data for a new X or a new Y location is a sign bit indicative of the direction. Accordingly, in processing the data in the preferred embodiment, a shift of one binary position is made to remove the sign bit, giving a decimal data value of 804. As described above in the preferred embodiment, since the origin of the $M^2$ is offset by 592 units, 592 must be subtracted from 804 to provide the correct X coordinate with reference to the origin of the $M^2$ of 212. The sign of the X direction, whether positive or negative with regard to the origin of the $M^2$ is given by the sign bit and is positive if the sign bit is zero, in the preferred embodiment.

In accordance with the principles of the invention, the starting Y position given as a new Y position is indicated by the next nibble series of 3 nibbles or by 5E1, which is divided by 2 to remove the sign bit yielding the result of 750. In accordance with the offset of the $M^2$ at 736 units, 736 is subtracted from 752 to yield a Y coordinate of 16. The sign bit which is a 1, indicates a negative direction for Y. Accordingly for the "A" of FIG. 9, the start point x, y coordinates shown as numeral 39, is 212, 16 with the new direction being x,-y.

As stated in the preferred embodiment, the data pack is decoded by using the first two bytes to indicate the number of bytes in the closed data loop corresponding to the coordinate points around the closed outline loop, and by three nibbles each comprising twelve bits corresponding to the respective X and Y start locations. It should be noted that wherever the X coordinates are defined by new coordinate values, the least significant bit is used as a sign bit to indicate the coordinate direction. The process performs a divide by two which separates that bit to define the aforesaid direction signed. Additionally, the X position is referenced to the home or reference position in the $M^2$ which may be offset with regard to the origin of the master encoding grid by subtracting the offset from a coordinate position accordingly.

With this in mind, the following process is described which produces the listing of coordinates shown below and in FIG. 9.

As stated, the start position is at XY coordinates 212, 0. As the last bit of data accessed from the data pack, to provide complete information for the preceding nibble series was the tenth nibble corresponding to hexadecimal number 5. The next nibble which follows a complete information series of nibbles is a first nibble value.

As shown, the first nibble value 2 indicates a case Ia and according to table II directs the access of the next three nibbles, 5C0 indicative of the new Y coordinate position. In accordance with the procedure above, a division by 2 removes the sign bit and a subtraction process is performed relative to the $M^2$ offset, to reference the new Y position to the $M^2$ home position or at zero. The first nibble value "1", following the nibble series for the completed information set of 5C02 then indicates a case Ia and a new X coordinate. In accordance with the process described above, a binary division of two is performed to isolate the sign bit, indicate the direction and a subtraction is performed to reference the new X position to the home position. Accordingly, the new X position is 16.

The next coordinate position of 16, 16 is given by the complete information set 2E8, with the nibble series first nibble value 8 indicating of a Case III. In accordance with the format of the data pack as shown in Table I, P = X is equal to 0III0 and Q = y is equal to 000I0. This translates to 14 and 2 in decimal rotation respectively. In accordance with the preferred embodiment, as it would be redundant to use Cases II, III and IV, for a translation of 0, a 1 is added to the results of p = x and q = y to provide the new X and Y coordinate distances of 15 and 3 respectively. The p value is added to previous X value of 16 to provide a new X value of 31, and the q value is added to the previous Y value of 16 to provide a new Y value of 19 accordingly.

As a reminder, it should be understood, that this process of decoding the data pack being described is designed to decode the encoded knot coordinates only. After decoding the inventive principles described herein are applied to the knots to either produce a series of nodes describing a smooth continuous curve between the knots, as between knots 16, 16, and knots 31, 19 or a straight line as between knot 212, 0 and knot 16, 0. In accordance with the preferred embodiment, the direction of the knots indicated by the completed information set 2E8 relative to the previous knot is in accordance with the direction established by the last previous sign bit accessed for the respective X and Y directions as shown above, or by 567 as described below.

The next nibble following the nibble series for the completed information set above has the first nibble value of 8 which is a Case III, directing the access of the next two nibbles for providing the nibble series for complete information set of 368 corresponding to a p = x value of 13 and a q = y value of 4 in accordance with the format shown in Table II. In accordance with the preferred embodiment, the direction of the knot denoted by this complete information set follows the last previous direction indication given and is accordingly added to the previous coordinates of 3I and I9 to provide new coordinates of 44 and 23.

In accordance with the foregoing, the next nibble being a first nibble value is 8 which accordingly directs the access of the next two nibbles to provide a complete information set of 398 producing new coordinate values of 54, 27, accordingly.

The next nibble corresponding to a first nibble value of 8, as described above, indicates a case 8 and directs the access of the next two nibbles to form the nibble series corresponding to the complete information set of hexadecimal 7C8 and according to the processing described above decoding the new coordinates of 67, 35.

As can be seen, the smooth continuous curve between knot end points 16, 16 and passing through knots 31, 19 and 44, 23 and 54, 27 and, 67, 35 are formed according to the principles of the invention to form a smooth continuous curve.

The next first nibble value of the next complete information set is zero indicating Case Ib which directs the access of another nibble to form a two nibble series complete information set. As the next nibble was 8, for Case Ib, a value of 3 is added thereto forming a value of II, indicative of control code 11 directing a smooth continuous curve be formed between the last knot having coordinate 67, 35 and the next knot which is to be indicated by the next complete information set accessed from the closed data loop.

As the first nibble value of the next complete information set is B indicating Case III, 3 nibbles are accessed forming a 4 nibble series describing the next complete information set and producing the new coordinates of 85, 59.

The next first nibble value of the next nibble series for the next complete information set is 3 indicating Case Ia, control code 3, shown in Table II, and which directs the access of a pair of three nibbles each which are indicative of the next X and Y positions and directions thereof relative to the previous knot. In accordance with the process described above, the new X and Y position is 349, 606 and as the distance between this new knot and the previous knot is greater than 128 units, the default command code directs linear interpolation. In accordance with the above, the hexadecimal value 75A corresponds to the new X position and A7D corresponds to the new Y position. As stated above, the least significant bit of each of the above 3 nibbles corresponds to the relative direction of the new X and Y points.

The first nibble value of the next nibble series for the next complete information set is I indicating a Case Ia and directing the access of the next three nibbles of 7A8 to replace the X coordinate with 372 and a new set of coordinates 372, 606.

The next first nibble value for the next nibble series is a 3 corresponding to a case Ia, a control code 3 and the access of a pair of 3 nibbles, i.e. 968, corresponding to the new X position and 675, corresponding to the new Y positions and new X, Y coordinates of 612, 90 respectively.

The next first nibble value following the nibble series for the complete information set above is D, corresponding to Case IV which directs the access of the nest three nibbles to form the 4 nibble series 254, and which according to the form shown in Table I provides a $p = x$ value of 20 and a $q = y$ value of 37. According to the process described above, a 1 is added to the $p = x$ value and the $q = y$ value to form decimal coordinate values of 21 and 38. Following the most recent X, Y coordinate direction instructions given, the X incremental value is added to the previous coordinate 612 providing the new X coordinate of 633 and the Y incremental value is subtracted from the previous Y of 90 to provide a new Y coordinate value of 52.

The next first nibble value of the next nibble series for the next complete information set is a B corresponding to Case III which directs the access of two more nibbles to form a three nibble series, complete information set, and producing the next coordinate values of 650, 32 for X and Y respectively.

The next first nibble of the next nibble series for the next complete information set is 8 corresponding to a Case III, causing the access of the next two nibbles to produce a three nibble information set and new coordinate values of 659, 25 for X and Y respectively.

The next first nibble value is a 9 corresponding to Case III and directing the access of the next two nibbles of 77 and corresponding to new X and Y coordinate 683, 17.

The next first nibble value is a 9 causing the access of the next two nibbles 04 and corresponding to the new X, Y coordinates with 704, 16.

The next new first value is 2 corresponding to Case Ia and directing the access of the next three nibbles corresponding to the 5C0 corresponding to a new Y value with the direction indicated by the first significant bit therein and producing new XY coordinates of 704, 0 respectively.

The next first nibble value of the next nibble series for the next complete information set is I corresponding to a Case Ia and directing the access of the next two nibbles forming a three nibble series complete information set 824 and corresponding to the new X, Y location of 450, with respect to the last previous direction given for the axial directions X and Y.

The next first nibble value 4, the next complete information set is 2 corresponding to Case Ia and to complete information sets 5E0 corresponding to new XY coordinates 450,16.

The next first nibble value is 8 corresponding to Case III and as described above corresponding to complete information set 0E8 and new XY coordinates 465,I7.

The next first nibble value is 9 corresponding to Case III and complete information set 389 and new XY coordinates 490,21.

The next first nibble value is 8 corresponding to Case III and complete information set 38A and new XY coordinates 501,25.

The next first nibble value is 7 corresponding to Case II which directs the access of another nibble and according to the format shown in Table II provides a $p = x$ value of binary I0I corresponding to a decimal value of 5 to which one is added in accordance with the procedure above to provide a decimal value of 6 for the new X coordinate incremental distance. Similarly, the $q = y$ value is binary 0II which corresponds to a decimal value of 3, to which one is added in accordance with the process above to provide a new value of 4 corresponding to the incremental Y coordinate distance. The new XY coordinates are therefore 507,29 accordingly to the directions given in the last previous direction instruction.

The next first nibble value is 8 corresponding to Case III and the access of two more nibbles to form the complete information set A88 and XY coordinates 516, 40.

The next first nibble value is 8 corresponding to Case III, the access of the next two nibbles form a complete information set C18 and new coordinates XY of 518, 53.

The next first nibble value is zero corresponding to Case Ib which directs the access of the next nibble to, which 3 is added in accordance with procedures described above to form the control code 5. As shown in Table II is an X Negate which changes the X direction from its previous direction. The next first nibble value is an 8 corresponding to Case III and in accordance with the foregoing new X, Y coordinates 515, 67.

The next first nibble value is 8 corresponding to Case III and new coordinates of X, Y of 508, 86, respectively in accordance with the above procedure.

The next first nibble value is a 0 corresponding to Case Ib which directs the access of the next nibble 6 to which 3 is added according to the above procedure to provide a control code of 9. 9 as shown in Table II is a line smooth direction.

The next first nibble value is F corresponding to Case IV and in accordance with the procedure above causes the access of three more nibbles forming the complete information set 600F and new X, Y coordinates 459,196 in accordance with directions as given.

The next first nibble value is 1 corresponding to Case Ia which directs the access of the next three nibbles, 62F indicative of an X coordinate point in accordance with the last previous directions given. Accordingly, the new X, Y coordinates are 199, 196.

The next first nibble value is zero corresponding to Case Ib and directs in the access of the next nibble having a value of 6 to which 3 is added in accordance with the above procedure to produce a 9 corresponding to control code 9. A next first nibble value is zero once again corresponding to Case Ib which directs the access of a next nibble which is 3 to which 3 is added giving the control code value 6 which means negate Y.

The next first nibble value is F corresponding to Case IV and in accordance with the above procedure causes the access of the next three nibbles to complete the information set 7D2F and producing new X, Y coordinates of 148, 70 which is connected to the previous X, Y coordinates I99, 66, according to the override control code 9 and in the new Y direction.

The new first nibble value is zero corresponding to Case Ib and directing the access of the next nibble having a value of 7 to which 3 is added to give it the control code 10.

The next first nibble value is an A corresponding to Case III and directing the access of the next two nibbles to give the complete information set 13A and new X and Y coordinates 144, 52 respectively.

The next first nibble value is zero corresponding to Case Ib which directs the access of another nibble having a value 8 to which 3 is added in accordance with the above procedure to provide the control code 11.

The next first nibble value is zero corresponding to Case Ib directing the access of another nibble having the value 2 to which 3 is added giving the control code 5 which negates the previous X direction.

The next first nibble value is A corresponding to Case III and the access of two additional nibbles giving the complete information set B08 and new XY coordinates 145, 40.

The next first nibble value is zero corresponding to Case Ib in accordance with the above procedure control code 11.

The next first nibble value is 8 corresponding to Case III, complete information set 858 and new XY coordinates 15I,31.

The next first nibble value is 8 corresponding to Case III, complete information set 7B8 and new XY coordinates 163,23.

The nest first nibble value is 9 corresponding to Case III , complete information set 599 and new XY coordinates 189,17.

The next first nibble value is 9 corresponding to complete information set 069 and coordinates 212, 16.

The above XY coordinates 212,16 bring the traverse of the closed data loop bringing it back to the starting point.

The next first nibble value is zero indicating Case Ib with the next access nibble 1 to which 3 is added producing the control code value 4 indicating the end of closed data loop.

In accordance with the preferred embodiment, a routine is added, not shown, which would be known to one skilled in the art to ensure that the closed data loop decoding closes upon the start location of the closed data loop and completes the closed outline loop by ending at the start point encoding of the closed data loop which represents the start of the closed outline loop.

The second closed outline loop, shown by numeral 35 and arrows 37, of the A now starts at the closed data loop coded hexadecimal numbers 790, 650 corresponding to new X and Y coordinate values 216, 232 and the X and Y directions, derived according to the process given above with the regard to the start points for the foregoing loop, 31.

The next first nibble value is 1 corresponding to Case Ia and directing the access of the next three nibbles 815 and new XY coordinates 442, 232.

The next first nibble value is a 3 corresponding to a Case Ia, directing the access of a pair of three nibbles 735, and 97B corresponding to new X and Y coordinates of 330 and 477 in the negative X and negative Y directions accordingly.

The next first nibble value is 1 corresponding to Case Ia directing the access of the next three nibbles 73I corresponding to X coordinate 328, Y coordinate 477 in the negative X and negative Y directions accordingly.

The next first nibble value is 3 corresponding to Case Ia directing the access of a pair of three nibbles each corresponding to hexadecimal value 690 and 790 and X and Y positions 216, 232, respectively. As 216, 232 are the start points, the closed data loop representing the closed outline loop 35 has been completed and the next first nibble value is zero indicating Case Ib with the last nibble accessed accordingly being zero indicating the end of loop. Once again, the routine described above is used to insure that the closed data loop ends at its start point.

The above is a representative encoding of a letter used in the process to derive the coordinate values around the outline of the character and any override control codes which may be used to replace default command codes. However, it should be understood that changes to the codings could be used consistent with the principles of this invention, as claimed herein, and that the invention should not be restricted to the coding or decoding process shown above, with respect to the preferred embodiment.

## AUTOSCALING LINEAR INTERPOLATION

Linear interpolation is a well-known technique and is not claimed as an invention in this application. The autoscaling linear interpolation which is claimed and which is described below is a method of increasing the precision of a machine interpolation procedure which uses as a start point, a first set of coordinates and as an ending point a second set of coordinates. The coordinates are usually expressed in respective coordinate directions such as x and y, for example. In the preferred embodiment, the process of linear interpolation is for the purpose of producing coordinate points along a straight line between the first and second end points, which coincide with a second coordinate system such as the intercepts in a raster display. Each of the coordinates are found by determining the slope of the straight line between the two end points which is equal to the incremental distance in a first coordinate direction divided by the incremental distance in a second coordinate direction (i.e. $Y_2-Y_1/X_2-X_1$). That first coordinate incremental distance is expressed in an encoded machine value as a first data word, (i.e. $Y_2-Y_1$), in a first machine location. The second coordinate incremental distance between the two end points in the second coordinate direction (i.e. $X_2-X_1$), is also expressed as a machine value and placed in a second machine location. The machine location limits the precision by which a data word may be expressed. For example, and as is well-known, each machine is based upon radix, which is a number base. The most common machine number base is the binary number base. Each data word accordingly, has a number of bit positions with each specified bit position being a specified power of that radix (i.e. $2^4$, $2^3$, $2^2$, $2^1$, $2^0$, $2^{-1}$, $2^{-2}$,). Accordingly, a shift of a data word in a direction of the most significant bits corresponding to higher exponential values or higher orders of the machine radix, results in an increase in the scale or value of the data word. Further, each shift in the direction of the most significant bits, results in an effective multiplication of the data word value by a scale factor of the machine radix raised to an exponential power corresponding to the number of bits shifted (i.e. 13 bit positions shifted is equal to a scale factor of $2^{13}$ in a binary machine or equivalent of 8196, in decimal notation. Conversely, each shift of a data word, towards the least significant bits, corresponding to lower exponential values or orders of that machine radix, corresponds to an effective division by the machine radix value and conversely to a reducing scale factor. Further, machine locations for storing data words are limited in the number of bits available. As the precision of a data word is a function of the data space and the number of bits available for storing that data word, an increased precision for expressing a data word are obtainable by extending the number of bits or size of a machine location available for specifying a data word. For example, as is well-recognized, in a decimal system, the number 5.632498 is a more precise value than 5.3624 which lacks the last three significant places (i.e. .000098), of the former number. In binary, the number 10111.101 is a more precise expression than that number truncated or rounded to 10111.000, as the latter number is missing the bits .101 and is therefore less precise. However, the former binary expression requires a larger machine location for specifying all the relevant bits in that expression. The "point" in the above binary and decimal values are used to indicate the positions, according to the radix system used, to indicate position values equal to or greater than 1 (decimal) and less than 1 (decimal)- (i.e. integer and fractional values).

The effect of shifting to increase the scale of the Y increment is to eliminate the binary point in a third data word representing the slope or Y incremental value and thereby avoiding floating point arithmetic operations. The point separates the bit positions in the radix system selected, separating fractional from integer values in a data word having values equal to or greater than 1 and less than 1 (i. e. between the bit positions "$2^0$" and "$2^{-1}$". The binary point is equivalent to the decimal point in a radix 10 system and equivalent to a "point" between those machine positions having a value equal to or greater then 1 and less then 1 in any system and as stated, separating the fractional values from the integer values in the slope or Y increment value. By shifting a machine representation of a number in the direction of more significant bits, the scale of the number is increased, thereby moving the "point" effectively in the direction of the less significant bits. If a sufficient number of bit positions are shifted, the binary point is eliminated from the number. In this way, floating point arithmetic is avoided.

According to the invention, linear interpolation proceeds according to the known method by determining the coordinate distance in a first coordinate direction and in a second coordinate direction between a set of end points. The method is used in the machine having a radix "r" cooresponding to the values of designated bit positions in the encoded words used within the machine. The process continues by encoding a first data ward on "N" bits corresponding to the distance between the first and second end points in the first coordinate (i.e. $Y_2-Y_1$), and then placing that first data word in a first machine location. To complete the process of calculation the slope, according to the interpolation method, a second data word of M bits corresponding to the distance between the first and second end points (i.e. $X_2-X_1$) in a second coorindate direction is encoded and placed in a second location. The machine is now ready to use the data value in the first location and a data word value in the second location in a process of division to produce a third data word corresponding to the slope of the straight line between the first and second end points (i.e. $Y_2-Y_1/X_2-X_1$). To increase the precision or resolution of the third data word according to the inventive process, the scale of the first data word (i.e. $Y_2-Y_1$), is increased by determining the the number of available positions between the most significant position of the first data word and the most significant position of the first machine location. The first data word is then shifted in a first direction towards the most significant positions in that first machine location, utilizing those more significant positions which were unused, when expressing the first data word. The scale of the first data word is again increased by shifting a second time in the same first direction of the most significant positions by a number of positions cooresponding to the number of bit positions used to encode the second data word (i.e. $X_2-X_1$). This shift refers to the multiplication of the first data word by $2^5$. In the preferred embodiment, the first machine location is expanded to accommodate this additional shift. It should be noted that the inventive principle is not limited to the size of available data space in any one machine or to any machine radix.

In the preferred embodiment, the second shifting operation described above occurs in an extension to the first machine location. The quotient corresponding to the slope (i.e. $Y_2-Y_1/X_2-X_1$) produced as the third data word by division of the first data word by the second data word will reduce the first data word to a size coextensive with the first machine location. As a result then, the data word may be raised by a scale factor corresponding to a shift in the direction of the most significant positions corresponding to the number of significant positions used to express the denominator (i.e. $X_2-X_1$) or second data word, as the next division step cancels that said shift of the first data value by the said number of bit positions in the second data word and corresponding reduces its position length to the size of the first machine location.

The third encoded data word (i.e. the Y incremental value for each X increment) is then stored. The first data word value is then changed to $Y_1$ and the second data word value is then changed to $X_1$. The second data word is incremented by a coordinate unit value to produce X values between $X_1$ and $X_2$ which are then stored. The first data word is incremented by the value of the third data word per increment of the second data word to generate first data word values corresponding to positions between $Y_1$ and $Y_2$. In Table III, are given the coordinate X, Y values generated.

In the iterative process, the third encoded data word at the higher resolution, produced, corresponding to the slope produced according to the above, is used iteratively as a Y incremental value to derive a cumulative Y incremental value related to a respective X coordinate value in the first direction (i.e. Y) and stored as a cumulative Y. As no change has been made to the precision (i.e. the number of positions used to express the third data word), the precision of the third data word is the same as the first data word, produced by shifting the first data word and increasing its scale, as described.

As interpolation is an iterative process, the data word (i.e. the Y incremental value at the said higher precision), is used to produce the cumulative Y, related to the Y coordinate for a respective X coordinate.

As the purpose of producing data word values corresponding to points along a straight line, is to produce intercepts on a display coordinate system, the scale cumulative Y words are reduced to the scale used to express the end point coordinate values, by the step of truncating or rounding. Truncating may be accomplished by discarding a predetermined number of least significant bits or rounding may be used by a shirt in the direction of the least significant bits, minus one, adding a bit corresponding to the rounding value such as .5 (decimal) and discarding any bits having values less than the least significant bit value of interest. In the preferred embodiment, truncating or rounding is to the position of the lowest integer value in the radix 2 system (i.e. to bit position $2^0$).

In the foregoing manner, the scale of cumulative Y is then reduced to fit scale of the data words for the end point coordinates. In the preferred embodiment, the original precision is that of the coordinates on a display which are the display intercepts, shown as X, Y in Table III. The result of using this method is to avoid the incremental error introduced into each cumulative Y value by summing Y incremental at a lower scale.

The incremental value at the increased scale factor may be used to derive a cumulative Y for each respective coordinate X values by iteratively incrementing Y increment by Y increment to produce a first cumulative Y and then incrementing that first cumulative Y with the Y incremental value and so on to produce a series of distinct cumulative Y values at the higher scale factor for each X coordinate. The discrete cumulate Y values may then be reduced by the scale factor to the scale of the numerator (dx) before shifting and added to the initial Y coordinate value to produce the correct Y coordinate for each respective X coordinate. By producing the cumulative Y using Y increment at the increased scale factor, cumulative errors in the Y coordinate value due to an error in the cumulative Y value due to the lower scale factor of Y increments are avoided.

An example is shown in Table III. In the preferred embodiment, a radix 2 machine is used with locations of 16 bits each used and with the most significant or 16th bit being used for a sign bit. The Y register, therefore, corresponding to a first data word of 120 would be 0000 0000 0111 1000. As the leftmost or most significant bit of the register is not available for indicating the numerical value, as it is a sign bit in the preferred embodiment, then the first data word expressed in binary, may be shifted to the left in the direction of the most significant bits, a total of eight places corresponding to the eight zeros or unused binary bit positions to the left of "111 1000." The updated first data word, as shown in the register is now 01111000000000000 corresponding to a decimal value of 30,720.

The denominator corresponding to the distance between the end points in a second coordinate direction and to the second data word is the binary word 0000 0000 0011 0010 equal to a decimal value of 50. The quotient produced by the division of the dividend or first data word by the denominator or second data word produces a quotient having a number of bits related to the number of bits in the dividend reduced by the number of bits in the divisor or denominator. In the divisor, the most significant bit is in the 6th bit position corresponding to a decimal $2^5$ or decimal of 32. The numerator corresponding to the first data word and expressed as the 16 bit binary word 0111 1000 0000 0000 may be raised by an order of the radix, (i.e. $2^5$) corresponding to the order of the most significant bit position of the denominator, with the assurance that the quotient will fit within the register size containing the first data word after shifting above and without loss of any significant bits in the quotient, such as, for example, bit corresponding to the remainder.

To summarize the foregoing, the precision of data word for the numerator value, used in deriving the slope can be raised within the space allotted by a machine register by shifting the significant bits of that data word to the left or towards the most significant bit in the register equal to the number of unused bits in the register or in the example between the most significant bit position for the first data word shown, or seventh bit position and the most significant bit position available in the register. This causes the binary word corresponding to the numerator to be stated at its highest value thereby avoiding floating point arithmetic. The precision of the slope used in linear interpolation may be further increased by expanding the register space available for storing that binary word and shifting hat first data word to the left, effectively raising it by a power of the radix used, corresponding to the number of significant bits in the denominator or divisor. As stated above, as the slope is the quotient produced by the divison of the dividend or numerator (first data value), by the divisor or denominator (second data value), a shift of the numerator by the number of significant bits in the denominator results in a quotient having a number of significant bits no greater than the number of bits in the dividend or numerator originally. In this way, the precision of the quotient or incremental value in the first coordinate direction is maintained equal to the precision of a numerator.

To continue with the example above, as the divisor contains 6 significant bits corresponding in binary notation to it $2^5$ or 32 then the numerator may be shifted to the left for a total of 13 places by increasing the scale, raising the value of the first data word by a scale factor of $2^{13}$. As $2^{13}$ equals decimal 8192, the arithmetic accomplished in binary form and expressed in decimal is

$$\text{dec.} \quad \frac{120 \times 8192}{50} = \frac{F0000}{32} \quad \text{HEX where} \quad 120 = Y_2 - Y_1;$$
$$50 = X_2 - X_1;$$

The first coordinate or Y incremental value is expressed in decimal as 19660/8192 = 2.399902 or 4CCC in HEX. The actual incremental value defined by the coordinate end points is 120/50 = 2.4. The difference between the Y incremental value, expressed as a third data word and the actual slope is $4\times10^{-3}\%$ error. As shown in Table III, the Y incremental produced at the higher precision is used to iteratively increment Y, which is then reduced in scale accordingly and added to the first end point in the first coordinate direction (Y direction) and that Y coordinate value is stored. In reducing the scale, the Y value may be truncated or rounded, to produce an intercept value, for example. As shown in Table III below, the intercept value is shown as produced by truncation and rounding.

Additionally, to increase the speed of the process, the value of the first data word or numerator may be compared to successive entries in an ordered set of values. By a comparison of the value of the first data word it can quickly be determined whether the coordinate difference (i.e. $Y_2-Y_1$) is greater or lesser than a value in a particular position of the set of values. Accordingly, the set of values may be arranged in decreasing orders of the machine radix, (i.e. $2^{13}$, $2^{12}$,... $2^0$). By a successive process of comparison in the decreasing order, it can easily be determined where in this procedure, the first data word in the first machine location is less than a value in the set of values. Then that particular value in the set of values could be referenced to an index value to indicate the number of bits available in the numerator register for shifting the first data word. It should be noted that according to the principles of the invention, it is not necessary where the denominator is a power of two, such as two or four, to divide, saving additional time, as shifting of the numerator accomplishes the same result.

Accordingly, the above process is equally valid for the reverse process where the set of values is in increasing order and the comparison is in the increasing order with the particular value of interest in the set being the first greater than the first data word.

In this way, it is possible to avoid floating point arithmetic by increasing the value of the numerator and corresponding to the number of unused bits available in the register for shifting while further increasing the value of the numerator corresponding to the number of significant bits in the denominator to maintain the power of two of the most significant bit of the quotient equal to the power of two of the most significant bit of the dividend and thereby increasing the precision of the quotient and the answer. Additionally, it is possible to use a set of values such as a look up table for example, to compare the value of the numerator to values in the denominator, selecting as an index number related to a value in said set of values to indicating the number of positions available for shifting the numerator by arranging the set of values in an order of values corresponding to decreasing or increasing orders of the radix and successively comparing the numerator value in the order of said decreasing or increasing powers of the radix until a particular value is found which is greater or less, respectively than the numerator value. That particular value can then correspond to an index value corresponding to the power of two available in the register for shifting the numerator and increasing its value by a power of two.

As would be apparent to those skilled in the art, the inventive principles can be applied to any radix system or to any coordinate system.

## TABLE III

<u>Start Point</u>     Delta_X=50

$X_1,Y_1$=0,0     Delta_Y=120    Y_incremental= 19660.dec.;

<u>End Point</u>                                4CCC.Hex

$X_2,Y_2$=50,120         Scale Factor=   8196 dec.

| (truncated) X,Y | (rounded) Y | | Cumulative incremental Y per X coordinate | (truncated) X,Y | (rounded) Y | | Cumulative incremental Y per X coordinate |
|---|---|---|---|---|---|---|---|
| 1,2 | [2] | Sum= | 19660 = 4CCChex | 26,62 | [62] | Sum= | 511160 =.7CCB8hex |
| 2,4 | [5] | Sum= | 39320 = 9998hex | 27,64 | [65] | Sum= | 530820 =.81984hex |
| 3,7 | [7] | Sum= | 58980 = E664hex | 28,67 | [67] | Sum= | 550480 =.86650hex |
| 4,9 | [10] | Sum= | 78640 = 13330hex | 29,69 | [70] | Sum= | 570140 =.8B31Chex |
| 5,11 | [12] | Sum= | 98300 = 17FFChex | 30,71 | [72] | Sum= | 589800 =.8FFE8hex |
| 6,14 | [14] | Sum= | 17960 = 1CCC8hex | 31,74 | [74] | Sum= | 609460 =.94CB4hex |
| 7,16 | [17] | Sum= | 137620 = 21994hex | 32,76 | [77] | Sum= | 629120 =.99980hex |
| 8,19 | [19] | Sum= | 157280 = 26660hex | 33,79 | [79] | Sum= | 648780 =.9E64Chex |
| 9,21 | [22] | Sum= | 176940 = 2B32Chex | 34,81 | [82] | Sum= | 668440 =.A3318hex |
| 10,23 | [24] | Sum= | 196600 = 2FFF8hex | 35,83 | [84] | Sum= | 688100 =.A7FE4hex |
| 11,26 | [26] | Sum= | 216260 = 34CC4hex | 36,86 | [86] | Sum= | 707760 =.ACCB0hex |
| 12,28 | [29] | Sum= | 235920 = 39990hex | 37,88 | [89] | Sum= | 727420 =.B197Chex |
| 13,31 | [31] | Sum= | 255580 = 3E65Chex | 38,91 | [91] | Sum= | 747080 =.B6648hex |
| 14,33 | [34] | Sum= | 275240 = 43328hex | 39,93 | [94] | Sum= | 766740 =.BB314hex |
| 15,35 | [36] | Sum= | 294900 = 47FF4hex | 40,95 | [96] | Sum= | 786400 =.BFFE0hex |
| 16,38 | [38] | Sum= | 314560 = 4CCC0hex | 41,98 | [98] | Sum= | 806060 =.C4CAChex |
| 17,40 | [41] | Sum= | 334220 = 5198Chex | 42,100 | [101] | Sum= | 825720 =.C9978hex |
| 18,43 | [43] | Sum= | 353880 = 56658hex | 43,103 | [103] | Sum= | 845380 =.CE644hex |
| 19,45 | [46] | Sum= | 373540 = 5B324hex | 44,105 | [106] | Sum= | 865040 =.D3310hex |
| 20,47 | [48] | Sum= | 393200 = 5FFF0hex | 45,107 | [108] | Sum= | 884700 =.D7FDChex |
| 21,50 | [50] | Sum= | 412860 = 64CBChex | 46,110 | [110] | Sum= | 904360 =.DCCA8hex |
| 22,52 | [53] | Sum= | 432520 = 69988hex | 47,112 | [113] | Sum= | 924020 =.E1974hex |
| 23,55 | [55] | Sum= | 452180 = 6E654hex | 48,115 | [115] | Sum= | 943680 =.E6640hex |
| 24,57 | [58] | Sum= | 471840 = 73320hex | 49,117 | [118] | Sum= | 963340 =.EB30Chex |
| 25,59 | [60] | Sum= | 491500 = 77FEChex | 50,120 | [120] | Sum= | 983000 =.EFFD8hex |

The effect of shifting to increase the scale of the Y increment is to eliminate the binary point in a third data word representing the slope and Y increment and thereby avoiding floating point arithmetic operations. The binary point separates the bit locations separating fractional from integer values in a data word (i.e. having values equal to or greater than 1 and less than 1 (i.e. between the bit positions "$2^0$" and "$2^{-1}$". The binary point is equivalent to the decimal point in a radix 10 system and equivalent to a "point" between those machine positions having a value equal to or greater than 1 and less than one in any system and separating the fractional values from the integer values in the slope or Y increment value.

By shifting in the direction of more significant bits, the scale factor of Y increment is increased, thereby moving the "point" effectively in the direction of the less significant bits. If a sufficient number of bit positions are shifted, the binary point is eliminated from Y increment. In this way, floating point arithmetic is avoided. The value of Y increment at the increased scale factor may be used to derive a cumulative Y for each respective coordinate X values by iteratively incrementing Y increment by Y increment to produce a first cumulative Y and then incrementing that first cumulative Y with Y increment and so on to produce a series of distinct cumulative Y values at the higher scale factor for each X coordinate. The discrete cumulate Y values may then be reduced by the scale factor to the scale of the numerator (dx) before shifting and added to the initial Y coordinate value to produce the correct Y coordinate for each respective X coordinate. By producing the cumulative Y using Y increment at the increased scale factor, errors in the Y coordinate value due to an error in the cumulative Y increment due to the lower scale factor of Y increment are avoided.

The compiler used in the preferred embodiment to perform the method described herein is shown in the following program listings written in Motorola 68000 assembler language and contained within six modules.

The first module is the main program utilizing the control modules shown as modules 2-7. Its function is to access the pack data and interpret the knot locations and control codes therein.

Module 2 is a subset of module 1 and is used to evaluate each complete information set, identifying the Case and control code value thereof.

Module 3 is the compiler described earlier, which functions according to equations 3.1 and 3.2. and which compiles the knot locations, the angles of the curve at the knots, and the related values of the parameter $t$ to produce the node locations on the curve segment locus.

Module 4 is the compiler which operates according to the method of auto-scaling linear interpolation shown herein.

Module 5 is a module which receives curve coordinate data, corresponding to the display coordinate system and sorts this data in the order of the raster lines on the display, so that the display data is accessed in timed relation to the generation of the raster lines, with data for display on any one particular raster line accessed in time with the location of the imaging beam at that raster line.

Module 6 is a general purpose memory allocation and release mechanism for buffer and raster line data.

Module 7 is an apparatus for performing general trigonometry.

As said, these modules are written in 68000 assembler code as used in the preferred embodiment to perform the invention as described. The language for the preferred embodiment is further compiled into machine object language for use on the Motorola 68000.

With respect to the system generally shown in figure 10, there is illustrated a general type of apperatus with which the invention can be practiced. More particularly, in one aspect CPU 1 is a microprocessor arrangement made up of, for example, a Motorola 68000 processor. The processor will be used to control the encoded information in data store 5. The data store can reside in part, for example, Magnetic Disc, CD ROM, Magnetic Tape, ROM, RAM, Networked Data Base Systems, other magnetic media or the like encodable media. It is to be understood that the above-identified specfic elements are encompassed in said data store 5. Control and initiation of the process can be effected, for example, by a keyboard 3 through which instructions can be given. The processor controls the imaging apparatus 7.

In a specific aspect, the arrangement described is especially adapted for use as a phototypesetter of the type using conventional laser raster scan technology. Alternatively, the system of Figure 10 can also correspond to a desktop computer with CRT display.

# D E C O D E   A   S E R I E S   O F   L O O P S

```
            DECODE  IDNT    1,0 CURVE FONT DECODER

                    XDEF    DECODE

                    XREF    FINAL_HERMITE,HERMITE,INIT_HERMITE
                    XREF    GET_PQ,GETNIB34,GET_NIB4

            *               STACK TEMPORARIES
00000000            OFFSET  0
00000000            DS.W    1
FFFFFFFE +  X_HOME: SET     -*              * X HOME POSITION
00000002 +          DS.W    1
FFFFFFFC +  Y_HOME: SET     -*              * Y HOME POSITION
00000004 +          DS.B    1
FFFFFFFB +  FINAL:  SET     -*              * LAST TIME IF TRUE
00000005 +          DS.B    1
FFFFFFFA +  X_DIR:  SET     -*              * X DIRECTION
00000006 +          DS.B    1
FFFFFFF9 +  Y_DIR:  SET     -*              * Y DIRECTION
00000008 +          DS.W    0
FFFFFFF8 +  LOCALS: SET     -*              * NUMBER OF BYTES USED

            NEW_VALUE:      MACRO           NEW_VALUE X_OR_Y,X_NEW!Y_NEW!X_CUR!Y_CUR
                    JSR     GETNIB34
                    LSR.W   #1,D7
                    SCS     \1_DIR(A6)
                    SUB.W   \1_HOME(A6),D7
                    MOVE.W  D7,\2
                    ENDM
                 +
9:000000         +  SECTION $9               * CODE SECTION
9:000000            DECODE: EQU     *
9:000000  4E56FFF8          LINK    A6,#LOCALS
9:000004  4850              PEA     (A0)
9:000006  48A7F800          MOVEM.W D0/D1/D2/D3/D4,-(SP)
9:00000A  3D7C0250FFFE      MOVE.W  #592,X_HOME(A6)
9:000010  3D7C02DFFFFC      MOVE.W  #735,Y_HOME(A6)
9:000016  422EFFFB          CLR.B   FINAL(A6)
```

EP 0 191 134 B1

N E W     L O O P

```
        9:00001A                        NEW_LOOP: EQU     *
        9:00001A   4EB900000000                   JSR      GETNIB34
        9:000020   661A                           BNE.S    ORG_OK
        9:000022   4EB900000000                   JSR      GETNIB34
        9:000028   3D47FFFE                       MOVE.W   D7,X_HOME(A6)
        9:00002C   4EB900000000                   JSR      GETNIB34
        9:000032   3D47FFFC                       MOVE.W   D7,Y_HOME(A6)
        9:000036   4EB900000000                   JSR      GETNIB34
        9:00003C                        ORG_OK:   EQU      *
        9:00003C   E24F                           LSR.W    #1,D7
        9:00003E   55EEFFFA                        SCS      X_DIR(A6)
        9:000042   9E6EFFFE                        SUB.W    X_HOME(A6),D7
        9:000046   3007                           MOVE.W   D7,D0
        9:000048   4EB900000000          +        JSR      GETNIB34
        9:00004E   E24F                  +        LSR.W    #1,D7
        9:000050   55EEFFF9              +        SCS      Y_DIR(A6)
        9:000054   9E6EFFFC              +        SUB.W    Y_HOME(A6),D7
        9:000058   3207                  +        MOVE.W   D7,D1
        9:00005A   4847                           SWAP     D7
        9:00005C   3E00                           MOVE.W   D0,D7
        9:00005E   4EB900000000                   JSR      INIT_HERMITE
        9:000064                        NEXT_KNOT: EQU     *
        9:000064   3400                           MOVE.W   D0,D2
        9:000066   3601                           MOVE.W   D1,D3
        9:000068   7800                           MOVEQ.L  #0,D4
                                         +
        9:00006A                        SAME_KNOT: EQU     *
        9:00006A   4EB900000000                   JSR      GET_PQ
        9:000070   4A47                           TST.W    D7
        9:000072   674A                           BEQ.S    DO_CONTROL
        9:000074   4A2EFFFA                        TST.B    X_DIR(A6)
        9:000078   6704                           BEQ.S    INC_X
        9:00007A   9447                           SUB.W    D7,D2
        9:00007C   6002                           BRA.S    REL_Y
        9:00007E   D447               INC_X:      ADD.W    D7,D2
        9:000080   4A2EFFF9           REL_Y:      TST.B    Y_DIR(A6)
        9:000084   6704                           BEQ.S    INC_Y
        9:000086   9646                           SUB.W    D6,D3
        9:000088   6002                           BRA.S    SEND_KNOT
        9:00008A   D646               INC_Y:      ADD.W    D6,D3
                                         +
        9:00008C                        SEND_KNOT: EQU     *
        9:00008C   3002                           MOVE.W   D2,D0
        9:00008E   3203                           MOVE.W   D3,D1
        9:000090   3C04                           MOVE.W   D4,D6
        9:000092   3E01                           MOVE.W   D1,D7
        9:000094   4847                           SWAP     D7
        9:000096   3E00                           MOVE.W   D0,D7
        9:000098   4EB900000000                   JSR      HERMITE
        9:00009E   60C4                           BRA.S    NEXT_KNOT
```

EP 0 191 134 B1

E N D      L O O P

```
 85   9:0000A0                 END_LAST: EQU    *
 86   9:0000A0   522EFFFB                ADDQ.B   #1,FINAL(A6)
 87   9:0000A4                 END_LOOP: EQU    *
 88   9:0000A4   4EB900000000            JSR      FINAL_HERMITE
 89   9:0000AA   6608                    BNE.S    LOOP_DONE
 90   9:0000AC   4A2EFFFB                TST.B    FINAL(A6)
 91   9:0000B0   6700FF68                BEQ      NEW_LOOP
 92   9:0000B4   4C9F001F      LOOP_DONE MOVEM.W  (SP)+,D0/D1/D2/D3/D4
 93   9:0000B8   205F                    MOVE.L   (SP)+,A0
 94   9:0000BA   4E5E                    UNLK     A6
 95   9:0000BC   4E75                    RTS
 96
 97   9:0000BE                 DO_CONTROL: EQU *
 98   9:0000BE   3E06                    MOVE.W   D6,D7
 99   9:0000C0   6B06                    BMI.S    CASE_DEFAULT
100   9:0000C2   0C470008                CMPI.W   #8,D7
101   9:0000C6   6F02                    BLE.S    CASE_OK
102   9:0000C8                 CASE_DEFAULT: EQU *
103   9:0000C8   7E08                    MOVEQ.L  #8,D7
104   9:0000CA                 CASE_OK: EQU     *
105   9:0000CA   DE47                    ADD.W    D7,D7
106   9:0000CC   4EFB7002                JMP      CASE_TBL(PC,D7.W)
107
108                            CASE_TBL:
109   9:0000D0   60CE                    BRA.S    END_LAST
110   9:0000D2   600E                    BRA.S    HORIZONTAL
111   9:0000D4   6024                    BRA.S    VERTICAL
112   9:0000D6   600A                    BRA.S    DIAGONAL
113   9:0000D8   60CA                    BRA.S    END_LOOP
114   9:0000DA   6034                    BRA.S    X_NEGATE
115   9:0000DC   603E                    BRA.S    Y_NEGATE
116   9:0000DE   6038                    BRA.S    XY_NEGATE
117   9:0000E0   6042                    BRA.S    DEFAULT
```

EP 0 191 134 B1

NTAL / VERTICAL / DIAGONAL

```
9:0000E2                          HORIZONTAL: EQU *
9:0000E2                          DIAGONAL: EQU     *
9:0000E2    1006                      MOVE.B    D6,D0
9:0000E4    4EB900000000      +       JSR       GETNIB34
9:0000EA    E24F              +       LSR.W     #1,D7
9:0000EC    55EEFFFA          +       SCS       X_DIR(A6)
9:0000F0    9E6EFFFE          +       SUB.W     X_HOME(A6),D7
9:0000F4    3407              +       MOVE.W    D7,D2
9:0000F6    5300                      SUBQ.B    #1,D0
9:0000F8    6792                      BEQ       SEND_KNOT
9:0000FA                          VERTICAL EQU      *
9:0000FA    4EB900000000      +       JSR       GETNIB34
9:000100    E24F              +       LSR.W     #1,D7
9:000102    55EEFFF9          +       SCS       Y_DIR(A6)
9:000106    9E6EFFFC          +       SUB.W     Y_HOME(A6),D7
9:00010A    3607              +       MOVE.W    D7,D3
9:00010C    6000FF7E                  BRA       SEND_KNOT
                              +
9:000110                          X_NEGATE: EQU     *
9:000110    462EFFFA                  NOT.B     X_DIR(A6)
9:000114    6000FF54                  BRA       SAME_KNOT
9:000118                          XY_NEGATE: EQU    *
9:000118    462EFFFA                  NOT.B     X_DIR(A6)
9:00011C                          Y_NEGATE: EQU     *
9:00011C    462EFFF9                  NOT.B     Y_DIR(A6)
9:000120    6000FF48                  BRA       SAME_KNOT
                              +
9:000124                          DEFAULT: EQU      *
9:000124    7801                      MOVEQ.L   #1,D4
9:000126    C806                      AND.B     D6,D4
9:000128    5204                      ADDQ.B    #1,D4
9:00012A    E14C                      LSL.W     #8,D4
9:00012C    02060002                  ANDI.B    #2,D6
9:000130    E206                      ASR.B     #1,D6
9:000132    5206                      ADDQ.B    #1,D6
9:000134    1806                      MOVE.B    D6,D4
9:000136    6000FF32                  BRA       SAME_KNOT

                                      END
```

Module -II-

N I B B L E

```
                        NIBBLE   IDNT    1,0 CURVE FONT LOOP DATA HANDLER
                                 XDEF    GET_PQ,GETNIB34,GET_NIB4
                +
                        *        G E T _ P Q
                        *
9:000000        +       SECTION $9              * CODE SECTION
9:000000        GET_PQ: EQU     *
9:000000  6172          BSR.S   GET_NIB1
9:000002  3C07          MOVE.W  D7,D6
9:000004  E447          ASR.W   #2,D7
9:000006  DE47  +       ADD.W   D7,D7           MAKE OFFSET INTO CASE_JMP
9:000008  4EFB7002      JMP     CASE_BRA(PC,D7.W)

9:00000C  6006  CASE_BRA: BRA.S  CASE_0
9:00000E  6014          BRA.S   CASE_1
9:000010  6026          BRA.S   CASE_2
9:000012  6040          BRA.S   CASE_3
```

GET _ P Q

```
        23   9:000014   4A46         CASE_0    TST.W     D6
        24   9:000016   6608                   BNE.S     GTPQ_0
        25   9:000018   615A                   BSR.S     GET_NIB1
        26   9:00001A   6702                   BEQ.S     *+4
        27   9:00001C   5647                   ADDQ.W    #3,D7
        28   9:00001E   CD47                   EXG       D6,D7
        29   9:000020   7E00         GTPQ_0    MOVEQ.L   #0,D7
        30   9:000022   4E75                   RTS

        32   9:000024   614E         CASE_1    BSR.S     GET_NIB1
        33   9:000026   0C470008               CMPI.W    #8,D7
        34   9:00002A   6D06                   BLT.S     GTPQ_1
        35   9:00002C   02470007               ANDI.W    #7,D7
        36   9:000030   603C                   BRA.S     GTPQ_9
        37   9:000032   0A460004     GTPQ_1    EORI.W    #4,D6
        38   9:000036   6036                   BRA.S     GTPQ_9

        40   9:000038   613A         CASE_2    BSR.S     GET_NIB1
        41   9:00003A   E24E                   LSR.W     #1,D6
        42   9:00003C   6404                   BCC.S     *+6
        43   9:00003E   06470010               ADDI.W    #$10,D7
        44   9:000042   3F07                   MOVE.W    D7,-(SP)
        45   9:000044   612E                   BSR.S     GET_NIB1
        46   9:000046   E24E                   LSR.W     #1,D6
        47   9:000048   6404                   BCC.S     *+6
        48   9:00004A   06470010               ADDI.W    #$10,D7
        49   9:00004E   3C07                   MOVE.W    D7,D6
        50   9:000050   3E1F                   MOVE.W    (SP)+,D7
        51   9:000052   601A                   BRA.S     GTPQ_9

        53   9:000054   611E         CASE_3    BSR.S     GET_NIB1
        54   9:000056   0A46000C               EORI.W    #$C,D6
        55   9:00005A   E94E                   LSL.W     #4,D6
        56   9:00005C   8C47                   OR.W      D7,D6
        57   9:00005E   6140                   BSR.S     GET_NIB2
        58   9:000060   CD47                   EXG       D6,D7
        59   9:000062   4A06                   TST.B     D6
        60   9:000064   6A08                   BPL.S     GTPQ_9
        61   9:000066   00470040               ORI.W     #$40,D7
        62   9:00006A   0246007F               ANDI.W    #$7F,D6
        63   9:00006E   5286         GTPQ_9    ADDQ.L    #1,D6
        64   9:000070   5287                   ADDQ.L    #1,D7
        65   9:000072   4E75                   RTS
```

G E T   1   N I B B L E

```
                                    *        G E T _ N I B 1
                                    *
   7:000000              +          NIB:     SECTION  $7        * DATA SECTION
   7:000000                         NIB:     DS.B     1
   7:000002              +                   DS.W     0
   9:000074              +                   SECTION  $9        * CODE SECTION
   9:000074  3E2D0028               GET_NIB1 MOVE.W  NIB_CNT(A5),D7
   9:000078  E44F                            LSR.W   #2,D7
   9:00007A  651A                            BCS.S   GNB1_1
   9:00007C  206D0000                        MOVE.L  NIB_PTR(A5),A0
   9:000080  1E307000                        MOVE.B  0(A0,D7.W),D7
   9:000084  13C700000000                    MOVE.B  D7,NIB
   9:00008A  546D0028               GNB1_0:  ADDQ.W  #2,NIB_CNT(A5)
   9:00008E  0247000F                        ANDI.W  #$F,D7
   9:000092  48C7                            EXT.L   D7
   9:000094  4E75                            RTS
   9:000096  1E3900000000           GNB1_1:  MOVE.B  NIB,D7
   9:00009C  E80F                            LSR.B   #4,D7
   9:00009E  60EA           +                BRA     GNB1_0

                                    *        G E T _ N I B 2
                                    *
   9:0000A0  3E2D0028               GET_NIB2 MOVE.W  NIB_CNT(A5),D7
   9:0000A4  E44F                            LSR.W   #2,D7
   9:0000A6  6512                            BCS.S   GNB2_1
   9:0000A8  586D0028                        ADDQ.W  #4,NIB_CNT(A5)
   9:0000AC  206D0000                        MOVE.L  NIB_PTR(A5),A0
   9:0000B0  41F07000                        LEA.L   0(A0,D7.W),A0
   9:0000B4  7E00                            MOVEQ.L #0,D7
   9:0000B6  1E10                            MOVE.B  (A0),D7
   9:0000B8  4E75                            RTS
   9:0000BA  61DA                   GNB2_1   BSR     GNB1_1
   9:0000BC  3F07                            MOVE.W  D7,-(SP)
   9:0000BE  61B4                            BSR     GET_NIB1
   9:0000C0  E94F                   GNB3_0   LSL.W   #4,D7
   9:0000C2  8E5F                            OR.W    (SP)+,D7
   9:0000C4  4E75                            RTS
```

EP 0 191 134 B1

E T   3   N I B B L E S

```
9:0000C6    7E02        *       G E T _ N I B 3
                        *
9:0000C6    7E02        GET_NIB3: MOVEQ.L #2,D7
9:0000C8    CE6D0028             AND.W    NIB_CNT(A5),D7
9:0000CC    6708                 BEQ.S    GNB3_1
9:0000CE    61A4                 BSR      GET_NIB1
9:0000D0    3F07                 MOVE.W   D7,-(SP)
9:0000D2    61CC                 BSR      GET_NIB2
9:0000D4    60EA                 BRA      GNB3_0
9:0000D6    61C8        GNB3_1   BSR      GET_NIB2
9:0000D8    3F07                 MOVE.W   D7,-(SP)
9:0000DA    6198                 BSR      GET_NIB1
9:0000DC    E14F        GNB4_0   LSL.W    #8,D7
9:0000DE    8E5F                 OR.W     (SP)+,D7
9:0000E0    4E75                 RTS
                        +
                        *       G E T N I B 3 4
                        *
9:0000E2    7E01        GETNIB34: MOVEQ.L #1,D7
9:0000E4    CE6D0028             AND.W    NIB_CNT(A5),D7
9:0000E8    67DC                 BEQ      GET_NIB3
                        *        BRA      GET_NIB4
                        +
                        *       G E T _ N I B 4
                        *
9:0000EA    61B4        GET_NIB4: BSR     GET_NIB2
9:0000EC    3F07                 MOVE.W   D7,-(SP)
9:0000EE    61B0                 BSR      GET_NIB2
9:0000F0    60EA                 BRA      GNB4_0

                                 END
```

EP 0 191 134 B1

## H E R M I T E   CURVE PROCESSOR

```
                      HERMITE IDNT   1,0 CURVE FONT HERMITE SPLINE GENERATOR

             +                XDEF   INIT_HERMITE,HERMITE,FINAL_HERMITE      ENTRY POINTS
                              XDEF   SCALE,SET_BETA,GAMMA ALPHA,MAKE_NODES   STATIC SUBROUTINE
                              XDEF   SCALE,PREV,CUR,NEXT,FIRST,SECOND        VARIABLES
                              XREF   PLOT_CHECK

  0000007F    LINEAR_IMPLIED: SET    127
  00000001    ISLINEAR:       SET    1
  00000002    CURVE:          SET    2
  00000050    CUSP_IMPLIED:   SET    40*2
  00000001    ISCUSP:         SET    1
  00000002    CONTIGIOUS:     SET    2
  0000005A    HDEG_45:        SET    45*2
  000000B4    HDEG_90:        SET    90*2
  00000168    HDEG_180:       SET    180*2
  00004000    R_S_2:          SET    $4000
  00007FFF    R_S_4:          SET    $7FFF
  00000003    T_TOOFAR:       SET    3
  00000006    T_DECREMENT:    SET    3*SHORT
  0000000A    T_INCREMENT:    SET    5*SHORT
  00000800    T_LENGTH:       SET    1024*SHORT
  00000666    XI_LIMIT:       SET    1638
  00000000  + GAIN$V_SCALE:   SET    0                GAIN SCALE FACTOR
  00000008  + GAIN$S_SCALE:   SET    8
  000000FF  + GAIN$M_SCALE:   SET    (1<<8-1)<<0
  00000000  + R_S$V_SCALE:    SET    0                R/S SCALE
  0000000D  + R_S$S_SCALE:    SET    13
  00001FFF  + R_S$M_SCALE:    SET    (1<<13-1)<<0
  00000000  + SINE$V_SCALE:   SET    0                SINE/COSINE SCALE
  0000000F  + SINE$S_SCALE:   SET    15
  00007FFF  + SINE$M_SCALE:   SET    (1<<15-1)<<0
  00000000  + TIME$V_SCALE:   SET    0                TIME FUNCTION SCALE
  0000000F  + TIME$S_SCALE:   SET    15
  00007FFF  + TIME$M_SCALE:   SET    (1<<15-1)<<0
```

S T A T I C    D A T A    A R E A

```
33                                *       KNOT STRUCTURE
34  00000000                              OFFSET  0
35  00000000               +       MIS_Y:          DS.W    1
35  00000002               +       MIS_X:          DS.W    1
36  00000004               +       DRU_Y:          DS.W    1
36  00000006               +       DRU_X:          DS.W    1
37  00000008                       ALPHA:          DS.W    1
38  0000000A                       BETA:           DS.W    1
39  0000000C                       GAMMA:          DS.W    1
40  0000000E                       CUSP:           DS.B    1
41  0000000F                       LINEAR:         DS.B    1
42  00000010               +                       DS.W    0
43  00000010                       KNOT_LENGTH: EQU *
44  7:000000               +               SECTION $7          * DATA SECTION
45  7:000000               +                       DS.W    0
46  7:000000  0000000000000000     PREV:   DCB.B   KNOT_LENGTH,0
47  7:000010  0000000000000000     CUR:    DCB.B   KNOT_LENGTH,0
48  7:000020  0000000000000000     NEXT:   DCB.B   KNOT_LENGTH,0
49  7:000030  0000000000000000     FIRST:  DCB.B   KNOT_LENGTH,0
50  7:000040  0000000000000000     SECOND: DCB.B   KNOT_LENGTH,0
51                         +
52                                *       I N I T _ H E R M I T E
53                                *
54  9:000000               +               SECTION $9          * CODE SECTION
55  9:000000  4851                 INIT_HERMITE: PEA (A1)
56  9:000002  43F900000000                 LEA.L   PREV,A1
57  9:000008  426D002A                     CLR.W   KNOT_CNT(A5)
58  9:00000C  23470004                     MOVE.L  D7,DRU_Y(A1)
59  9:000010  6104                         BSR.S   SCALE
60  9:000012  225F                         MOVE.L  (SP)+,A1
61  9:000014  4E75                         RTS
```

S C A L E ---    SLANT / ROTATE / TRANSLATE / SCALE

```
                                   *        S C A L E
                                   *
9:000016                    +      SECTION $9        * CODE SECTION
9:000016             SCALE:  EQU     *
9:000016  48E7C000           MOVEM.L D0/D1,-(SP)
9:00001A  32290004           MOVE.W  DRU_Y(A1),D1
9:00001E  30290006           MOVE.W  DRU_X(A1),D0
9:000022  3E2D0004           MOVE.W  SLANT(A5),D7
9:000026  6712               BEQ.S   SCAL_1
9:000028  4EB900000000       JSR     SINE
9:00002E  CFC1               MULS    D1,D7
9:000030  E387          +    ASL.L   #16-SINE$S_SCALE,D7
9:000032  4847          +    SWAP    D7
9:000034  D047               ADD.W   D7,D0
9:000036  33470006           MOVE.W  D7,DRU_X(A1)
9:00003A  926D000C     SCAL_1: SUB.W   ROT_Y(A5),D1
9:00003E  906D000E           SUB.W   ROT_X(A5),D0
9:000042  3E2D0006           MOVE.W  ROTATE(A5),D7
9:000046  6752               BEQ.S   SCAL_6
9:000048  0C4700B4           CMPI.W  #HDEG_90,D7
9:00004C  6606               BNE.S   SCAL_2
9:00004E  C141               EXG     D0,D1
9:000050  4440               NEG.W   D0
9:000052  6046               BRA.S   SCAL_6
9:000054  0C47FF4C     SCAL_2: CMPI.W  #-HDEG_90,D7
9:000058  6606               BNE.S   SCAL_3
9:00005A  C141               EXG     D0,D1
9:00005C  4441               NEG.W   D1
9:00005E  603A               BRA.S   SCAL_6
9:000060  0C470168     SCAL_3: CMPI.W  #HDEG_180,D7
9:000064  6706               BEQ.S   SCAL_4
9:000066  0C47FE98           CMPI.W  #-HDEG_180,D7
9:00006A  6606               BNE.S   SCAL_5
9:00006C  4440         SCAL_4: NEG.W   D0
9:00006E  4441               NEG.W   D1
9:000070  6028               BRA.S   SCAL_6
```

EP 0 191 134 B1

S C A L E ---    SLANT / ROTATE / TRANSLATE / SCALE

```
 99  9:000072  4EB900000000        SCAL_5: JSR     COSINE
100  9:000078  3F07                        MOVE.W  D7,-(SP)
101  9:00007A  3E2D0006                    MOVE.W  ROTATE(A5),D7
102  9:00007E  4EB900000000                JSR     SINE
103  9:000084  3C00                        MOVE.W  D0,D6
104  9:000086  CDC7                        MULS    D7,D6
105  9:000088  CFC1                        MULS    D1,D7
106  9:00008A  C3D7                        MULS    (SP),D1
107  9:00008C  D286                        ADD.L   D6,D1
108  9:00008E  E381               +        ASL.L   #16-SINE$S_SCALE,D1
108  9:000090  4841               +        SWAP    D1
109  9:000092  C1DF                        MULS    (SP)+,D0
110  9:000094  9087                        SUB.L   D7,D0
111  9:000096  E380               +        ASL.L   #16-SINE$S_SCALE,D0
111  9:000098  4840               +        SWAP    D0
112  9:00009A  D06D0012           SCAL_6: ADD.W   ORG_X(A5),D0
113  9:00009E  C1ED000A                    MULS    GAIN_X(A5),D0
114  9:0000A2  E080               +        ASR.L   #GAIN$S_SCALE,D0
115  9:0000A4  D06D0016                    ADD.W   OFST_X(A5),D0
120  9:0000A8  33400002                    MOVE.W  D0,MTS_X(A1)
122  9:0000AC  D26D0010                    ADD.W   ORG_Y(A5),D1
123  9:0000B0  C3ED0008                    MULS    GAIN_Y(A5),D1
124  9:0000B4  E081               +        ASR.L   #GAIN$S_SCALE,D1
125  9:0000B6  D26D0014                    ADD.W   OFST_Y(A5),D1
127  9:0000BA  3281                        MOVE.W  D1,(A1)
132  9:0000BC  4CDF0003                    MOVEM.L (SP)+,D0/D1
133  9:0000C0  4E75                        RTS
```

EP 0 191 134 B1

H E R M I T E

```
*        H E R M I T E
*
         SECTION $9              * CODE SECTION
HERMITE: EQU      *
         MOVEM.L  A1/A2,-(SP)
         LEA.L    CUR,A2
         TST.W    KNOT_CNT(A5)
         BNE.S    HRMT_1
         MOVE.L   D7,DRU_Y+CUR-CUR(A2)
         MOVE.W   D6,CUSP+PREV-CUR(A2)
         LEA.L    (A2),A1
         BSR      SCALE
         LEA.L    PREV-CUR(A2),A1
         BSR      SET_BETA
         BRA.S    HRMT_0
HRMT_1:  MOVE.L   D7,DRU_Y+NEXT-CUR(A2)
         MOVE.W   D6,CUSP+CUR-CUR(A2)
         LEA.L    NEXT-CUR(A2),A1
         BSR      SCALE
         EXG      A2,A1
         BSR      SET_BETA
         MOVEQ.L  #NEXT-CUR,D6
         LEA.L    (A1),A2
         LEA.L    PREV-CUR(A2),A1
         BSR      GAMMA_ALPHA
         BEQ.S    HRMT_4
         CMPI.W   #2-1,KNOT_CNT(A5)
         BEQ.S    HRMT_5
         BSR      MAKE_NODES
```

EP 0 191 134 B1

dERMITE

```
HRMT_2:  LEA.L     PREV-CUR(A2),A1
         MOVE.L    (A2)+,(A1)+
         MOVE.L    (A2)+,(A1)+
         MOVE.L    (A2)+,(A1)+
         MOVE.L    (A2)+,(A1)+
HRMT_3:  EQU       *
         MOVE.L    (A2)+,(A1)+
         MOVE.L    (A2)+,(A1)+
         MOVE.L    (A2)+,(A1)+
         MOVE.L    (A2)+,(A1)+
HRMT_0:  MOVEM.L   (SP)+,A1/A2
         ADDQ.W    #1,KNOT_CNT(A5)
         RTS
HRMT_4:  EQU       *
         LEA.L     NEXT-CUR(A2),A2
         BSR.S     SET_BETA
         LEA.L     CUR-NEXT(A2),A1
         BRA       HRMT_3
HRMT_5:  MOVE.W    BETA(A2),D7
         SUB.W     BETA(A1),D7
         JSR       FOLD_ANGLE
         SGT       INIT_COLOR(A5)
         MOVE.W    (A2),D7
         CMP.W     (A1),D7
         SLT       D7
         BNE.S     HRMT_6
         CMP.B     INIT_COLOR(A5),D7
         SEQ       D7
HRMT_6   MOVE.B    D7,COLOR(A5)
         LEA.L     FIRST-CUR(A2),A1
         LEA.L     PREV-CUR(A2),A2
         MOVE.L    (A2)+,(A1)+
         MOVE.L    (A2)+,(A1)+
         MOVE.L    (A2)+,(A1)+
         MOVE.L    (A2)+,(A1)+
         MOVE.L    (A2)+,(A1)+
         MOVE.L    (A2)+,(A1)+
         MOVE.L    (A2)+,(A1)+
         MOVE.L    (A2)+,(A1)+
         LEA.L     -(KNOT_LENGTH)(A2),A2
         BRA       HRMT_2
```

Module -III-


S E T    B E T A

```
                                       *       S E T _ B E T A
                                       *
          9:000186                 +               SECTION  $9              * CODE SECTION
          9:000186                     SET_BETA EQU    *
          9:000186   3E2A0004                     MOVE.W   DRU_Y(A2),D7
          9:00018A   9E690004                     SUB.W    DRU_Y(A1),D7
          9:00018E   4847                         SWAP     D7
          9:000190   3E2A0006                     MOVE.W   DRU_X(A2),D7
          9:000194   9E690006                     SUB.W    DRU_X(A1),D7
          9:000198   2F07                         MOVE.L   D7,-(SP)
          9:00019A   4EB900000000                 JSR      ARCTAN
          9:0001A0   DE6D0006                     ADD.W    ROTATE(A5),D7
          9:0001A4   3347000A                     MOVE.W   D7,BETA(A1)
          9:0001A8   4A29000F                     TST.B    LINEAR(A1)
          9:0001AC   6622                         BNE.S    SBETA_4
          9:0001AE   3E1F                         MOVE.W   (SP)+,D7
          9:0001B0   6A02                 +        BPL.S    *+4
          9:0001B2   4447                 +        NEG.W    D7
          9:0001B4   0C47007F                     CMPI.W   #LINEAR_IMPLIED,D7
          9:0001B8   620E                         BHI.S    SBETA_2
          9:0001BA   3E1F                         MOVE.W   (SP)+,D7
          9:0001BC   6A02                 +        BPL.S    *+4
          9:0001BE   4447                 +        NEG.W    D7
         .9:0001C0   0C47007F                     CMPI.W   #LINEAR_IMPLIED,D7
          9:0001C4   6204                         BHI.S    SBETA_3
          9:0001C6   4E75                         RTS
          9:0001C8                         SBETA_2 EQU      *
          9:0001C8   548F                 +        ADDQ.L   #SHORT,SP
          9:0001CA   5229000F                 SBETA_3 ADDQ.B  #ISLINEAR,LINEAR(A1)
          9:0001CE   4E75                         RTS
          9:0001D0                         SBETA_4 EQU      *
          9:0001D0   588F                 +        ADDQ.L   #LONG,SP
          9:0001D2   4E75                         RTS
```

EP 0 191 134 B1

43

F I N A L   H E R M I T E

```
                                    *       F I N A L _ H E R M I T E
                                    *
9:0001D4                     +          SECTION  $9           * CODE SECTION
9:0001D4   7E01                 FHMT_1: MOVEQ.L  #TRUE,D7
9:0001D6   1B47002D                     MOVE.B   D7,LOOP_NOT_CLOSED(A5)
9:0001DA   4E75                         RTS
9:0001DC                       FINAL_HERMITE: EQU *
9:0001DC   2E3900000034                 MOVE.L   FIRST+DRU_Y,D7
9:0001E2   BEB900000014                 CMP.L    CUR+DRU_Y,D7
9:0001E8   66EA                         BNE      FHMT_1
9:0001EA   48E7C060                     MOVEM.L  D0/D1/A1/A2,-(SP)
9:0001EE   45F900000030                 LEA.L    FIRST,A2
9:0001F4   7C10                         MOVEQ.L  #SECOND-FIRST,D6
9:0001F6   43EAFFD0                     LEA.L    PREV-FIRST(A2),A1
9:0001FA   613E                         BSR.S    GAMMA_ALPHA
9:0001FC   672E                         BEQ.S    FHMT_3
9:0001FE   61000168                     BSR      MAKE_NODES
9:000202   43D2                         LEA.L    (A2),A1
9:000204   45EA0010            +        LEA.L    SECOND-FIRST(A2),A2
9:000208   6100015E             FHMT_2: BSR      MAKE_NODES
9:00020C   302D0020                     MOVE.W   OLD_RASTER(A5),D0
9:000210   322D0022                     MOVE.W   OLD_INTERCEPT(A5),D1
9:000214   D241                         ADD.W    D1,D1
9:000216   4A2D002E                     TST.B    COLOR(A5)
9:00021A   6702                         BEQ.S    *+4
9:00021C   5241                         ADDQ.W   #1,D1
9:00021E   4EB900000000                 JSR      PLOT_CHECK
9:000224   4CDF0603                     MOVEM.L  (SP)+,D0/D1/A1/A2
9:000228   7E00                         MOVEQ.L  #FALSE,D7
9:00022A   4E75                         RTS
9:00022C                       FHMT_3: EQU      *
9:00022C   45EA0010            +        LEA.L    SECOND-FIRST(A2),A2
9:000230   6100FF54                     BSR      SET_BETA
9:000234   7C00                         MOVEQ.L  #SECOND-SECOND,D6
9:000236   6102                         BSR.S    GAMMA_ALPHA
9:000238   60CE                         BRA      FHMT_2
```

EP 0 191 134 B1

Module -III-

3 A M M A   A L P H A

```
273                            *        G A M M A _ A L P H A
274                            *
275   9:00023A              +           SECTION $9              * CODE SECTION
276   9:00023A                  GAMMA_ALPHA: EQU *
277   9:00023A   4A86                   TST.L    D6
278   9:00023C   6734                   BEQ.S    GMAL_4
279   9:00023E   3E2A000A               MOVE.W   BETA(A2),D7
280   9:000242   9E69000A               SUB.W    BETA(A1),D7
281   9:000246   6716                   BEQ.S    GMAL_2
287   9:000248   3E2A0002               MOVE.W   MIS_X(A2),D7
288   9:00024C   BE690002               CMP.W    MIS_X(A1),D7
290   9:000250   6614                   BNE.S    GMAL_3
291   9:000252   BE726802               CMP.W    MIS_X(A2,D6.L),D7
292   9:000256   6706                   BEQ.S    GMAL_2
294   9:000258   3E12                   MOVE.W   (A2),D7
295   9:00025A   BE51                   CMP.W    (A1),D7
301   9:00025C   6614                   BNE.S    GMAL_4
302   9:00025E   536D002A       GMAL_2: SUBQ.W   #1,KNOT_CNT(A5)
303   9:000262   7E00                   MOVEQ.L  #FALSE,D7
304   9:000264   4E75                   RTS
305   9:000266               GMAL_3: EQU      *
307   9:000266   3E12                   MOVE.W   (A2),D7
308   9:000268   BE51                   CMP.W    (A1),D7
314   9:00026A   6606                   BNE.S    GMAL_4
315   9:00026C   BE726800               CMP.W    MIS_Y(A2,D6.L),D7
316   9:000270   67EC                   BEQ.S    GMAL_2
```

EP 0 191 134 B1

Module -III-

G A M M A   A L P H A

```
318  9:000272  4A2A000E          GMAL_4:  TST.B    CUSP(A2)
319  9:000276  6622                       BNE.S    GMAL_6
320  9:000278 .3E2A000A                   MOVE.W   BETA(A2),D7
321  9:00027C  9E69000A                   SUB.W    BETA(A1),D7
322  9:000280  4EB900000000               JSR      FOLD_ANGLE
323  9:000286  4A47                       TST.W    D7
324  9:000288  6A02            +          BPL.S    *+4
324  9:00028A  4447            +          NEG.W    D7
325  9:00028C  0C470050                   CMPI.W   #CUSP_IMPLIED,D7
326  9:000290  6304                       BLS.S    GMAL_5
327  9:000292  532A000E                   SUBQ.B   #CONTIGIOUS-ISCUSP,CUSP(A2)
328  9:000296  542A000E          GMAL_5:  ADDQ.B   #CONTIGIOUS,CUSP(A2)
329  9:00029A  4A6D0004          GMAL_6:  TST.W    SLANT(A5)
330  9:00029E  660A                       BNE.S    GMAL6A
331  9:0002A0  3E2D0008                   MOVE.W   GAIN_Y(A5),D7
332  9:0002A4  BE6D000A                   CMP.W    GAIN_X(A5),D7
333  9:0002A8  673E                       BEQ.S    GMAL_8
334  9:0002AA  0C6D0001002A     GMAL6A:   CMPI.W   #2-1,KNOT_CNT(A5)
335  9:0002B0  6618                       BNE.S    GMAL_7
337  9:0002B2  3E12                       MOVE.W   (A2),D7
338  9:0002B4  9E51                       SUB.W    (A1),D7
344  9:0002B6  4847                       SWAP     D7
350  9:0002B8  3E2A0002                   MOVE.W   MIS_X(A2),D7
351  9:0002BC  9E690002                   SUB.W    MIS_X(A1),D7
353  9:0002C0  4EB900000000               JSR      ARCTAN
354  9:0002C6  3347000A                   MOVE.W   D7,BETA(A1)
355  9:0002CA  4A86             GMAL_7:   TST.L    D6
356  9:0002CC  671A                       BEQ.S    GMAL_8
357  9:0002CE  3E326800                   MOVE.W   MIS_Y(A2,D6.L),D7
359  9:0002D2  9E52                       SUB.W    (A2),D7
364  9:0002D4  4847                       SWAP     D7
365  9:0002D6  3E326802                   MOVE.W   MIS_X(A2,D6.L),D7
370  9:0002DA  9E6A0002                   SUB.W    MIS_X(A2),D7
372  9:0002DE  4EB900000000               JSR      ARCTAN
373  9:0002E4  3547000A                   MOVE.W   D7,BETA(A2)
```

G A M M A   A L P H A

```
375  9:0002E8  0C2A0002000E           GMAL_8   CMPI.B    #CONTIGIOUS,CUSP(A2)
376  9:0002EE  6656                             BNE.S     GMAL_13
377  9:0002F0  3E2A000A                         MOVE.W    BETA(A2),D7
378  9:0002F4  DE69000A                         ADD.W     BETA(A1),D7
379  9:0002F8  E247                             ASR.W     #1,D7
380  9:0002FA  35470008                         MOVE.W    D7,ALPHA(A2)
381  9:0002FE  3E2A000A                         MOVE.W    BETA(A2),D7
382  9:000302  9E69000A                         SUB.W     BETA(A1),D7
383  9:000306  6A02                +            BPL.S     *+4
383  9:000308  4447                +            NEG.W     D7
384  9:00030A  0C470168                         CMPI.W    #HDEG_180,D7
385  9:00030E  6312                             BLS.S     GMAL_10
386  9:000310  3E2A0008                         MOVE.W    ALPHA(A2),D7
387  9:000314  6B04                             BMI.S     GMAL_9
388  9:000316  044702D0                         SUB.W     #HDEG_180*2,D7
389  9:00031A  06470168           GMAL_9   ADD.W     #HDEG_180,D7
390  9:00031E  35470008                         MOVE.W    D7,ALPHA(A2)
391  9:000322  336A0008000C       GMAL_10  MOVE.W    ALPHA(A2),GAMMA(A1)
392  9:000328  7E01                             MOVEQ.L   #ISLINEAR,D7
393  9:00032A  BE29000F                         CMP.B     LINEAR(A1),D7
394  9:00032E  6606                             BNE.S     GMAL_11
395  9:000330  3569000A0008                     MOVE.W    BETA(A1),ALPHA(A2)
396  9:000336  BE2A000F           GMAL_11  CMP.B     LINEAR(A2),D7
397  9:00033A  6606                             BNE.S     GMAL_12
398  9:00033C  336A000A000C                     MOVE.W    BETA(A2),GAMMA(A1)
399  9:000342  7E01               GMAL_12  MOVEQ.L   #TRUE,D7
400  9:000344  4E75                             RTS
401  9:000346  3369000A000C       GMAL_13  MOVE.W    BETA(A1),GAMMA(A1)
402  9:00034C  356A000A0008                     MOVE.W    BETA(A2),ALPHA(A2)
403  9:000352  60EE                             BRA       GMAL_12
```

M A K E   N O D E S

```
                                    *          M A K E _ N O D E S
                                    *
                         *LOCALS
      00000000                         OFFSET    0
      00000000              +                    DS.W    1
      FFFFFFFE              +    X2_X1:           SET     -*
      00000002              +                    DS.W    1
      FFFFFFFC              +    Y2_Y1:           SET     -*
      00000004              +                    DS.W    1
      FFFFFFFA              +    T_STEP:          SET     -*
      00000006              +                    DS.W    0
      FFFFFFFA              +    LOCALS:          SET     -*

                                    XREF     NTRPL8
                                    XREF     ARCTAN,SINE,COSINE,FOLD_ANGLE
                                    XREF     TIME_1_TBL,TIME_2_TBL,XI_TBL
```

M A K E   N O D E S

```
                                    +            SECTION  $9            * CODE SECTION
418   9:000354                           MKND_99 UNLK     A6
419   9:000354   4E5E                            MOVEM.W  (SP)+,D0/D1/D2/D3/D4/D5
420   9:000356   4C9F003F                MKND_1: EQU      *
421   9:00035A                                   MOVE.W   (A2),D6
423   9:00035A   3C12                            MOVE.W   MIS_X(A2),D7
432   9:00035C   3E2A0002                        JSR      NTRPL8
434   9:000360   4EB900000000                    RTS
435   9:000366   4E75
436                                       MAKE_NODES: EQU *
437   9:000368                                   MOVE.L   (A1),PLOT_Y(A5)
439   9:000368   2B510020                 MKND_2: CMPI.B   #ISLINEAR,LINEAR(A1)
444   9:00036C   0C290001000F                     BEQ      MKND_1
445   9:000372   67E6                             MOVE.W   BETA(A1),D7
446   9:000374   3E29000A                         CMP.W    ALPHA(A1),D7
447   9:000378   BE690008                         BNE.S    MKND_3
448   9:00037C   6606                             CMP.W    GAMMA(A1),D7
449   9:00037E   BE69000C                         BEQ      MKND_1
450   9:000382   67D6
```

M A K E   N O D E S

```
452   9:000384   48A7FC00        MKND_3   MOVEM.W   D0/D1/D2/D3/D4/D5,-(SP)
453   9:000388   4E56FFFA                 LINK      A6,#LOCALS
454   9:00038C   9E690008                 SUB.W     ALPHA(A1)',D7
455   9:000390   4EB900000000             JSR       FOLD_ANGLE
456   9:000396   3007                     MOVE.W    D7,D0
457   9:000398   3E29000C                 MOVE.W    GAMMA(A1),D7
458   9:00039C   9E69000A                 SUB.W     BETA(A1),D7
459   9:0003A0   4EB900000000             JSR       FOLD_ANGLE
460   9:0003A6   3207                     MOVE.W    D7,D1
461   9:0003A8   6602                     BNE       *+4
462   9:0003AA   3200                     MOVE.W    D0,D1
463   9:0003AC   4A40                     TST.W     D0
464   9:0003AE   6602                     BNE       *+4
465   9:0003B0   3001                     MOVE.W    D1,D0
466   9:0003B2   3E00                     MOVE.W    D0,D7
467   9:0003B4   DE41                     ADD.W     D1,D7
468   9:0003B6   E247                     ASR.W     #1,D7
469   9:0003B8   6A02                 +   BPL.S     *+4
469   9:0003BA   4447                 +   NEG.W     D7
470   9:0003BC   0C47005A                 CMPI.W    #HDEG_45,D7
471   9:0003C0   6306                     BLS.S     MKND_4
472   9:0003C2   4447                     NEG.W     D7
473   9:0003C4   064700B4                 ADDI.W    #HDEG_90,D7
474   9:0003C8   41F900000000    MKND_4   LEA.L     XI_TBL,A0
475   9:0003CE   DE47                 +   ADD.W     D7,D7
476   9:0003D0   3E307000                 MOVE.W    0(A0,D7.W),D7
477   9:0003D4   3407                     MOVE.W    D7,D2
478   9:0003D6   0C470666                 CMPI.W    #XI_LIMIT,D7
479   9:0003DA   6408             +       BCC.S     MKND_5          * HIGH OR SAME
480   9:0003DC   323C4000                 MOVE.W    #R_S_2,D1
481   9:0003E0   3001                     MOVE.W    D1,D0
482   9:0003E2   6042                     BRA.S     MKND_10
483   9:0003E4   7C00            MKND_5:   MOVEQ.L   #0,D6
484   9:0003E6   3C02                     MOVE.W    D2,D6
485   9:0003E8   E586                     ASL.L     #2,D6
486   9:0003EA   3E01                     MOVE.W    D1,D7
487   9:0003EC   4EB900000000             JSR       SINE
488   9:0003F2   6A02             +       BPL.S     *+4
488   9:0003F4   4487             +       NEG.L     D7
489   9:0003F6   BE86                     CMP.L     D6,D7
490   9:0003F8   6506             +       BCS.S     MKND_6          * LOWER
491   9:0003FA   3E3C7FFF                 MOVE.W    #R_S_4,D7
492   9:0003FE   6006                     BRA.S     MKND_7
```

M A K E   N O D E S

```
494   9:000400   4847              MKND_6:   SWAP     D7
495   9:000402   E687                        ASR.L    #16-R_S$S_SCALE,D7
496   9:000404   8EC2                        DIVU     D2,D7
497   9:000406   3207              MKND_7:   MOVE.W   D7,D1
498   9:000408   3E00                        MOVE.W   D0,D7
499   9:00040A   4EB900000000                JSR      SINE
500   9:000410   6A02            +           BPL.S    *+4
500   9:000412   4487            +           NEG.L    D7
501   9:000414   BE86                        CMP.L    D6,D7
502   9:000416   6506            +           BCS.S    MKND_8           * LOWER
503   9:000418   3E3C7FFF                    MOVE.W   #R_S_4,D7
504   9:00041C   6006                        BRA.S    MKND_9
505   9:00041E   4847              MKND_8:   SWAP     D7
506   9:000420   E687                        ASR.L    #16-R_S$S_SCALE,D7
507   9:000422   8EC2                        DIVU     D2,D7
508   9:000424   3007              MKND_9:   MOVE.W   D7,D0
509   9:000426                    MKND_10 EQU        *
514   9:000426   3C2A0002                    MOVE.W   MIS_X(A2),D6
516   9:00042A   9C6D0022                    SUB.W    PLOT_X(A5),D6
517   9:00042E   3D46FFFE                    MOVE.W   D6,XZ_X1(A6)
518   9:000432   6A02            +           BPL.S    *+4
518   9:000434   4446            +           NEG.W    D6
520   9:000436   3E12                        MOVE.W   (A2),D7
525   9:000438   9E6D0020                    SUB.W    PLOT_Y(A5),D7
526   9:00043C   3D47FFFC                    MOVE.W   D7,YZ_Y1(A6)
527   9:000440   6A02            +           BPL.S    *+4
527   9:000442   4447            +           NEG.W    D7
528   9:000444   BE46                        CMP.W    D6,D7
529   9:000446   620C                        BHI.S    MKND_11
530   9:000448   3E29000A                    MOVE.W   BETA(A1),D7
531   9:00044C   4EB900000000                JSR      COSINE
532   9:000452   600C                        BRA.S    MKND_12
533   9:000454   3C07              MKND_11 MOVE.W     D7,D6
534   9:000456   3E29000A                    MOVE.W   BETA(A1),D7
535   9:00045A   4EB900000000                JSR      SINE
536   9:000460                    MKND_12 EQU        *
537   9:000460   6A02            +           BPL.S    *+4
537   9:000462   4487            +           NEG.L    D7
538   9:000464   4846                        SWAP     D6
539   9:000466   4246                        CLR.W    D6
540   9:000468   E286                        ASR.L    #16-SINE$S_SCALE,D6
541   9:00046A   8CC7                        DIVU     D7,D6
542   9:00046C   3406                        MOVE.W   D6,D2
543   9:00046E   CCC1                        MULU     D1,D6
544   9:000470   E386            +           ASL.L    #16-(R_S$S_SCALE+2),D6
544   9:000472   4846            +           SWAP     D6
545   9:000474   3206                        MOVE.W   D6,D1
546   9:000476   3E02                        MOVE.W   D2,D7
547   9:000478   CEC0                        MULU     D0,D7
548   9:00047A   E387            +           ASL.L    #16-(R_S$S_SCALE+2),D7
548   9:00047C   4847            +           SWAP     D7
549   9:00047E   3007                        MOVE.W   D7,D0
550   9:000480   3E290008                    MOVE.W   ALPHA(A1),D7
```

M A K E    N O D E S

```
551   9:000484   4EB900000000              JSR       COSINE
552   9:00048A   CFC1                      MULS      D1,D7
553   9:00048C   E787              +       ASL.L     #16-(SINE$S_SCALE-2),D7
553   9:00048E   4847              +       SWAP      D7
554   9:000490   3607                      MOVE.W    D7,D3
555   9:000492   3E290008                  MOVE.W    ALPHA(A1),D7
556   9:000496   4EB900000000              JSR       SINE
557   9:00049C   CFC1                      MULS      D1,D7
558   9:00049E   E787              +       ASL.L     #16-(SINE$S_SCALE-2),D7
558   9:0004A0   4847              +       SWAP      D7
559   9:0004A2   3207                      MOVE.W    D7,D1
560   9:0004A4   3E29000C                  MOVE.W    GAMMA(A1),D7
561   9:0004A8   4EB900000000              JSR       COSINE
562   9:0004AE   CFC0                      MULS      D0,D7
563   9:0004B0   E787              +       ASL.L     #16-(SINE$S_SCALE-2),D7
563   9:0004B2   4847              +       SWAP      D7
564   9:0004B4   3807                      MOVE.W    D7,D4
565   9:0004B6   3E29000C                  MOVE.W    GAMMA(A1),D7
566   9:0004BA   4EB900000000              JSR       SINE
567   9:0004C0   CFC0                      MULS      D0,D7
568   9:0004C2   E787              +       ASL.L     #16-(SINE$S_SCALE-2),D7
568   9:0004C4   4847              +       SWAP      D7
569   9:0004C6   3007                      MOVE.W    D7,D0
570   9:0004C8   2E3C00000800              MOVE.L    #T_LENGTH,D7
571   9:0004CE   8EC2                      DIVU      D2,D7
572   9:0004D0   5247                      ADDQ.W    #SHORT-1,D7
573   9:0004D2   0247FFFE                  ANDI.W    #-SHORT,D7
574   9:0004D6   6602                      BNE.S     *+4
575   9:0004D8   7E02                      MOVEQ.L   #SHORT,D7
576   9:0004DA   3D47FFFA                  MOVE.W    D7,T_STEP(A6)
577   9:0004DE   4245                      CLR.W     D5
```

MAKE   NODES

```
579   9:0004E0   DA6EFFFA                    MKND_19 ADD.W    T_STEP(A6),D5
580   9:0004E4   0C450800                    MKND_20 CMPI.W   #T_LENGTH,D5
581   9:0004E8   6C00FE6A                            BGE      MKND_99
582   9:0004EC   3E3C07FE                            MOVE.W   #T_LENGTH-SHORT,D7
583   9:0004F0   9E45                                SUB.W    D5,D7
584   9:0004F2   41F900000000                        LEA.L    TIME_2_TBL,A0
585   9:0004F8   3E307000                            MOVE.W   0(A0,D7.W),D7
586   9:0004FC   CFC0                                MULS     D0,D7
587   9:0004FE   3C305000                            MOVE.W   0(A0,D5.W),D6
588   9:000502   CDC1                                MULS     D1,D6
589   9:000504   9C87                                SUB.L    D7,D6
590   9:000506   41F900000000                        LEA.L    TIME_1_TBL,A0
591   9:00050C   3E2EFFFC                            MOVE.W   Y2_YI(A6),D7
592   9:000510   CFF05000                            MULS     0(A0,D5.W),D7
593   9:000514   DC87                                ADD.L    D7,D6
594   9:000516   E386         +                      ASL.L    #16-TIME$S_SCALE,D6
594   9:000518   4846         +                      SWAP     D6
596   9:00051A   DC51                                ADD.W    (A1),D6
601   9:00051C   3406                                MOVE.W   D6,D2
602   9:00051E   9C6D0020                            SUB.W    PLOT_Y(A5),D6
603   9:000522   6608                                BNE.S    MKND_21
604   9:000524   066E000AFFFA                        ADD.W    #T_INCREMENT,T_STEP(A6)
605   9:00052A   60B4                                BRA      MKND_19
606   9:00052C                            MKND_21 EQU      *
607   9:00052C   6A02         +                      BPL.S    *+4
607   9:00052E   4446         +                      NEG.W    D6
608   9:000530   0C460003                            CMPI.W   #T_TOOFAR,D6
609   9:000534   630C                                BLS.S    MKND_22
610   9:000536   5D6EFFFA                            SUB.W    #T_DECREMENT,T_STEP(A6)
611   9:00053A   6E06                                BGT.S    MKND_22
612   9:00053C   3D7C0002FFFA                        MOVE.W   #SHORT,T_STEP(A6)
```

EP 0 191 134 B1

Module -III-


M A K E   N O D E S

```
614  9:000542  3E3C07FE        MKND_22 MOVE.W  #T_LENGTH-SHORT,D7
615  9:000546  9E45                    SUB.W   D5,D7
616  9:000548  41F900000000            LEA.L   TIME_2_TBL,A0
617  9:00054E  3E307000                MOVE.W  0(A0,D7.W),D7
618  9:000552  CFC4                    MULS    D4,D7
619  9:000554  3C305000                MOVE.W  0(A0,D5.W),D6
620  9:000558  CDC3                    MULS    D3,D6
621  9:00055A  9C87                    SUB.L   D7,D6
622  9:00055C  41F900000000            LEA.L   TIME_1_TBL,A0
623  9:000562  3E2EFFFE                MOVE.W  X2_X1(A6),D7
624  9:000566  CFF05000                MULS    0(A0,D5.W),D7
625  9:00056A  DE86                    ADD.L   D6,D7
626  9:00056C  E387            +       ASL.L   #16-TIME$S_SCALE,D7
626  9:00056E  4847            +       SWAP    D7
631  9:000570  DE690002                ADD.W   MIS_X(A1),D7
633  9:000574  3C02                    MOVE.W  D2,D6
634  9:000576  4EB900000000            JSR     NTRPL8
635  9:00057C  6000FF62                BRA     MKND_19
636
637                                    END
```

```
R e a d o n l y  T i m e  T a b l e s
T i m e  F u n c t i o n #1


TIMETABL       5      T i m e  F u n c t i o n #1
TIMETABL     137      T i m e  F u n c t i o n #2
                                           +
C:000000                                   +         xdef    time_1_tbl,time_2_tbl
C:000000                                           section $C            * Code Section
C:000000                                     time_1_tbl: equ *           * 3*t*t-2*t*t*t  t=0..1023/1024 by 1/1024
C:000000   0000000000000001                    dc.w 0,0,0,1,1,2,3,5
C:000010   000600080009000B                    dc.w 6,8,9,11,13,16,18,21
C:000020   0018001B001E0021                    dc.w 24,27,30,33,37,41,45,49
C:000030   0035003A003E0043                    dc.w 53,58,62,67,72,77,83,88
C:000040   005E0064006A0070                    dc.w 94,100,106,112,119,125,132,139
C:000050   0092009900A100A8                    dc.w 146,153,161,168,176,184,192,201
C:000060   00D100DA00E300EC                    dc.w 209,218,227,236,245,254,264,273
C:000070   011B0125012F013A                    dc.w 283,293,303,314,324,335,346,357
C:000080   0170017B01870192                    dc.w 368,379,391,402,414,426,438,451
C:000090   01CF01DC01E901F6                    dc.w 463,476,489,502,515,528,541,555
C:0000A0   0239024702550263                    dc.w 569,583,597,611,625,640,655,669
C:0000B0   02AC02BC02CB02DA                    dc.w 684,700,715,730,746,762,778,794
C:0000C0   032A033A034B035C                    dc.w 810,826,843,860,876,893,911,928
C:0000D0   03B103C303D503E7                    dc.w 945,963,981,999,1017,1035,1053,1072
C:0000E0   044204550468047B                    dc.w 1090,1109,1128,1147,1166,1186,1205,1225
C:0000F0   04DD04F005050519                    dc.w 1245,1264,1285,1305,1325,1346,1366,1387
C:000100   0580059505AA05C0                    dc.w 1408,1429,1450,1472,1493,1515,1537,1558
C:000110   062C06430659066F                    dc.w 1580,1603,1625,1647,1670,1693,1716,1739
C:000120   06E206F907100728                    dc.w 1762,1785,1808,1832,1856,1879,1903,1927
C:000130   07A007B807D007E9                    dc.w 1952,1976,2000,2025,2050,2075,2100,2125
C:000140   0866087F089908B3                    dc.w 2150,2175,2201,2227,2252,2278,2304,2330
C:000150   0935094F096A0984                    dc.w 2357,2383,2410,2436,2463,2490,2517,2544
C:000160   0A0B0A270A420A5E                    dc.w 2571,2599,2626,2654,2682,2709,2737,2766
C:000170   0AEA0B060B230B3F                    dc.w 2794,2822,2851,2879,2908,2937,2966,2995
C:000180   0BD00BED0C0B0C28                    dc.w 3024,3053,3083,3112,3142,3172,3202,3232
C:000190   0CBE0CDC0CFA0D19                    dc.w 3262,3292,3322,3353,3383,3414,3445,3476
C:0001A0   0DB30DD20DF10E10                    dc.w 3507,3538,3569,3600,3632,3664,3695,3727
C:0001B0   0EAF0ECF0EEF0F0F                    dc.w 3759,3791,3823,3856,3888,3920,3953,3985
C:0001C0   0FB20FD30FF41015                    dc.w 4018,4051,4084,4117,4150,4183,4217,4250
C:0001D0   10BC10DE10FF1121                    dc.w 4284,4318,4351,4385,4419,4453,4488,4522
C:0001E0   11CC11EF12111234                    dc.w 4556,4591,4625,4660,4695,4730,4765,4800
C:0001F0   12E31306132A134D                    dc.w 4835,4870,4906,4941,4977,5012,5048,5084
C:000200   140014241448146C                    dc.w 5120,5156,5192,5228,5265,5301,5338,5374
C:000210   15231548156D1592                    dc.w 5411,5448,5485,5522,5559,5596,5633,5670
C:000220   164C1671169716BD                    dc.w 5708,5745,5783,5821,5858,5896,5934,5972
C:000230   177A17A017C717ED                    dc.w 6010,6048,6087,6125,6163,6202,6241,6279
C:000240   18AE18D518FC1923                    dc.w 6318,6357,6396,6435,6474,6513,6552,6592
C:000250   19E71A0F1A361A5E                    dc.w 6631,6671,6710,6750,6790,6829,6869,6909
C:000260   1B251B4D1B761B9E                    dc.w 6949,6989,7030,7070,7110,7151,7191,7232
C:000270   1C681C911CBA1CE3                    dc.w 7272,7313,7354,7395,7436,7477,7518,7559
C:000280   1DB01DD91E031E2C                    dc.w 7600,7641,7683,7724,7766,7807,7849,7890
C:000290   1EFC1F261F501F7A                    dc.w 7932,7974,8016,8058,8100,8142,8184,8226
C:0002A0   204D207720A220CC                    dc.w 8269,8311,8354,8396,8439,8481,8524,8567
C:0002B0   21A121CC21F72222                    dc.w 8609,8652,8695,8738,8781,8824,8867,8911
C:0002C0   22FA23252351237C                    dc.w 8954,8997,9041,9084,9128,9171,9215,9259
C:0002D0   2456248224AE24DA                    dc.w 9302,9346,9390,9434,9478,9522,9566,9610
C:0002E0   25B625E2260F263B                    dc.w 9654,9698,9743,9787,9831,9876,9920,9965
```

EP 0 191 134 B1

Module -III-

Readonly  Time  Tables
Time  Function #1

```
C:0002F0  271A2746277327A0   dc.w 10010,10054,10099,10144,10188,10233,10278,10323
C:000300  288028AD28DA2907   dc.w 10368,10413,10458,10503,10548,10594,10639,10684
C:000310  29E92A172A442A72   dc.w 10729,10775,10820,10866,10911,10957,11002,11048
C:000320  2B562B832BB12BDF   dc.w 11094,11139,11185,11231,11277,11323,11369,11415
C:000330  2CC52CF32D212D4F   dc.w 11461,11507,11553,11599,11645,11691,11737,11784
C:000340  2E362E642E932EC1   dc.w 11830,11876,11923,11969,12016,12062,12108,12155
C:000350  2FAA2FD830073035   dc.w 12202,12248,12295,12341,12388,12435,12482,12528
C:000360  311F314E317D31AC   dc.w 12575,12622,12669,12716,12763,12810,12857,12904
C:000370  329732C632F53324   dc.w 12951,12998,13045,13092,13139,13186,13234,13281
C:000380  3410343F346F349E   dc.w 13328,13375,13423,13470,13517,13565,13612,13659
C:000390  358B35BA35EA3619   dc.w 13707,13754,13802,13849,13897,13944,13992,14039
C:0003A0  3707373637663796   dc.w 14087,14134,14182,14230,14277,14325,14373,14420
C:0003B0  388438B438E33913   dc.w 14468,14516,14563,14611,14659,14707,14754,14802
C:0003C0  3A023A323A623A91   dc.w 14850,14898,14946,14993,15041,15089,15137,15185
C:0003D0  3B813BB13BE13C11   dc.w 15233,15281,15329,15377,15424,15472,15520,15568
C:0003E0  3D003D303D603D90   dc.w 15616,15664,15712,15760,15808,15856,15904,15952
C:0003F0  3E803EB03EE03F10   dc.w 16000,16048,16096,16144,16192,16240,16288,16336
C:000400  4000403040604090   dc.w 16384,16432,16480,16528,16576,16624,16672,16720
C:000410  418041B041E04210   dc.w 16768,16816,16864,16912,16960,17008,17056,17104
C:000420  4300433043604390   dc.w 17152,17200,17248,17296,17344,17391,17439,17487
C:000430  447F44AF44DF450F   dc.w 17535,17583,17631,17679,17727,17775,17822,17870
C:000440  45FE462E465E468D   dc.w 17918,17966,18014,18061,18109,18157,18205,18252
C:000450  477C47AC47DB480B   dc.w 18300,18348,18395,18443,18491,18538,18586,18634
C:000460  48F9492949584988   dc.w 18681,18729,18776,18824,18871,18919,18966,19014
C:000470  4A754AA54AD44B03   dc.w 19061,19109,19156,19203,19251,19298,19345,19393
C:000480  4BF04C1F4C4E4C7E   dc.w 19440,19487,19534,19582,19629,19676,19723,19770
C:000490  4D694D984DC74DF6   dc.w 19817,19864,19911,19958,20005,20052,20099,20146
C:0004A0  4EE14F104F3E4F6D   dc.w 20193,20240,20286,20333,20380,20427,20473,20520
C:0004B0  5056505850B450E2   dc.w 20566,20613,20660,20706,20752,20799,20845,20892
C:0004C0  51CA51F852275255   dc.w 20938,20984,21031,21077,21123,21169,21215,21261
C:0004D0  533B5369539753C5   dc.w 21307,21353,21399,21445,21491,21537,21583,21629
C:0004E0  54AA54D855065533   dc.w 21674,21720,21766,21811,21857,21902,21948,21993
C:0004F0  561756445671569E   dc.w 22039,22084,22129,22174,22220,22265,22310,22355
C:000500  578057AD57DA5807   dc.w 22400,22445,22490,22535,22580,22624,22669,22714
C:000510  58E659135940596C   dc.w 22758,22803,22848,22892,22937,22981,23025,23070
C:000520  5A4A5A765AA25ACE   dc.w 23114,23158,23202,23246,23290,23334,23378,23422
C:000530  5BAA5BD55C015C2D   dc.w 23466,23509,23553,23597,23640,23684,23727,23771
C:000540  5D065D315D5D5D88   dc.w 23814,23857,23901,23944,23987,24030,24073,24116
C:000550  5E5F5E895EB45EDF   dc.w 24159,24201,24244,24287,24329,24372,24414,24457
C:000560  5FB35FDE60086032   dc.w 24499,24542,24584,24626,24668,24710,24752,24794
C:000570  6104612E61576181   dc.w 24836,24878,24919,24961,25002,25044,25085,25127
C:000580  6250627962A262CB   dc.w 25168,25209,25250,25291,25332,25373,25414,25455
C:000590  639863C063E96411   dc.w 25496,25536,25577,25617,25658,25698,25738,25779
C:0005A0  64DB6503652B6553   dc.w 25819,25859,25899,25939,25978,26018,26058,26097
C:0005B0  661966406668668F   dc.w 26137,26176,26216,26255,26294,26333,26372,26411
C:0005C0  67526779679F67C6   dc.w 26450,26489,26527,26566,26605,26643,26681,26720
C:0005D0  688668AC68D268F8   dc.w 26758,26796,26834,26872,26910,26947,26985,27023
C:0005E0  69B469DA69FF6A24   dc.w 27060,27098,27135,27172,27209,27246,27283,27320
C:0005F0  6ADD6B026B266B4B   dc.w 27357,27394,27430,27467,27503,27540,27576,27612
C:000600  6C006C246C486C6C   dc.w 27648,27684,27720,27756,27791,27827,27862,27898
C:000610  6D1D6D406D636D86   dc.w 27933,27968,28003,28038,28073,28108,28143,28177
C:000620  6E346E566E786E9B   dc.w 28212,28246,28280,28315,28349,28383,28417,28450
C:000630  6F446F666F876FA9   dc.w 28484,28518,28551,28585,28618,28651,28684,28717
```

Module -III-

R e a d o n l y   T i m e   T a b l e s
T i m e   F u n c t i o n #1

```
109  C:000640  704E706F708F70B0    dc.w 28750,28783,28815,28848,28880,28913,28945,28977
110  C:000650  71517171719171B0    dc.w 29009,29041,29073,29104,29136,29168,29199,29230
111  C:000660  724D726C728B72AA    dc.w 29261,29292,29323,29354,29385,29415,29446,29476
112  C:000670  73427360737E739C    dc.w 29506,29536,29566,29596,29626,29656,29685,29715
113  C:000680  7430744D746A7487    dc.w 29744,29773,29802,29831,29860,29889,29917,29946
114  C:000690  75167532754F756B    dc.w 29974,30002,30031,30059,30086,30114,30142,30169
115  C:0006A0  75F57610762B7646    dc.w 30197,30224,30251,30278,30305,30332,30358,30385
116  C:0006B0  76CB76E67700771A    dc.w 30411,30438,30464,30490,30516,30541,30567,30593
117  C:0006C0  779A77B377CC77E5    dc.w 30618,30643,30668,30693,30718,30743,30768,30792
118  C:0006D0  78607879789178A9    dc.w 30816,30841,30865,30889,30912,30936,30960,30983
119  C:0006E0  791E7935794C7963    dc.w 31006,31029,31052,31075,31098,31121,31143,31165
120  C:0006F0  79D479EA79FF7A15    dc.w 31188,31210,31231,31253,31275,31296,31318,31339
121  C:000700  7A807A957AAA7ABE    dc.w 31360,31381,31402,31422,31443,31463,31483,31504
122  C:000710  7B237B377B4B7B5E    dc.w 31523,31543,31563,31582,31602,31621,31640,31659
123  C:000720  7BBE7BD07BE37BF5    dc.w 31678,31696,31715,31733,31751,31769,31787,31805
124  C:000730  7C4F7C607C717C83    dc.w 31823,31840,31857,31875,31892,31908,31925,31942
125  C:000740  7CD67CE67CF67D06    dc.w 31958,31974,31990,32006,32022,32038,32053,32068
126  C:000750  7D547D637D717D80    dc.w 32084,32099,32113,32128,32143,32157,32171,32185
127  C:000760  7DC77DD57DE37DF0    dc.w 32199,32213,32227,32240,32253,32266,32279,32292
128  C:000770  7E317E3D7E4A7E56    dc.w 32305,32317,32330,32342,32354,32366,32377,32389
129  C:000780  7E907E9B7EA67EB1    dc.w 32400,32411,32422,32433,32444,32454,32465,32475
130  C:000790  7EE57EEF7EF87F02    dc.w 32485,32495,32504,32514,32523,32532,32541,32550
131  C:0007A0  7F2F7F377F407F48    dc.w 32559,32567,32576,32584,32592,32600,32607,32615
132  C:0007B0  7F6E7F757F7C7F83    dc.w 32622,32629,32636,32643,32649,32656,32662,32668
133  C:0007C0  7FA27FA87FAD7FB3    dc.w 32674,32680,32685,32691,32696,32701,32706,32710
134  C:0007D0  7FCB7FCF7FD37FD7    dc.w 32715,32719,32723,32727,32731,32735,32738,32741
135  C:0007E0  7FE87FEB7FEE7FF0    dc.w 32744,32747,32750,32752,32755,32757,32759,32760
136  C:0007F0  7FFA7FFB7FFD7FFE    dc.w 32762,32763,32765,32766,32767,32767,32767,32767
```

EP 0 191 134 B1

Readonly Time Tables
Time Function #2

```
C:000800                    time_2 tbl: equ *                 * t*(t-1)*(t-1) t=0..1023/1024 by 1/1024
C:000800  000000200040005F    dc.w 0,32,64,95,127,158,190,221
C:000810  00FC011B013A0158    dc.w 252,283,314,344,375,406,436,466
C:000820  01F0020E022C024A    dc.w 496,526,556,586,615,645,674,703
C:000830  02DC02F903160333    dc.w 732,761,790,819,848,876,905,933
C:000840  03C103DD03F90415    dc.w 961,989,1017,1045,1072,1100,1127,1155
C:000850  049E04B904D404EF    dc.w 1182,1209,1236,1263,1290,1316,1343,1369
C:000860  0573058E05A805C1    dc.w 1395,1422,1448,1473,1499,1525,1551,1576
C:000870  0641065B0674068D    dc.w 1601,1627,1652,1677,1702,1726,1751,1776
C:000880  0708072007390751    dc.w 1800,1824,1849,1873,1897,1920,1944,1968
C:000890  07C707DF07F6080D    dc.w 1991,2015,2038,2061,2084,2107,2130,2153
C:0008A0  0880089608AD08C3    dc.w 2176,2198,2221,2243,2265,2287,2309,2331
C:0008B0  09310946095C0971    dc.w 2353,2374,2396,2417,2439,2460,2481,2502
C:0008C0  09DB09F00A040A19    dc.w 2523,2544,2564,2585,2606,2626,2646,2666
C:0008D0  0A7E0A920AA60ABA    dc.w 2686,2706,2726,2746,2765,2785,2804,2824
C:0008E0  0B1B0B2E0B410B54    dc.w 2843,2862,2881,2900,2919,2937,2956,2974
C:0008F0  0BB10BC30BD50BE7    dc.w 2993,3011,3029,3047,3065,3083,3101,3118
C:000900  0C400C510C630C74    dc.w 3136,3153,3171,3188,3205,3222,3239,3256
C:000910  0CC90CD90CEA0CFA    dc.w 3273,3289,3306,3322,3339,3355,3371,3387
C:000920  0D4B0D5B0D6B0D7A    dc.w 3403,3419,3435,3450,3466,3481,3497,3512
C:000930  0DC70DD60DE50DF4    dc.w 3527,3542,3557,3572,3587,3602,3616,3631
C:000940  0E3D0E4B0E590E68    dc.w 3645,3659,3673,3688,3702,3716,3729,3743
C:000950  0EAD0EBA0EC80ED5    dc.w 3757,3770,3784,3797,3810,3823,3837,3849
C:000960  0F160F230F300F3C    dc.w 3862,3875,3888,3900,3913,3925,3938,3950
```

.

```
R e a d o n l y  T i m e  T a b l e s
T i m e  F u n c t i o n #2
```

.
.
```
162  C:000970  0F7A0F860F920F9E    dc.w 3962,3974,3986,3998,4010,4021,4033,4045
163  C:000980  0FD80FE30FEF0FFA    dc.w 4056,4067,4079,4090,4101,4112,4123,4133
164  C:000990  1030103B10451050    dc.w 4144,4155,4165,4176,4186,4196,4207,4217
165  C:0009A0  1083108D109610A0    dc.w 4227,4237,4246,4256,4266,4275,4285,4294
166  C:0009B0  10D010D910E210EB    dc.w 4304,4313,4322,4331,4340,4349,4358,4366
167  C:0009C0  1117112011281130    dc.w 4375,4384,4392,4400,4409,4417,4425,4433
168  C:0009D0  1159116111691170    dc.w 4441,4449,4457,4464,4472,4480,4487,4495
169  C:0009E0  1196119D11A411AB    dc.w 4502,4509,4516,4523,4530,4537,4544,4551
170  C:0009F0  11CD11D411DB11E1    dc.w 4557,4564,4571,4577,4583,4590,4596,4602
171  C:000A00  12001206120C1212    dc.w 4608,4614,4620,4626,4631,4637,4643,4648
172  C:000A10  122E12331238123D    dc.w 4654,4659,4664,4669,4674,4679,4684,4689
173  C:000A20  1256125B12601264    dc.w 4694,4699,4704,4708,4713,4717,4721,4726
174  C:000A30  127A127E12821286    dc.w 4730,4734,4738,4742,4746,4750,4754,4757
175  C:000A40  1299129D12A012A3    dc.w 4761,4765,4768,4771,4775,4778,4781,4784
176  C:000A50  12B312B612B912BC    dc.w 4787,4790,4793,4796,4799,4802,4804,4807
177  C:000A60  12C912CC12CE12D0    dc.w 4809,4812,4814,4816,4819,4821,4823,4825
178  C:000A70  12DB12DD12DF12E0    dc.w 4827,4829,4831,4832,4834,4836,4837,4839
179  C:000A80  12E812E912EB12EC    dc.w 4840,4841,4843,4844,4845,4846,4847,4848
180  C:000A90  12F112F212F212F3    dc.w 4849,4850,4850,4851,4852,4852,4853,4853
181  C:000AA0  12F612F612F612F6    dc.w 4854,4854,4854,4854,4854,4855,4855,4854
182  C:000AB0  12F612F612F612F6    dc.w 4854,4854,4854,4854,4853,4853,4852,4852
183  C:000AC0  12F312F212F212F1    dc.w 4851,4850,4850,4849,4848,4847,4846,4845
184  C:000AD0  12EC12EB12E912E8    dc.w 4844,4843,4841,4840,4839,4837,4836,4834
185  C:000AE0  12E112DF12DE12DC    dc.w 4833,4831,4830,4828,4826,4824,4822,4820
186  C:000AF0  12D212D012CE12CC    dc.w 4818,4816,4814,4812,4810,4807,4805,4802
187  C:000B00  12C012BD12BB12B8    dc.w 4800,4797,4795,4792,4790,4787,4784,4781
188  C:000B10  12AA12A712A412A1    dc.w 4778,4775,4772,4769,4766,4763,4760,4756
189  C:000B20  1291128E128A1287    dc.w 4753,4750,4746,4743,4739,4736,4732,4728
190  C:000B30  12751271126D1269    dc.w 4725,4721,4717,4713,4709,4705,4701,4697
191  C:000B40  12551251124D1248    dc.w 4693,4689,4685,4680,4676,4672,4667,4663
192  C:000B50  1232122E12291224    dc.w 4658,4654,4649,4644,4640,4635,4630,4625
193  C:000B60  120C1207120211FD    dc.w 4620,4615,4610,4605,4600,4595,4590,4585
194  C:000B70  11E411DE11D911D4    dc.w 4580,4574,4569,4564,4558,4553,4547,4542
195  C:000B80  11B811B211AD11A7    dc.w 4536,4530,4525,4519,4513,4507,4501,4496
196  C:000B90  118A118411 17E1178    dc.w 4490,4484,4478,4472,4465,4459,4453,4447
197  C:000BA0  11591152114C1146    dc.w 4441,4434,4428,4422,4415,4409,4402,4396
198  C:000BB0  1125111E11181111    dc.w 4389,4382,4376,4369,4362,4356,4349,4342
199  C:000BC0  10EF10E810E110DA    dc.w 4335,4328,4321,4314,4307,4300,4293,4286
200  C:000BD0  10B710AF10A810A1    dc.w 4279,4271,4264,4257,4250,4242,4235,4227
201  C:000BE0  107C1074106D1065    dc.w 4220,4212,4205,4197,4190,4182,4174,4167
202  C:000BF0  103F1037102F1028    dc.w 4159,4151,4143,4136,4128,4120,4112,4104
203  C:000C00  10000FF80FF00FE8    dc.w 4096,4088,4080,4072,4064,4056,4047,4039
204  C:000C10  0FBF0FB70FAE0FA6    dc.w 4031,4023,4014,4006,3998,3989,3981,3973
205  C:000C20  0F7C0F740F6B0F63    dc.w 3964,3956,3947,3939,3930,3921,3913,3904
206  C:000C30  0F370F2F0F260F1D    dc.w 3895,3887,3878,3869,3860,3852,3843,3834
207  C:000C40  0EF10EE80EDF0ED6    dc.w 3825,3816,3807,3798,3789,3780,3771,3762
208  C:000C50  0EA90EA00E970E8E    dc.w 3753,3744,3735,3726,3716,3707,3698,3689
209  C:000C60  0E5F0E560E4D0E43    dc.w 3679,3670,3661,3651,3642,3633,3623,3614
210  C:000C70  0E140E0B0E010DF8    dc.w 3604,3595,3585,3576,3566,3557,3547,3538
211  C:000C80  0DC80DBE0DB50DAB    dc.w 3528,3518,3509,3499,3489,3480,3470,3460
212  C:000C90  0D7A0D710D670D5D    dc.w 3450,3441,3431,3421,3411,3401,3391,3382
213  C:000CA0  0D2C0D220D180D0E    dc.w 3372,3362,3352,3342,3332,3322,3312,3302
214  C:000CB0  0CDC0CD20CC80CBE    dc.w 3292,3282,3272,3262,3252,3241,3231,3221
```

Module -III-

R e a d o n l y  T i m e  T a b l e s
T i m e  F u n c t i o n  #2

```
C:000CC0  0C8B0C810C770C6C    dc.w 3211,3201,3191,3180,3170,3160,3150,3140
C:000CD0  0C390C2F0C250C1A    dc.w 3129,3119,3109,3098,3088,3078,3068,3057
C:000CE0  0BE70BDD0BD20BC8    dc.w 3047,3037,3026,3016,3005,2995,2985,2974
C:000CF0  0B940B890B7F0B74    dc.w 2964,2953,2943,2932,2922,2911,2901,2890
C:000D00  0B400B350B2B0B20    dc.w 2880,2869,2859,2848,2838,2827,2817,2806
C:000D10  0AEC0AE10AD70ACC    dc.w 2796,2785,2775,2764,2753,2743,2732,2722
C:000D20  0A970A8D0A820A77    dc.w 2711,2701,2690,2679,2669,2658,2647,2637
C:000D30  0A420A380A2D0A22    dc.w 2626,2616,2605,2594,2584,2573,2562,2552
C:000D40  09ED09E209D809CD    dc.w 2541,2530,2520,2509,2498,2488,2477,2466
C:000D50  0998098D09820978    dc.w 2456,2445,2434,2424,2413,2402,2392,2381
C:000D60  09420938092D0922    dc.w 2370,2360,2349,2338,2328,2317,2306,2296
C:000D70  08ED08E208D808CD    dc.w 2285,2274,2264,2253,2243,2232,2221,2211
C:000D80  0898088D08830878    dc.w 2200,2189,2179,2168,2158,2147,2136,2126
C:000D90  08430839082E0823    dc.w 2115,2105,2094,2083,2073,2062,2052,2041
C:000DA0  07EF07E407DA07CF    dc.w 2031,2020,2010,1999,1989,1978,1968,1957
C:000DB0  079B07900786077B    dc.w 1947,1936,1926,1915,1905,1894,1884,1873
C:000DC0  0747073D07320728    dc.w 1863,1853,1842,1832,1821,1811,1801,1790
C:000DD0  06F406EA06DF06D5    dc.w 1780,1770,1759,1749,1739,1729,1718,1708
C:000DE0  06A20698068D0683    dc.w 1698,1688,1677,1667,1657,1647,1637,1627
C:000DF0  06500646063C0632    dc.w 1616,1606,1596,1586,1576,1566,1556,1546
C:000E00  060005F605EC05E2    dc.w 1536,1526,1516,1506,1496,1486,1476,1466
C:000E10  05B105A7059D0593    dc.w 1457,1447,1437,1427,1417,1407,1398,1388
C:000E20  05620558054F0545    dc.w 1378,1368,1359,1349,1339,1330,1320,1311
C:000E30  0515050B050204F8    dc.w 1301,1291,1282,1272,1263,1253,1244,1234
C:000E40  04C904C004B604AD    dc.w 1225,1216,1206,1197,1188,1178,1169,1160
C:000E50  047E0475046C0463    dc.w 1150,1141,1132,1123,1114,1105,1096,1086
C:000E60  0435042C0423041A    dc.w 1077,1068,1059,1050,1041,1032,1024,1015
C:000E70  03EE03E503DC03D3    dc.w 1006,997,988,979,971,962,953,945
C:000E80  03A8039F0397038E    dc.w 936,927,919,910,902,893,885,876
C:000E90  0364035C0353034B    dc.w 868,860,851,843,835,826,818,810
C:000EA0  0322031903110309    dc.w 802,793,785,777,769,761,753,745
C:000EB0  02E102D902D202CA    dc.w 737,729,722,714,706,698,690,683
C:000EC0  02A3029B0294028C    dc.w 675,667,660,652,645,637,630,622
C:000ED0  0267025F02580251    dc.w 615,607,600,593,586,578,571,564
C:000EE0  022D0226021F0218    dc.w 557,550,543,536,529,522,515,508
C:000EF0  01F501EE01E801E1    dc.w 501,494,488,481,474,468,461,455
C:000F00  01C001BA01B301AD    dc.w 448,442,435,429,422,416,410,403
C:000F10  018D01870181017B    dc.w 397,391,385,379,373,367,361,355
C:000F20  015D01570152014C    dc.w 349,343,338,332,326,320,315,309
C:000F30  0130012A0125011F    dc.w 304,298,293,287,282,277,271,266
C:000F40  0105010000FB00F6    dc.w 261,256,251,246,241,236,231,226
C:000F50  00DD00D800D400CF    dc.w 221,216,212,207,202,198,193,189
C:000F60  00B800B400B000AB    dc.w 184,180,176,171,167,163,159,155
C:000F70  00970093008F008B    dc.w 151,147,143,139,135,131,127,124
C:000F80  007800740071006D    dc.w 120,116,113,109,106,103,99,96
C:000F90  005D005900560053    dc.w 93,89,86,83,80,77,74,71
C:000FA0  00450042003F003D    dc.w 69,66,63,61,58,55,53,50
C:000FB0  0030002E002B0029    dc.w 48,46,43,41,39,37,35,33
C:000FC0  001F001D001B001A    dc.w 31,29,27,26,24,22,21,19
C:000FD0  00120010000F000D    dc.w 18,16,15,13,12,11,10,9
C:000FE0  0008000700060005    dc.w 8,7,6,5,4,4,3,3
C:000FF0  0002000200010001    dc.w 2,2,1,1,0,0,0,0

                              end
```

EP 0 191 134 B1

# L I N E A R - I N T E R P O L A T O R / EXTENDED PRECISION

```
NTRPL8   IDNT    1,0 CURVE FONT LINEAR INTERPOLLATOR
         XDEF    NTRPL8
         XREF    PLOT_INSERT
         XREF    VEKTOR,GERADE        * TO SHOW BUILDING OF CHAR
INSERT   MACRO           INSERT D1
         IFNC    '\1',''
         MOVE.W  \1,D1
         ENDC
         ADD.W   D1,D1
         TST.B   COLOR(A5)
         BEQ.S   *+4
         ADDQ.W  #1,D1
         JSR     PLOT_INSERT
         ENDM
```

LINEAR - INTERPOLATOR / EXTENDED PRECISION

```
9:000000                      +         SECTION $9              * CODE SECTION
9:000000    48A7CC00          NTRPL8    MOVEM.W  D0/D1/D4/D5,-(SP)
9:000004    3A07                        MOVE.W   D7,D5
9:000006    3806                        MOVE.W   D6,D4
9:000008    4A380001                    TST.B    1
9:00000C    673C                        BEQ.S    NTRP1A
9:00000E    48E7FFFE                    MOVEM.L  D0-D7/A0-A6,-(SP)
9:000012    41F900000000                LEA.L    GERADE,A0
9:000018    3E2D0020                    MOVE.W   OLD_RASTER(A5),D7
9:00001C    4447                        NEG.W    D7
9:00001E    DE6D0024                    ADD.W    LN_EM_Y(A5),D7
9:000022    30C7                        MOVE.W   D7,(A0)+
9:000024    3E2D0022                    MOVE.W   OLD_INTERCEPT(A5),D7
9:000028    DE6D0026                    ADD.W    LN_EM_X(A5),D7
9:00002C    30C7                        MOVE.W   D7,(A0)+
9:00002E    3E04                        MOVE.W   D4,D7
9:000030    4447                        NEG.W    D7
9:000032    DE6D0024                    ADD.W    LN_EM_Y(A5),D7
9:000036    30C7                        MOVE.W   D7,(A0)+
9:000038    3E05                        MOVE.W   D5,D7
9:00003A    DE6D0026                    ADD.W    LN_EM_X(A5),D7
9:00003E    3087                        MOVE.W   D7,(A0)
9:000040    4EB900000000                JSR      VEKTOR
9:000046    4CDF7FFF                    MOVEM.L  (SP)+,D0-D7/A0-A6
9:00004A    302D0020          NTRP1A    MOVE.W   OLD_RASTER(A5),D0
9:00004E    9840                        SUB.W    D0,D4
9:000050    6646                        BNE.S    NTRP_4
9:000052    BA6D0022                    CMP.W    OLD_INTERCEPT(A5),D5
9:000056    673A                        BEQ.S    NTRP_0
9:000058    5EC7              ·         SGT      D7
9:00005A    BE2D002F                    CMP.B    INIT_COLOR(A5),D7
9:00005E    56C7                        SNE      D7
9:000060    BE2D002E                    CMP.B    COLOR(A5),D7
9:000064    6728                        BEQ.S    NTRP_3
9:000066    1807                        MOVE.B   D7,D4
9:000068    322D0022                    MOVE.W   OLD_INTERCEPT(A5),D1
9:00006C    D241              +         ADD.W    D1,D1
9:00006E    4A2D002E          +         TST.B    COLOR(A5)
9:000072    6702              +         BEQ.S    *+4
9:000074    5241              +         ADDQ.W   #1,D1
9:000076    4EB900000000      +         JSR      PLOT_INSERT
9:00007C    1B44002E                    MOVE.B   D4,COLOR(A5)
9:000080    600C                        BRA.S    NTRP_3
9:000082    3E1F              NTRP_1    MOVE.W   (SP)+,D7
9:000084    4CDF000C                    MOVEM.L  (SP)+,D2/D3
9:000088    D047              NTRP_2    ADD.W    D7,D0
9:00008A    3B400020                    MOVE.W   D0,OLD_RASTER(A5)
9:00008E    3B450022          NTRP_3    MOVE.W   D5,OLD_INTERCEPT(A5)
9:000092    4C9F0033          NTRP_0    MOVEM.W  (SP)+,D0/D1/D4/D5
9:000096    4E75                        RTS
```

EP 0 191 134 B1

Module -IV-

L I N E A R - I N T E R P O L A T O R / EXTENDED PRECISION

```
67   9:000098   5EC7                   NTRP_4   SGT        D7
68   9:00009A   BE2D002E                        CMP.B      COLOR(A5),D7
69   9:00009E   6714                             BEQ.S      NTRP_5
70   9:0000A0   322D0022          +             MOVE.W     OLD_INTERCEPT(A5),D1
70   9:0000A4   D241              +             ADD.W      D1,D1
70   9:0000A6   4A2D002E          +             TST.B      COLOR(A5)
70   9:0000AA   6702              +             BEQ.S      *+4
70   9:0000AC   5241              +             ADDQ.W     #1,D1
70   9:0000AE   4EB900000000      +             JSR        PLOT_INSERT
71   9:0000B4   7E01                   NTRP_5   MOVEQ.L    #1,D7
72   9:0000B6   3C04                             MOVE.W     D4,D6
73   9:0000B8   5DED002E                         SLT        COLOR(A5)
74   9:0000BC   6C04                             BGE.S      NTRP_6
75   9:0000BE   4446                             NEG.W      D6
76   9:0000C0   7EFF                             MOVEQ.L    #-1,D7
77   9:0000C2   0C460001               NTRP_6   CMP.W      #1,D6
78   9:0000C6   67C0                             BEQ        NTRP_2
79   9:0000C8   48E73000                         MOVEM.L    D2/D3,-(SP)
80   9:0000CC   3F07                             MOVE.W     D7,-(SP)
81   9:0000CE   3405                             MOVE.W     D5,D2
82   9:0000D0   946D0022                         SUB.W      OLD_INTERCEPT(A5),D2
83   9:0000D4   48C2                             EXT.L      D2
84   9:0000D6   3202                             MOVE.W     D2,D1
85   9:0000D8   6A02              +             BPL.S      *+4
85   9:0000DA   4441              +             NEG.W      D1
86   9:0000DC   7E04                             MOVEQ.L    #4,D7
87   9:0000DE   760D                             MOVEQ.L    #12+1,D3
88   9:0000E0   5343                   NTRP_7   SUBQ.W     #1,D3
89   9:0000E2   6706                             BEQ.S      NTRP_8
90   9:0000E4   DE47                             ADD.W      D7,D7
91   9:0000E6   BE41                             CMP.W      D1,D7
92   9:0000E8   63F6                             BLS        NTRP_7
93   9:0000EA   0C460002               NTRP_8   CMP.W      #2,D6
94   9:0000EE   671E                             BEQ.S      NTRP_11
95   9:0000F0   0C460004                         CMP.W      #4,D6
96   9:0000F4   6718                             BEQ.S      NTRP_11
97   9:0000F6   7E02                             MOVEQ.L    #2,D7
98   9:0000F8   5243                   NTRP_9   ADDQ.W     #1,D3
99   9:0000FA   0C43000F                         CMP.W      #15,D3
100  9:0000FE   6C06                             BGE.S      NTRP_10
101  9:000100   DE47                             ADD.W      D7,D7
102  9:000102   BE46                             CMP.W      D6,D7
103  9:000104   63F2                             BLS        NTRP_9
104  9:000106   E7A2                   NTRP_10  ASL.L      D3,D2
105  9:000108   85C6                             DIVS       D6,D2
106  9:00010A   48C2                             EXT.L      D2
107  9:00010C   6006                             BRA.S      NTRP_12
```

EP 0 191 134 B1

L I N E A R - I N T E R P O L A T O R / EXTENDED PRECISION

```
109   9:00010E   E7A2                    NTRP_11   ASL.L     D3,D2
110   9:000110   E246                              ASR.W     #1,D6
111   9:000112   D646                              ADD.W     D6,D3
112   9:000114   3C2D0022                NTRP_12   MOVE.W    OLD_INTERCEPT(A5),D6
113   9:000118   48C6                              EXT.L     D6
114   9:00011A   E7A6                              ASL.L     D3,D6
115   9:00011C   9857                    NTRP_13   SUB.W     (SP),D4
116   9:00011E   6700FF62                          BEQ       NTRP_1
117   9:000122   D057                              ADD.W     (SP),D0
118   9:000124   DC82                              ADD.L     D2,D6
119   9:000126   2E06                              MOVE.L    D6,D7
120   9:000128   E6A7                              ASR.L     D3,D7
121   9:00012A   3207              +               MOVE.W    D7,D1
121   9:00012C   D241              +               ADD.W     D1,D1
121   9:00012E   4A2D002E          +               TST.B     COLOR(A5)
121   9:000132   6702              +               BEQ.S     *+4
121   9:000134   5241              +               ADDQ.W    #1,D1
121   9:000136   4EB900000000      +               JSR       PLOT_INSERT
122   9:00013C   60DE                              BRA       NTRP_13
123
124                                                END
```

Module -V-

PLOTQUEUE INSERT, OUTPUT, CLEAR, & CHECK

```
                    PLOTQ    IDNT    1,0 CURVE FONT RASTER SORTING SYSTEM
                             INCLUDE RCHPAR
                    *    STRUKTUR DES PASCAL-PARAMETERBLOCKS
                    *    ------------------------------------
                    *
00000000                     OFFSET   0
00000000            RCHPAR   EQU      *
00000000            CHARJOB  DS.W     1            AUFTRAGSART: 0=SYSTEM-INIT,1=JOB-INIT
                    *                                           2=ZEICHEN-INIT
00000002            JOBPARBL EQU      *            JOB-PARAMETER
00000002            AUFLX    DS.W     1
00000004            AUFLY    DS.W     1
00000006            ZOOMP    DS.W     1
                    *
00000008            ZEITAB   EQU      *            ZEICHEN-PARAMETER
00000008            C2       DS.W     1
0000000A            FONADR   DS.L     1
0000000E            MCBADR   DS.L     1            POINTER AUF MCB
00000012            ERRORNR  DS.W     1            SYSTEM-ERRORNUMMER
                    *
                    *
                    *
                    *    DATENTYPEN FUER MEMO-CONTROL-BLOCK
                    *    ------------------------------------
00000000                     OFFSET   0
                    *
00000000            MCKENN   EQU      *
00000000            V90G     DS.B     1
00000001            EQUCHK   DS.B     1            FUER SCAN
00000002            CFKENN   DS.W     1            FONTLOC/FORM-KENNUNG
00000004            FONTNR   DS.W     1            FONTNR/LAUFENDE FORM-NR
00000006            SG       DS.W     1            SCHRIFTGRAD
00000008            CE       DS.W     1            CONDENSED-EXPAND
                    * HIER MUESSEN DANN SLANT_WIN,ROT_WIN REIN
                    *
0000000A            OPCL     DS.W     1
0000000C            CHAR_OFF DS.W     1            ABSTAND IN MI'S REL-YNULL->ZEICHENOBERKANTE
0000000E            BASE_OFF DS.W     1               "       "     ZEICHENOBERKANTE->SCHRIFTLINIE
00000010            SCANCT   DS.L     1               "       "           "         -> -UNTERKANTE
00000014            IPADR    DS.L     1            POINTER AUF MEMEO-SEGMENT
00000018            SEG_LAEN DS.W     1            MEMOSEGMENT-LAENGE IN WORTEN
0000001A            MEM_LAEN DS.L     1
                    *        ERROR NUMBERS
0000001E            BUFOVER  SET      30
00000011            FONTERR  SET      17
0000004B            PARERR   SET      75
```

EP 0 191 134 B1

PLOTQUEUE INSERT, OUTPUT, CLEAR, & CHECK

```
            +
00008000              END_RASTER    EQU    $8000
00000000              MEMO_II SET    FALSE
0000DFFF              BLANK_RASTER   EQU    $DFFF
0000DFFE              END_MEMO       EQU    $DFFE

00000000    +         PQ$V_LINE:     SET    0                LINE NUMBER OF SEGMENT
00000008    +         PQ$S_LINE:     SET    8
000000FF    +         PQ$M_LINE:     SET    (1<<8-1)<<0
00000008    +         PQ$V_SGMNT:    SET    PQ$S_LINE             SEGMENT NUMBER FROM RASTER
00000008    +         PQ$S_SGMNT:    SET    (16-PQ$S_LINE)
0000FF00    +         PQ$M_SGMNT:    SET    (1<<(16-PQ$S_LINE)-1)<<PQ$S_LINE

00000000    +         PQL$V_ENTRIES: SET    0            * MASK  FOR NUMBER OF LINE ENTRIES
00000003    +         PQL$S_ENTRIES: SET    3
00000007    +         PQL$M_ENTRIES: SET    (1<<3-1)<<0
00000006              PQL$K_ENTRIES  SET    6
7:000000    +                 SECTION $7            * DATA SECTION
00000100              PQQ$K_ENTRIES  SET    1<<PQ$S_SGMNT
7:000000 0000000000000000   PQQ$L_SEGMENT  DCB.L  PQQ$K_ENTRIES,0
7:000400              PDON_SP        DS.L   1
7:000404              MEMO_LENGTH    DS.L   1

00000000                      OFFSET 0
00000100              PQS$K_ENTRIES  SET    1<<PQ$S_LINE
00000000 0000000000000000   PQS$B_COUNT    DCB.B  PQS$K_ENTRIES,0
00000100 0000000000000000   PQS$L_LINE     DCB.L  PQS$K_ENTRIES,0
00000500              PQS$K_LENGTH   SET    *

00000000                      OFFSET 0
00000000 00000001     PQL$L_PTR      DC.L   1
00000004 0000000000000000   PQL$W_VALUES   DCB.W  PQL$K_ENTRIES,0
00000010              PQL$K_LENGTH   SET    *
```

DEFINITIONS

```
+
*          MACROS TO HANDLE SEGMENT TABLES
*
THIS_SEGMENT    MACRO
                MOVE.W  D0,D7
                LSR.W   #PQ$V_SGMNT,D7
                INDEX.W LONG,D7
                LEA.L   PQQ$L_SEGMENT,A0
                LEA.L   0(A0,D7.W),A2
                MOVE.L  (A2),D7
                ENDM

THIS_LINE       MACRO                   THIS_LINE REG_STORE
                MOVE.W  D0,D7
                ANDI.W  #PQ$M_LINE,D7
                INDEX.W LONG,D7
                IFEQ    PQS$L_LINE&$FFFFFF80
                LEA.L   PQS$L_LINE(A2,D7.W),A0
                MOVE.L  (A0),\1
                MEXIT
                ENDC
                LEA.L   PQS$L_LINE(A2),A0
                LEA.L   0(A0,D7.W),A0
                MOVE.L  (A0),\1
                ENDM
```

EP 0 191 134 B1

M A C R O S

```
THIS_COUNT      MACRO              THIS_COUNT REGISTER(OPTIONAL)
        MOVE.W  D0,D7
        ANDI.W  #PQ$M_LINE,D7
        INDEX.W BYTE,D7
         IFEQ   PQS$B_COUNT&$FFFFFF80
        LEA.L   PQS$B_COUNT(A2,D7.W),A0
         ENDC
         IFNE   PQS$B_COUNT&$FFFFFF80
        LEA.L   PQS$B_COUNT(A2),A0
        LEA.L   0(A0,D7.W),A0
         ENDC
         IFNC   '\1',''
        MOVE.B  (A0),\1
         ENDC
        ENDM

INTO_MEMO       MACRO              INTO_MEMO VALUE
        ADDQ.L  #1,D5
        SUBQ.L  #SHORT,D6
        IFC     '\0','S'
        BGE.S   *+4
        ENDC
        IFNC    '\0','S'
        BGE.S   *+6
        ENDC
        BSR.\0  MORE_MEMO
        MOVE.W  \1,(A4)+
        ENDM
```

Module -V-


# M A C R O S

```
            INCLUDE STORMAC
*       M A C R O   F O R   M E M O R Y   A L L O C A T I O N
*
ONLY1AREA: SET TRUE                    * IF ONLY 1 AREA

            XREF    AALLOC
            XREF    AFREE

GETMAIN: MACRO                 GETMAIN.QUAL SIZE,<COMMENT>
            MAINSIZE.\0 \1,<** \2>
            JSR     AALLOC              *  *GET A BLOCK FROM THE POOL
            ENDM

FREEMAIN: MACRO                FREEMAIN.QUAL SIZE,PTR,<COMMENT>
            IFC     '\2','A0'
* ADDRESS TO FREE IN LONGWORD A0
            ENDC
            IFNC    '\2','A0'
             IFC    '\2','D7'
            MOVE.L  D7,A0               ** \3
             ENDC
             IFNC   '\2','D7'
            LEA.L   (\2),A0             ** \3
             ENDC
            ENDC
            MAINSIZE.\0 \1,<* *>
            JSR     AFREE               ** RETURN BLOCK TO POOL
            ENDM

*       .L= LONG REFERENCE       .W= SHORT REFERENCE
*       .S= SHORT VALUE IN D7    .= BY VALUE
MAINSIZE:   MACRO                      MAINSIZE.QUAL SIZE,<COMMENT>
            IFC     '\0','S'
            EXT.L   D7                  \2
            MEXIT
            ENDC
            IFC     '\1',''
* MEMORY REQUEST LENGTH GIVEN IN LONGWORD D7
            MEXIT
            ENDC
            IFC     '\0',''
            MOVE.L  #\1,D7  \2
            MEXIT
            ENDC
            IFC     '\0','L'
            MOVE.L  \1,D7               \2
            MEXIT
            ENDC
            MOVEQ.L #0,D7
            MOVE.W  \1,D7               \2
            ENDM
```

00000001

EP 0 191 134 B1

## P L O T   C H E C K

```
9:000000            *         P L O T _ C H E C K
                    *
                    XDEF      PLOT_CHECK
9:000000          + SECTION   $9              * CODE SECTION
          PLOT_CHECK EQU      *
9:000000    4852    PEA       (A2)
9:000002    3E00  + MOVE.W    D0,D7
9:000004    E04F  + LSR.W     #PQ$V_SGMNT,D7
9:000006    E54F  + LSL.W     #2,D7
9:000008  41F900000000 + LEA.L  PQQ$L_SEGMENT,A0
9:00000E  45F07000  + LEA.L   0(A0,D7.W),A2
9:000012    2E12  + MOVE.L    (A2),D7
9:000014    6714    BEQ.S     PCHK_1
9:000016    2447    MOVE.L    D7,A2
9:000018    3E00    MOVE.W    D0,D7
9:00001A  024700FF  + ANDI.W  #PQ$M_LINE,D7
                  + * D7 ALREADY INDEX TO CHAR
9:00001E  41F27000  + LEA.L   PQS$B_COUNT(A2,D7.W),A0
9:000022  08100000    BTST    #0,(A0)
9:000026    6702    BEQ.S     PCHK_1
9:000028    6104    BSR.S     PLOT_INSERT
9:00002A    245F  PCHK_1 MOVE.L  (SP)+,A2
9:00002C    4E75    RTS
```

EP 0 191 134 B1

P L O T    I N S E R T

```
                                              *        P L O T _ I N S E R T
                                              *
                                                       XDEF      PLOT_INSERT
      9:00002E                           +          .  SECTION   $9              * CODE SECTION
      9:00002E                           PLOT_INSERT EQU *
      9:00002E    48E70030                            MOVEM.L A3/A2,-(SP)
      9:000032    48A73000                            MOVEM.W D2/D3,-(SP)
      9:000036    41ED001A                            LEA.L   MIN_INTERCEPT(A5),A0
      9:00003A    B250                                CMP.W   (A0),D1
      9:00003C    6C02                                BGE.S   PINS_1
      9:00003E    3081                                MOVE.W  D1,(A0)
      9:000040                           PINS_1   EQU     *
      9:000040    5888                    +          ADDQ.L  #MAX_INTERCEPT-MIN_INTERCEPT,A0
      9:000042    B250                                CMP.W   (A0),D1
      9:000044    6F02                                BLE.S   PINS_2
      9:000046    3081                                MOVE.W  D1,(A0)
      9:000048                           PINS_2   EQU     *
      9:000048    5D88                    +          SUBQ.L  #-(MIN_RASTER-MAX_INTERCEPT),A0
      9:00004A    B050                                CMP.W   (A0),D0
      9:00004C    6C02                                BGE.S   PINS_3
      9:00004E    3080                                MOVE.W  D0,(A0)
      9:000050                           PINS_3   EQU     *
      9:000050    5888                    +          ADDQ.L  #MAX_RASTER-MIN_RASTER,A0
      9:000052    B050                                CMP.W   (A0),D0
      9:000054    6F02                                BLE.S   PINS_4
      9:000056    3080                                MOVE.W  D0,(A0)
      9:000058                           PINS_4   EQU     *
      9:000058    3E00                    +          MOVE.W  D0,D7
      9:00005A    E04F                    +          LSR.W   #PQ$V_SGMNT,D7
      9:00005C    E54F                    +          LSL.W   #2,D7
      9:00005E    41F900000000            +          LEA.L   PQQ$L_SEGMENT,A0
      9:000064    45F07000                +          LEA.L   0(A0,D7.W),A2
      9:000068    2E12                    +          MOVE.L  (A2),D7
      9:00006A    661A                                BNE.S   PINS_6
      9:00006C    2E3C00000500            +          MOVE.L  #PQS$K_LENGTH,D7        **
      9:000072    4EB900000000            +          JSR     AALLOC             * *GET A BLOCK FROM THE POOL
      9:000078    2487                                MOVE.L  D7,(A2)
      9:00007A    2047                                MOVE.L  D7,A0
      9:00007C    343C0500                            MOVE.W  #PQS$K_LENGTH,D2
      9:000080    4298                                CLR.L   (A0)+
      9:000082    5942                                SUBQ.W  #LONG,D2
      9:000084    66FA                                BNE     *-4
```

Module -V-

P L O T    I N S E R T

```
9:000086  2447          PINS_6   MOVE.L   D7,A2
9:000088  3E00                 + MOVE.W   D0,D7
9:00008A  024700FF             + ANDI.W   #PQ$M_LINE,D7
                               + * D7 ALREADY INDEX TO CHAR
9:00008E  41F27000             + LEA.L    PQS$B_COUNT(A2,D7.W),A0
9:000092  1410                 + MOVE.B   (A0),D2
9:000094  4850                   PEA      (A0)
9:000096  3E00                 + MOVE.W   D0,D7
9:000098  024700FF             + ANDI.W   #PQ$M_LINE,D7
9:00009C  E54F                 + LSL.W    #2,D7
9:00009E  41EA0100             + LEA.L    PQS$L_LINE(A2),A0
9:0000A2  41F07000             + LEA.L    0(A0,D7.W),A0
9:0000A6  2650                 + MOVE.L   (A0),A3
9:0000A8  3602                   MOVE.W   D2,D3
9:0000AA  02430007               ANDI.W   #PQL$M_ENTRIES,D3
9:0000AE  670E                   BEQ.S    PINS_7
9:0000B0  D643                 + ADD.W    D3,D3
9:0000B2  41F33004               LEA.L    PQL$W_VALUES(A3,D3.W),A0
9:0000B6  08030001               BTST     #1,D3
9:0000BA  671A                   BEQ.S    PINS_8
9:0000BC  6020                   BRA.S    PINS_9

9:0000BE  2448          PINS_7   MOVE.L   A0,A2
9:0000C0  7E10                 + MOVE.L   #PQL$K_LENGTH,D7      ** ALLOCATE NEW LINE
9:0000C2  4EB900000000         + JSR      AALLOC               * *GET A BLOCK FROM THE POOL
9:0000C8  CF8B                   EXG      D7,A3
9:0000CA  2687                   MOVE.L   D7,(A3)
9:0000CC  248B                   MOVE.L   A3,(A2)
9:0000CE  343C000E               MOVE.W   #1<<PQL$S_ENTRIES+PQL$K_ENTRIES,D2
9:0000D2  41EB0010               LEA.L    PQL$K_ENTRIES*SHORT+PQL$W_VALUES(A3),A0
9:0000D6  3E01          PINS_8   MOVE.W   D1,D7
9:0000D8  5247                   ADDQ.W   #1,D7
9:0000DA  3147FFFC               MOVE.W   D7,-2*SHORT(A0)
9:0000DE  3101          PINS_9   MOVE.W   D1,-(A0)
9:0000E0  205F                   MOVE.L   (SP)+,A0
9:0000E2  5302                   SUBQ.B   #1,D2
9:0000E4  1082                   MOVE.B   D2,(A0)
9:0000E6  4C9F000C               MOVEM.W  (SP)+,D2/D3
9:0000EA  4CDF0C00               MOVEM.L  (SP)+,A3/A2
9:0000EE  4E75                   RTS
```

Module -V-

P L O T   D O N E

```
                          *      P L O T _ D O N E
                          *
                          XDEF     PLOT_DONE
                          XREF     MEWA,M_NEXT,M_KILL,PCHPAR,PASCAL_REGISTERS
   9:0000F0              +SECTION  $9             * CODE SECTION
   9:0000F0     PLOT_DONE EQU      *
   9:0000F0   48E7067A             MOVEM.L  D5/D6/A6/A2/A3/A4/A1,-(SP)
   9:0000F4   48A7F800             MOVEM.W  D2/D3/D1/D0/D4,-(SP)
   9:0000F8   23CF00000400         MOVE.L   SP,PDON_SP
   9:0000FE   4A2D002D             TST.B    LOOP_NOT_CLOSED(A5)
   9:000102   660001FA             BNE      PDON_30
   9:000106   4285                 CLR.L    D5
   9:000108   9DCE                 SUB.L    A6,A6
   9:00010A   287900000000         MOVE.L   PCHPAR,A4
   9:000110   286C000E             MOVE.L   MCBADR(A4),A4
   9:000114   4286                 CLR.L    D6
   9:000116   3C2C0018             MOVE.W   SEG_LAEN(A4),D6
   9:00011A   5386                 SUBQ.L   #1,D6
   9:00011C   DC86                +ADD.L    D6,D6
   9:00011E   23C600000404         MOVE.L   D6,MEMO_LENGTH
   9:000124   286C0014             MOVE.L   IPADR(A4),A4
   9:000128   302D001C             MOVE.W   MAX_RASTER(A5),D0
   9:00012C   3800                 MOVE.W   D0,D4
   9:00012E   5240                 ADDQ.W   #1,D0
   9:000130   5340         PDON_1  SUBQ.W   #1,D0
   9:000132   B06D0018             CMP.W    MIN_RASTER(A5),D0
   9:000136   6D1A                 BLT.S    PDON_2
   9:000138   3E00                +MOVE.W   D0,D7
   9:00013A   E04F                +LSR.W    #PQ$V_SGMNT,D7
   9:00013C   E54F                +LSL.W    #2,D7
   9:00013E   41F900000000        +LEA.L    PQQ$L_SEGMENT,A0
   9:000144   45F07000            +LEA.L    0(A0,D7.W),A2
   9:000148   2E12                +MOVE.L   (A2),D7
   9:00014A   666C                 BNE.S    PDON_5
   9:00014C   0240FF00             ANDI.W   #PQ$M_SGMNT,D0
   9:000150   60DE                 BRA      PDON_1
```

EP 0 191 134 B1

Module -V-


P L O T    D O N E


```
                              ***STO-A
                              ***PDON_2   MOVE.W   D4,MIN_RASTER(A5)
        9:000152              PDON_2  EQU       *
                              ***STO-E
        9:000152  5486                ADDQ.L    #SHORT,D6
        9:000154  5285        +       ADDQ.L    #1,D5
        9:000156  5586        +       SUBQ.L    #SHORT,D6
        9:000158  6C04        +       BGE.S     *+6
        9:00015A  61000168    +       BSR.L     MORE_MEMO
        9:00015E  38FCDFFE    +       MOVE.W    #END_MEMO,(A4)+
        9:000162  610001E4            BSR       RELEASE_QUEUE
                              ***STO-A
        9:000166  3B440018            MOVE.W    D4,MIN_RASTER(A5)
                              ***STO-E
        9:00016A  E0ED001A            ASR.W     MIN_INTERCEPT(A5)
        9:00016E  6404                BCC.S     PDON_3
        9:000170  536D001E            SUBQ.W    #1,MAX_INTERCEPT(A5)
        9:000174  E0ED001E    PDON_3  ASR.W     MAX_INTERCEPT(A5)
        9:000178  207900000000        MOVE.L    PCHPAR,A0
        9:00017E  2068000E            MOVE.L    MCBADR(A0),A0
        9:000182  2145001A            MOVE.L    D5,MEM_LAEN(A0)
        9:000186  3E2D0024            MOVE.W    LN_EM_Y(A5),D7
        9:00018A  9E6D001C            SUB.W     MAX_RASTER(A5),D7
        9:00018E  3147000C            MOVE.W    D7,CHAR_OFF(A0)
        9:000192  3E2D001C            MOVE.W    MAX_RASTER(A5),D7
        9:000196  3147000E            MOVE.W    D7,BASE_OFF(A0)
        9:00019A  3C2D0018            MOVE.W    MIN_RASTER(A5),D6
        9:00019E  48C7                EXT.L     D7
        9:0001A0  48C6                EXT.L     D6
        9:0001A2  9E86                SUB.L     D6,D7
        9:0001A4  21470010            MOVE.L    D7,SCANCT(A0)
        9:0001A8  2E7900000400 PDON_4 MOVE.L    PDON_SP,SP
        9:0001AE  4C9F001F            MOVEM.W   (SP)+,D2/D3/D1/D0/D4
        9:0001B2  4CDF5E60            MOVEM.L   (SP)+,D5/D6/A6/A2/A3/A4/A1
        9:0001B6  4E75                RTS
```

Module -V-

## PLOT DONE

```
9:0001B8  2447           PDON_5  MOVE.L  D7,A2
9:0001BA  3E00         +         MOVE.W  D0,D7
9:0001BC  024700FF     +         ANDI.W  #PQ$M_LINE,D7
                       +  * D7 ALREADY INDEX TO CHAR
9:0001C0  41F27000     +         LEA.L   PQS$B_COUNT(A2,D7.W),A0
9:0001C4  1410         +         MOVE.B  (A0),D2
9:0001C6  6700FF68               BEQ     PDON_1
9:0001CA  3E00         +         MOVE.W  D0,D7
9:0001CC  024700FF     +         ANDI.W  #PQ$M_LINE,D7
9:0001D0  E54F         +         LSL.W   #2,D7
9:0001D2  41EA0100     +         LEA.L   PQS$L_LINE(A2),A0
9:0001D6  41F07000     +         LEA.L   0(A0,D7.W),A0
9:0001DA  2650         +         MOVE.L  (A0),A3
                          ***STO-A
9:0001DC  4290                   CLR.L   (A0)
                          ***STO-E
9:0001DE  4243                   CLR.W   D3
9:0001E0  02420006               ANDI.W  #PQL$M_ENTRIES&-2,D2
9:0001E4  D442         +         ADD.W   D2,D2
9:0001E6  45F32004               LEA.L   PQL$W_VALUES(A3,D2.W),A2
9:0001EA  0442000C               SUBI.W  #PQL$K_ENTRIES*SHORT,D2
9:0001EE  9642                   SUB.W   D2,D3
9:0001F0  2F1A                   MOVE.L  (A2)+,-(SP)
9:0001F2  5842                   ADDQ.W  #LONG,D2
9:0001F4  66FA                   BNE.S   *-4
9:0001F6               PDON_6    EQU     *
9:0001F6  2453                   MOVE.L  (A3),A2
9:0001F8  41D3         +         LEA.L   (A3),A0           **
9:0001FA  7E10         +         MOVE.L  #PQL$K_LENGTH,D7  * *
9:0001FC  4EB900000000 +         JSR     AFREE             ** RETURN BLOCK TO POOL
9:000202  2E0A                   MOVE.L  A2,D7
9:000204  6712                   BEQ.S   PDON_7
9:000206  2647                   MOVE.L  D7,A3
9:000208  45EB0004               LEA.L   PQL$W_VALUES(A3),A2
9:00020C  0643000C               ADDI.W  #PQL$K_ENTRIES*SHORT,D3
9:000210  2F1A                   MOVE.L  (A2)+,-(SP)
9:000212  2F1A                   MOVE.L  (A2)+,-(SP)
9:000214  2F1A                   MOVE.L  (A2)+,-(SP)
9:000216  60DE                   BRA     PDON_6
9:000218  224F         PDON_7    MOVE.L  SP,A1
9:00021A  3E03                   MOVE.W  D3,D7
9:00021C  5547                   SUBQ.W  #SHORT,D7
9:00021E  3F07                   MOVE.W  D7,-(SP)
9:000220  4267                   CLR.W   -(SP)
9:000222  610001BE               BSR     QUICK_SORT
9:000226  588F         +         ADDQ.L  #2*SHORT,SP
9:000228  322D001A               MOVE.W  MIN_INTERCEPT(A5),D1
9:00022C  02410001               AND.W   #1,D1
9:000230               PDON_8    EQU     *
9:000230  3E1F                   MOVE.W  (SP)+,D7
9:000232  9E41                   SUB.W   D1,D7
9:000234  E247                   ASR.W   #1,D7
9:000236  6404                   BCC.S   PDON_9
```

EP 0 191 134 B1

Module -V-

P L O T   D O N E

```
317  9:000238  5342              SUBQ.W  #1,D2
318  9:00023A  6008              BRA.S   PDON_11
```

P L O T   D O N E

```
320  9:00023C  4A42              PDON_9   TST.W    D2
321  9:00023E  6602                       BNE.S    PDON_10
322  9:000240  3447                       MOVE.W   D7,A2
323  9:000242  5242              PDON_10  ADDQ.W   #1,D2
324  9:000244                    PDON_11  EQU      *
325  9:000244  3E1F                       MOVE.W   (SP)+,D7
326  9:000246  9E41                       SUB.W    D1,D7
327  9:000248  E247                       ASR.W    #1,D7
328  9:00024A  6504                       BCS.S    PDON_12
329  9:00024C  5242                       ADDQ.W   #1,D2
330  9:00024E  603A                       BRA.S    PDON_15
331  9:000250  5342              PDON_12  SUBQ.W   #1,D2
332  9:000252  6636                       BNE.S    PDON_15
333  9:000254  BE4A                       CMP.W    A2,D7
334  9:000256  6F32                       BLE.S    PDON_15
335  9:000258  3407                       MOVE.W   D7,D2
336  9:00025A  B044                       CMP.W    D4,D0
337  9:00025C  6714                       BEQ.S    PDON_14
349  9:00025E  5344              PDON_13  SUBQ.W   #1,D4
350  9:000260  B044                       CMP.W    D4,D0
351  9:000262  670E                       BEQ.S    PDON_14
352  9:000264  5285          +            ADDQ.L   #1,D5
352  9:000266  5586          +            SUBQ.L   #SHORT,D6
352  9:000268  6C02          +            BGE.S    *+4
352  9:00026A  6158          +            BSR.S    MORE_MEMO
352  9:00026C  38FCDFFF      +            MOVE.W   #BLANK_RASTER,(A4)+
353  9:000270  60EC                       BRA      PDON_13
```

EP 0 191 134 B1

P L O T   D O N E

```
                    PDON_14 EQU       *
                            ADDQ.L    #1,D5
          5285    +         SUBQ.L    #SHORT,D6
          5586    +         BGE.S     *+4
          6C02    +         BSR.S     MORE_MEMO
          614A    +         MOVE.W    A2,(A4)+
          38CA    +         ADDQ.L    #1,D5
          5285    +         SUBQ.L    #SHORT,D6
          5586    +         BGE.S     *+4
          6C02    +         BSR.S     MORE_MEMO
          6140    +         MOVE.W    D2,(A4)+
          38C2    +         MOVE.L    A4,A6
          2C4C              CLR.W     D2
          4242    PDON_15   SUBQ.W    #2*SHORT,D3
          5943              BNE       PDON_8
          66A2              MOVE.L    A6,D7
          2E0E              BEQ.S     PDON_18
          672A              LEA       -SHORT(A6),A0
          41EEFFFE          MOVE.W    #$E000,D7
          3E3CE000          AND.W     (A0),D7
          CE50              CMPI.W    #END_MEMO&$E000,D7
          0C47C000          BEQ.S     PDON_16
          6706              BHI.S     PDON_17
          6208              ORI.W     #END_RASTER,(A0)
          00508000  PDON_16 BRA       PDON_1
          6000FE86  PDON_17 EQU       *
                            ADDQ.L    #1,D5
          5285    +         SUBQ.L    #SHORT,D6
          5586    +         BGE.S     *+4
          6C02    +         BSR.S     MORE_MEMO
          6110    +         MOVE.W    #BLANK_RASTER,(A4)+
          38FCDFFF +        MOVE.L    A4,A6
          2C4C              BRA       PDON_16
          60EC      PDON_18 SUBQ.W    #1,D4
          5344              MOVE.W    D4,MAX_RASTER(A5)
          3B44001C          BRA       PDON_16
          60E4
```

Module -V-


M O    R E   M E M O


```
            *      M O R E _ M E M O
            *
MORE_MEMO MOVE.W   #END_MEMO,(A4)+
          MOVE.L   A4,A6
          ADDQ.L   #1,D5
          MOVEM.L  D0-D7/A0-A3/A5-A6,-(SP)
          SUBQ.L   #LONG,SP
          PEA      (SP)
          MOVEM.L  PASCAL_REGISTERS,PSCL_RGLST
          JSR      M_NEXT
          MOVEM.L  PSCL_RGLST,PASCAL_REGISTERS
          MOVE.L   (SP)+,A4
          MOVEM.L  (SP)+,D0-D7/A0-A3/A5-A6
          MOVEQ.L  #-SHORT,D6
          ADD.L    MEMO_LENGTH,D6
          MOVE.L   A4,D7
          BEQ.S    PDON_31
          RTS

PDON_30   MOVEM.L  D0-D7/A0-A6,-(SP)
          SUBQ.L   #LONG,SP
          PEA      FONTERR
          PEA      LONG(SP)
          JSR      MEWA
          MOVE.L   A0,(SP)
          MOVE.L   PCHPAR,A0
          MOVE.W   #FONTERR,ERRORNR(A0)
          MOVE.L   MCBADR(A0),D7
          MOVE.L   (SP)+,A0
          MOVE.L   D7,-(SP)
          MOVEM.L  PASCAL_REGISTERS,PSCL_RGLST
          JSR      M_KILL
          MOVEM.L  PSCL_RGLST,PASCAL_REGISTERS
          MOVEM.L  (SP)+,D0-D7/A0-A6
PDON_31   BSR.S    PLOT_CLEAR
          BRA      PDON_4
```

R E L E A S E   Q U E U E

```
          9:000348                    *      . R E L E A S E _ Q U E U E
          9:000348                    *
          9:000348              +                SECTION $9          *      * CODE SECTION
          9:000348              RELEASE_QUEUE EQU        *
          9:000348  4852                          PEA      (A2)
          9:00034A  3F00                          MOVE.W   D0,-(SP)
          9:00034C  303C0100                      MOVE.W   #1<<PQ$S_SGMNT,D0
          9:000350  247C00000000                  MOVE.L   #PQQ$L_SEGMENT,A2
          9:000356  2E12              RELQ_1      MOVE.L   (A2),D7
          9:000358  670E                          BEQ.S    RELQ_2
          9:00035A  2047              +           MOVE.L   D7,A0          ** RELEASE THIS SEGMENT
          9:00035C  2E3C00000500      +           MOVE.L   #PQS$K_LENGTH,D7   * *
          9:000362  4EB900000000      +           JSR      AFREE          ** RETURN BLOCK TO POOL
          9:000368  429A              RELQ_2      CLR.L    (A2)+
          9:00036A  5340                          SUBQ.W   #1,D0
          9:00036C  66E8                          BNE      RELQ_1
          9:00036E  301F                          MOVE.W   (SP)+,D0
          9:000370  245F                          MOVE.L   (SP)+,A2
          9:000372  4E75                          RTS
```

P L O T   C L E A R

```
                                    *      P L O T _ C L E A R
                                    *
                                           XDEF     PLOT_CLEAR
     9:000374                   +           SECTION  $9            * CODE SECTION
     9:000374  61D2             PCLR_0  BSR      RELEASE_QUEUE
     9:000376  2B7C7FFF7FFF0018         MOVE.L   #$7FFF7FFF,MIN_Y(A5)
     9:00037E  2B7C80008000001C         MOVE.L   #$80008000,MAX_Y(A5)
     9:000386  301F                     MOVE.W   (SP)+,D0
     9:000388  245F                     MOVE.L   (SP)+,A2
     9:00038A  4E75                     RTS
     9:00038C                  PLOT_CLEAR EQU    *
     9:00038C  4852                     PEA      (A2)
     9:00038E  3F00                     MOVE.W   D0,-(SP)
     9:000390  422D002D                 CLR.B    LOOP_NOT_CLOSED(A5)
     9:000394  302D001C                 MOVE.W   MAX_RASTER(A5),D0
     9:000398  5240                     ADDQ.W   #1,D0
     9:00039A  5340            PCLR_1  SUBQ.W   #1,D0
     9:00039C  B06D0018                 CMP.W    MIN_RASTER(A5),D0
     9:0003A0  6DD2                     BLT      PCLR_0
     9:0003A2  3E00                     MOVE.W   D0,D7
     9:0003A4  E04F            +        LSR.W    #PQ$V_SGMNT,D7
     9:0003A6  E54F            +        LSL.W    #2,D7
     9:0003A8  41F900000000    +        LEA.L    PQQ$L_SEGMENT,A0
     9:0003AE  45F07000        +        LEA.L    0(A0,D7.W),A2
     9:0003B2  2E12            +        MOVE.L   (A2),D7
     9:0003B4  6606                     BNE.S    PCLR_2
     9:0003B6  0240FF00                 ANDI.W   #PQ$M_SGMNT,D0
     9:0003BA  60DE                     BRA      PCLR_1
     9:0003BC  2447            PCLR_2  MOVE.L   D7,A2
     9:0003BE  3E00            +        MOVE.W   D0,D7
     9:0003C0  024700FF        +        ANDI.W   #PQ$M_LINE,D7
     9:0003C4  E54F            +        LSL.W    #2,D7
     9:0003C6  41EA0100        +        LEA.L    PQS$L_LINE(A2),A0
     9:0003CA  41F07000        +        LEA.L    0(A0,D7.W),A0
     9:0003CE  2050            +        MOVE.L   (A0),A0
     9:0003D0  2E08            PCLR_3  MOVE.L   A0,D7
     9:0003D2  67C6                     BEQ      PCLR_1
     9:0003D4  2450                     MOVE.L   (A0),A2
                                * ADDRESS TO FREE IN LONGWORD A0
     9:0003D6  7E10            +        MOVE.L   #PQL$K_LENGTH,D7      * *
     9:0003D8  4EB900000000    +        JSR      AFREE               ** RETURN BLOCK TO POOL
     9:0003DE  204A                     MOVE.L   A2,A0
     9:0003E0  60EE                     BRA      PCLR_3
```

EP 0 191 134 B1

81

## QUICK   SORT

```
*           QUICK_SORT
*
*CALL FRAME
00000008             OFFSET   2*SHORT+LONG        * AREA FOR OLD I, J, PC
00000008      LEFT   DS.W     1                   * BYTE OFFSET FOR LEFT END
0000000A      RIGHT  DS.W     1                   * BYTE OFFSET FOR RIGHT END
9:0003E2  +          SECTION  $9                  * CODE SECTION
9:0003E2      QUICK_SORT EQU  *
9:0003E2 48A73000    MOVEM.W  D2/D3,-(SP)
9:0003E6 342F0008    MOVE.W   LEFT(SP),D2
9:0003EA 362F000A    MOVE.W   RIGHT(SP),D3
9:0003EE 3E02        MOVE.W   D2,D7
9:0003F0 DE43        ADD.W    D3,D7
9:0003F2 E44F        LSR.W    #2,D7
9:0003F4 DE47  +     ADD.W    D7,D7
9:0003F6 3E317000    MOVE.W   0(A1,D7.W),D7
9:0003FA BE712000 QSRT_1  CMP.W  0(A1,D2.W),D7
9:0003FE 6F04        BLE.S    QSRT_2
9:000400 5442        ADDQ.W   #SHORT,D2
9:000402 60F6        BRA      QSRT_1
9:000404 BE713000 QSRT_2  CMP.W  0(A1,D3.W),D7
9:000408 6C04        BGE.S    QSRT_3
9:00040A 5543        SUBQ.W   #SHORT,D3
9:00040C 60F6        BRA      QSRT_2
9:00040E B642    QSRT_3  CMP.W  D2,D3
9:000410 6D18        BLT.S    QSRT_5
9:000412 670E        BEQ.S    QSRT_4
9:000414 3F312000    MOVE.W   0(A1,D2.W),-(SP)
9:000418 33B130002000 MOVE.W  0(A1,D3.W),0(A1,D2.W)
9:00041E 339F3000    MOVE.W   (SP)+,0(A1,D3.W)
9:000422 5442    QSRT_4  ADDQ.W  #SHORT,D2
9:000424 5543        SUBQ.W   #SHORT,D3
9:000426 B642        CMP.W    D2,D3
9:000428 6CD0        BGE      QSRT_1
9:00042A 3E2F0008 QSRT_5  MOVE.W  LEFT(SP),D7
9:00042E B647        CMP.W    D7,D3
9:000430 6F08        BLE.S    QSRT_6
9:000432 3F03        MOVE.W   D3,-(SP)
9:000434 3F07        MOVE.W   D7,-(SP)
9:000436 61AA        BSR      QUICK_SORT
9:000438 588F  +     ADDQ.L   #2*SHORT,SP
9:00043A 3E2F000A QSRT_6  MOVE.W  RIGHT(SP),D7
9:00043E BE42        CMP.W    D2,D7
9:000440 6F08        BLE.S    QSRT_7
9:000442 3F07        MOVE.W   D7,-(SP)
9:000444 3F02        MOVE.W   D2,-(SP)
9:000446 619A        BSR      QUICK_SORT
9:000448 588F  +     ADDQ.L   #2*SHORT,SP
9:00044A 4C9F000C QSRT_7  MOVEM.W  (SP)+,D2/D3
9:00044E 4E75        RTS
```

Module -V-

# CLEAR_SEGMENT

.

```
                                        XDEF  CLEAR_SEGMENT
9:000450                       CLEAR_SEGMENT EQU          *
9:000450  4850                          PEA     (A0)
9:000452  41F900000000                  LEA.L   PQQ$L_SEGMENT,A0
9:000458  3E3C0100                      MOVE.W  #1<<PQ$S_SGMNT,D7
9:00045C  4298                          CLR.L   (A0)+
9:00045E  5947                          SUBQ.W  #LONG,D7
9:000460  66FA                          BNE     *-4
9:000462  205F                          MOVE.L  (SP)+,A0
9:000464  4E75                          RTS

                                        END
```

## D Y N A M I C   S T O R A G E   ALLOCATION & FREE

```
          00001000        STORAGE IDNT 1,0 CURVE FONT MEMORY MANAGER
                          HUNK    SET    $1000          * 4K BYTE CHUNKS

                          *        FREE HOLE STRUCTURE
                          *
          00000000                 OFFSET· 0
          00000000        FREE$L_PTR: DS.L        1
          00000004        FREE$L_SIZE: DS.L       1
          00000008        FREE$K_LENGTH: EQU      *

                                  XDEF    AALLOC,AFREE,STOR_INIT,STOR_FINAL
                                  XDEF    PLOT_AREA,FIRST_SEGMENT,FIRST_LENGTH
                                  XREF    PASCAL_REGISTERS,FETCH_MEM,DISP_MEM,MEWA,PCHPAR,CRV_ERROR
                                  XREF    M_KILL
          7:000000        +        SECTION $7          * DATA SECTION
          7:000000 00000000  PLOT_AREA: DC.L         0
          7:000004 00000000  FIRST_SEGMENT DC.L      0
          7:000008 00000000  FIRST_LENGTH DC.L       0
          7:00000C        +        DS.W    0
```

A A L L O C

```
*CALL FRAME
* D7(0:31)=      NUMBER OF BYTES NEEDED
*
*RETURN FRAME
* D7(0:31)=      --) TO BASE OF HOLE
*
*REGISTERS DESTROYED      -      NONE
9:000000           +        SECTION $9              * CODE SECTION
9:000000          AALLOC: EQU       *
9:000000  48E780C0          MOVEM.L  D0/A0/A1,-(SP)       * SAVE REGISTERS
9:000004  7008              MOVEQ.L  #FREE$K_LENGTH,D0
9:000006  BE80              CMP.L    D0,D7
9:000008  6306              BLS.S    ALC8_1               * REQUEST IS TO SMALL
9:00000A  5287              ADDQ.L   #1,D7
9:00000C  70FE              MOVEQ.L  #-2,D0
9:00000E  C087              AND.L    D7,D0
9:000010  207900000000 ALC8_1: MOVE.L PLOT_AREA,A0
9:000016  2248              MOVE.L   A0,A1
9:000018  2E08         ALC8_2: MOVE.L A0,D7
9:00001A  6730              BEQ.S    ALC8_7               * END OF CHAIN GET MORE MEMORY
9:00001C  2E280004          MOVE.L   FREE$L_SIZE(A0),D7
9:000020  9E80              SUB.L    D0,D7
9:000022  670A              BEQ.S    ALC8_3               * EXACT FIT
9:000024  5187              SUBQ.L   #FREE$K_LENGTH,D7
9:000026  6C14              BGE.S    ALC8_5               * LARGE ENOUGH
9:000028  2248              MOVE.L   A0,A1
9:00002A  2050              MOVE.L   (A0),A0
9:00002C  60EA              BRA.S    ALC8_2
9:00002E  B1C9         ALC8_3: CMP.L A1,A0
9:000030  6606              BNE.S    ALC8_4               * NOT TOP TO LIST
9:000032  43F900000000      LEA.L    PLOT_AREA,A1
9:000038  2290         ALC8_4: MOVE.L (A0),(A1)           * REMOVE THIS CHUNK FROM LIST
9:00003A  6008              BRA.S    ACL8_6
9:00003C  91A80004     ALC8_5: SUB.L D0,FREE$L_SIZE(A0)   * DECREASE THIS HOLE BY LENGTH
9:000040  D1E80004          ADD.L    FREE$L_SIZE(A0),A0    * P --) FREE HOLE
9:000044  2E08         ACL8_6: MOVE.L A0,D7
9:000046  4CDF0301          MOVEM.L  (SP)+,D0/A0/A1       * RESTORE REGISTERS
9:00004A  4E75              RTS
```

85

A A L L O C

```
66   9:00004C   43F80FF8        ALC8_7: LEA.L     HUNK-FREE$K_LENGTH,A1
67   9:000050   B089                    CMP.L     A1,D0
68   9:000052   6504          +         BCS.S     ALC8_8          * LOWER
69   9:000054   2240                    MOVE.L    D0,A1
70   9:000056   6002                    BRA.S     ALC8_9
71   9:000058   5089            ALC8_8: ADDQ.L    #FREE$K_LENGTH,A1
72   9:00005A   2E09            ALC8_9: MOVE.L    A1,D7
73   9:00005C   0687000003FF            ADD.L     #1023,D7
74   9:000062   E08F                    LSR.L     #8,D7
75   9:000064   E48F                    LSR.L     #10-8,D7
76   9:000066   48E7FF7E                MOVEM.L   D0-D7/A1-A6,-(SP)
77   9:00006A   598F                    SUBQ.L    #LONG,SP             * MAKE ROOM FOR POINTER TO NEW
78   9:00006C   4857                    PEA.L     (SP)                 *\
79   9:00006E   2F07                    MOVE.L    D7,-(SP)             * >GET NEW MEMORY
80   9:000070   4CF9280000000000        MOVEM.L   PASCAL_REGISTERS,PSCL_RGLST
81   9:000078   4EB900000000            JSR       FETCH_MEM            */
82   9:00007E   48F9280000000000        MOVEM.L   PSCL_RGLST,PASCAL_REGISTERS
83   9:000086   205F                    MOVE.L    (SP)+,A0
84   9:000088   4CDF7EFF                MOVEM.L   (SP)+,D0-D7/A1-A6
85   9:00008C   2E09                    MOVE.L    A1,D7                * LENGTH OF THIS HOLE
86   9:00008E   51ED002C                SF        USED_1_SEGMENT(A5)
87   9:000092   610C                    BSR.S     AFRE_0
88   9:000094   6000FF7A                BRA       ALC8_1
```

A F R E E

```
                                               *CALL FRAME
                                               * D7(00:31)=SIZE OF HOLE
                                               * P(A0)--) HOLE
                                               *
                                               *RETURN FRAME
                                               *
                                               *REGISTERS DESTROYED     -       D7
                                               *
      9:000098                   +                     SECTION $9              * CODE SECTION
      9:000098    4A2D002C             AFREE:   TST.B   USED_1_SEGMENT(A5)
      9:00009C    6702                          BEQ.S   AFRE_0
      9:00009E    4E75                          RTS
      9:0000A0    48E78060             AFRE_0:  MOVEM.L D0/A1/A2,-(SP)
      9:0000A4    7008                          MOVEQ.L #FREE$K_LENGTH,D0
      9:0000A6    BE80                          CMP.L   D0,D7
      9:0000A8    6306                          BLS.S   AFRE_1
      9:0000AA    5287                          ADDQ.L  #1,D7
      9:0000AC    70FE                          MOVEQ.L #-2,D0
      9:0000AE    C087                          AND.L   D7,D0
      9:0000B0    247900000000         AFRE_1:  MOVE.L  PLOT_AREA,A2
      9:0000B6    224A                          MOVE.L  A2,A1
      9:0000B8    2E0A                 AFRE_2:  MOVE.L  A2,D7
      9:0000BA    670A                          BEQ.S   AFRE_3          * END OF CHAIN
      9:0000BC    B1CA                          CMP.L   A2,A0
      9:0000BE    6306                          BLS.S   AFRE_3          * FOUND WHERE IT GOES
      9:0000C0    224A                          MOVE.L  A2,A1
      9:0000C2    2452                          MOVE.L  (A2),A2
      9:0000C4    60F2                          BRA     AFRE_2
      9:0000C6    2E09                 AFRE_3:  MOVE.L  A1,D7           * 1ST HOLE
      9:0000C8    6704                          BEQ.S   AFRE_4
      9:0000CA    B1C9                          CMP.L   A1,A0           * NOT NEW TOP
      9:0000CC    6206                          BHI.S   AFRE_5           * SET NEW TOP
      9:0000CE    23C800000000         AFRE_4:  MOVE.L  A0,PLOT_AREA
      9:0000D4    2E00                 AFRE_5:  MOVE.L  D0,D7
      9:0000D6    DE88                          ADD.L   A0,D7
      9:0000D8    B5C7                          CMP.L   D7,A2
      9:0000DA    6608                          BNE.S   AFRE_6          * COLLAPSE FORWARD HOLE
      9:0000DC    2092                          MOVE.L  (A2),(A0)
      9:0000DE    D0AA0004                      ADD.L   FREE$L_SIZE(A2),D0
      9:0000E2    6008                          BRA.S   AFRE_8
```

EP 0 191 134 B1

87

Module -VI-

## A F R E E

```
AFRE_6:  BHI.S     AFRE_7
         MOVE.L    A2,D7
         BNE.S     AFRE_20
AFRE_7:  MOVE.L    A2,(A0)
AFRE_8:  MOVE.L    A1,D7
         BEQ.S     AFRE_10
         CMP.L     A1,A0
         BLS.S     AFRE_10
         ADD.L     FREE$L_SIZE(A1),D7
         CMP.L     D7,A0
         BNE.S     AFRE_9
         MOVE.L    (A0),(A1)
         ADD.L     D0,FREE$L_SIZE(A1)
         BRA.S     AFRE_11
AFRE_9:  BLS.S     AFRE_20
         MOVE.L    A0,(A1)
AFRE_10  MOVE.L    D0,FREE$L_SIZE(A0)
AFRE_11  MOVEM.L   (SP)+,D0/A1/A2
         RTS

AFRE_20  MOVE.L    PCHPAR,A0
         MOVE.W    #PARERR,ERRORNR(A0)
         SUBQ.L    #LONG,SP
         PEA       PARERR
         PEA       LONG(SP)
         JSR       MEWA
         MOVE.L    PCHPAR,A0
         MOVE.L    MCBADR(A0),-(SP)
         MOVEM.L   PASCAL_REGISTERS,PSCL_RGLST
         JSR       M_KILL
         MOVEM.L   PSCL_RGLST,PASCAL_REGISTERS
         JMP       CRV_ERROR
```

```
131  9:0000E4   6204
132  9:0000E6   2E0A
133  9:0000E8   6628
134  9:0000EA   208A
135  9:0000EC   2E09
136  9:0000EE   6718
137  9:0000F0   B1C9
138  9:0000F2   6314
139  9:0000F4   DEA90004
140  9:0000F8   B1C7
141  9:0000FA   6608
142  9:0000FC   2290
143  9:0000FE   D1A90004
144  9:000102   6008
145  9:000104   630C
146  9:000106   2288
147  9:000108   21400004
148  9:00010C   4CDF0601
149  9:000110   4E75
150
151  9:000112   207900000000
152  9:000118   317C004B0012
153  9:00011E   598F
154  9:000120   4878004B
155  9:000124   486F0004
156  9:000128   4EB900000000
157  9:00012E   207900000000
158  9:000134   2F28000E
159  9:000138   4CF9280000000000
160  9:000140   4EB900000000
161  9:000146   48F9280000000000
162  9:00014E   4EF900000000
```

* TRAP ON TROUBLE
* INSERT THIS HOLE

* NO COLLAPSE BACKWARD

* TRAP ON TROUBLE
* PREVIOUS LINK TO NEW

EP 0 191 134 B1

88

I N I T I A L I Z A T I O N

```
STOR_FINAL TST.B   USED_1_SEGMENT(A5)
           BEQ.S   *+4
           BRA.S   STOR_INIT
           MOVEM.L D6/D7/A0,-(SP)
STFIN_1 MOVE.L   PLOT_AREA,A0
        MOVE.L   (A0)+,D7
        BEQ.S    STFIN_2
        MOVE.L   D7,PLOT_AREA
        CMP.L    FIRST_SEGMENT,D7
        BEQ.S    STFIN_1
        MOVEM.L  D0-D67A0-A6,-(SP)
        MOVE.L   D7,-(SP)
        PEA      (SP)
        MOVE.L   (A0),D7              * LENGTH OF PARTITION
        AND.L    #1023,D7
        BNE      AFRE_20              * PARTITION WAS NOT CLOSED
        MOVE.L   (A0),D7
        ADD.L    #1023,D7
        LSR.L    #8,D7
        LSR.L    #10-8,D7
        MOVE.L   D7,-(SP)
        MOVEM.L  PASCAL_REGISTERS,PSCL_RGLST
        JSR      DISP_MEM
        MOVEM.L  PSCL_RGLST,PASCAL_REGISTERS
        ADDQ.L   #LONG,SP
        MOVEM.L  (SP)+,D0-D6/A0-A6
        BRA      STFIN_1
STFIN_2 MOVEM.L  (SP)+,D6/D7/A0

STOR_INIT PEA    (A0)
STINT_1 MOVE.L   FIRST_SEGMENT,D7
        BEQ.S    STINT_2
        MOVE.L   D7,A0
        MOVE.L   A0,PLOT_AREA
        CLR.L    (A0)+
        MOVE.L   FIRST_LENGTH,(A0)
        ST.B     USED_1_SEGMENT(A5)
        MOVE.L   (SP)+,A0
        RTS
STINT_2 MOVEM.L  D0-D7/A0-A6,-(SP)
        PEA.L    FIRST_SEGMENT
        PEA      20
        MOVEM.L  PASCAL_REGISTERS,PSCL_RGLST
        JSR      FETCH_MEM
        MOVEM.L  PSCL_RGLST,PASCAL_REGISTERS
        MOVEM.L  (SP)+,D0-D7/A0-A6
        MOVE.L   #20*1024,FIRST_LENGTH
        BRA      STINT_1

        END
```

EP 0 191 134 B1

# T R I G   F U N C T I O N S

```
                                    +    TRIG      IDNT 1,0 CURVE FONT ARCTANGENT/SINE/COSINE FUNCTIONS

                                         *        ANGULAR CONSTANTS
      000000A0                           HDEG_80:          SET      80*2
      000000B3                           HDEG_89P5:        SET      89*2+1
      000000B4                           HDEG_90:          SET      90*2
      00000168                           HDEG_180:         SET      HDEG_90*2
      000002D0                           HDEG_360:         SET      HDEG_180*2
```

EP 0 191 134 B1

# A R C T A N G E N T

```
*       A R C T A N
*
*CALL FRAME
* D7(16:31)= DELTA Y
* D7(00:15)= DELTA X
*
*RETURN FRAME
* D7(00:31)= ARCTANGENT ANGLE IN 1/2 DEGREES
*
*REGISTERS DESTROYED      -       NONE
*REGISTERS USED           -       DELTA_Y(D0)/D7/A0
*
*FUNCTION
* GIVEN DELTA Y AND DELTA X A ANGLE IN 1/2 DEGREES IS RETURNED BY TAKING
* THE SLOPE (IE ABS(DELTA_Y)/ABS(DELTA_X)) AND LOOKING IT UP INTO A TABLE.
* THE TABLES ARE BROKEN INTO 3 PARTS.
* 1)      ARCTANGENT(SLOPE) 0<=SLOPE<2 BY 1/128S
* 2)      ARCTANGENT(SLOPE) 2<=SLOPE<6 BY 1/64S
* 3)      TANGENT(THETA) 80<=THETA<=89 BY 1/2DEGS
* FINALLY THE SIGNS OF DELTA_X AND DELTA_Y ARE USED TO SET THE QUADRANT
* OF THE RETURN VALUE
*
*REGISTERS
*DELTA_Y            SET       D0
*DELTA_Y.W          SET       D0.W

                   XDEF      ARCTAN                      * ARCTANGENT FUNCTION
                   XREF      ATN_0_2,ATN_2_6,TAN_80_89        * FROM TABLES
9:000000           SECTION $9                  * CODE SECTION
9:000000    ARCTAN: EQU      *
9:000000  48E78080 MOVEM.L D0/A0,-(SP)
9:000004  2007     MOVE.L   D7,D0                        * D7=X
9:000006  4840     SWAP     D0                    * DELTA_Y=Y
9:000008  2F00     MOVE.L   D0,-(SP)              * PUSH ON DELTA_X/DELTA_Y
9:00000A  48C0     EXT.L    D0
9:00000C  661A     BNE.S    ARCTN_3                      * THERE IS A Y
9:00000E  7E00     MOVEQ.L #0,D7
9:000010  4A5F     ARCTN_1 TST.W    (SP)+                * IS X<0
9:000012  6A06     BPL.S    ARCTN_2
9:000014  4447     NEG.W    D7
9:000016  06470168 ADDI.W   #HDEG_180,D7
9:00001A  4A5F     ARCTN_2 TST.W    (SP)+                * IS Y<0
9:00001C  6A02     BPL.S    *+4
9:00001E  4447     NEG.W    D7
9:000020  4CDF0101 MOVEM.L (SP)+,D0/A0
9:000024  48C7     EXT.L    D7
9:000026  4E75     RTS
```

EP 0 191 134 B1

91

## ARCTANGENT

```
9:000028                  ARCTN_3 EQU     *
9:000028  6A02      +             BPL.S   *+4
9:00002A  4480      +             NEG.L   D0
9:00002C  48C7                    EXT.L   D7
9:00002E  6606                    BNE.S   ARCTN_4
9:000030  3E3C00B4                MOVE.W  #HDEG_90,D7
9:000034  60DA                    BRA     ARCTN_1
9:000036                  ARCTN_4 EQU     *
9:000036  6A02      +             BPL.S   *+4
9:000038  4487      +             NEG.L   D7
9:00003A  2047                    MOVE.L  D7,A0          * SAVE X
9:00003C  D1C8                    ADD.L   A0,A0          * X*2
9:00003E  B1C0                    CMP.L   D0,A0            * Y < 2*X
9:000040  6312                    BLS.S   ARCTN_6
9:000042  EF80                    ASL.L   #7,D0
9:000044  41F900000000            LEA.L   ATN_0_2,A0
9:00004A  80C7              ARCTN_5 DIVU   D7,D0          * OFFSET BY BYTES
          +               * DO ALREADY INDEX TO CHAR
9:00004C  7E00                    MOVEQ.L #0,D7
9:00004E  1E300000                MOVE.B  0(A0,D0.W),D7
9:000052  60BC                    BRA     ARCTN_1        * SET QUADRANT
9:000054  D1C7              ARCTN_6 ADD.L  D7,A0          * X*3
9:000056  D1C8                    ADD.L   A0,A0          * X*6
9:000058  B1C0                    CMP.L   D0,A0            * Y < 6*X
9:00005A  630A                    BLS.S   ARCTN_7
9:00005C  ED80                    ASL.L   #6,D0            * Y*64
9:00005E  41F9FFFFFF80            LEA.L   ATN_2_6-128*CHAR,A0
9:000064  60E4                    BRA     ARCTN_5
9:000066  2047              ARCTN_7 MOVE.L D7,A0
9:000068  EF87                    ASL.L   #16-9,D7
9:00006A  BE80                    CMP.L   D0,D7
9:00006C  6316                    BLS.S   ARCTN7A
9:00006E  2E08                    MOVE.L  A0,D7
9:000070  E180                    ASL.L   #8,D0
9:000072  E380                    ASL.L   #9-8,D0
9:000074  80C7                    DIVU    D7,D0
9:000076  690C                    BVS.S   ARCTN7A
9:000078  41F900000000            LEA.L   TAN_80_89,A0
9:00007E  B0680024                CMP.W   18*SHORT(A0),D0
9:000082  6506      +             BCS.S   ARCTN_8        * LOWER
9:000084  3E3C00B3          ARCTN7A MOVE.W #HDEG_89P5,D7
9:000088  6086                    BRA     ARCTN_1
9:00008A  7E12              ARCTN_8 MOVEQ.L #9*SHORT,D7
9:00008C  B0707800                CMP.W   0(A0,D7.L),D0
9:000090  6404      +             BCC.S   ARCTN10        * HIGH OR SAME
9:000092  7EFE                    MOVEQ.L #-SHORT,D7
9:000094  5487              ARCTN_9 ADDQ.L #SHORT,D7
9:000096  B0707800          ARCTN10 CMP.W  0(A0,D7.L),D0
9:00009A  62F8                    BHI.S   ARCTN_9
9:00009C  E247                    ASR.W   #1,D7          * UNDO SHORT INDEX
9:00009E  064700A0                ADDI.W  #HDEG_80,D7
9:0000A2  6000FF6C                BRA     ARCTN_1
```

Module -VII-

S I N E / C O S I N E

```
*          S I N E / C O S I N E
*
*CALL FRAME
*  D7(0:15)=      +/- THETA IN 1/2 DEGREES
*
*RETURN FRAME
*  D7(0:31)=      +/- SINE(THETA)/COSINE(THETA) * 2**-15
*
*REGISTERS DESTROYED    -        NONE
*REGISTERS USED -                D7/A0
*
*FUNCTION
* IF COMPENSATE FOR COSINE                IE. COSINE(THETA)---SINE(THETA+90)
* THE VALUE OF ABS(THETA) MOD 360 IS REDUCED WITHIN RANGE OF (0..90)
* THIS NUMBER IS USED TO LOOKUP INTO A SINE TABLE
* THEN COMPENSATE FOR NEGATIVE THETA    IE. SINE(-THETA)----SINE(THETA)

            XDEF     SINE,COSINE          * SINE / COSINE FUNCTIONS
            XREF     SINE_TBL             * FROM TABLES

            SECTION  $9               * CODE SECTION
COSINE: EQU          *
            ADDI.W   #HDEG_90,D7
SINE:   EQU          *
            PEA.L    (A0)                 * SAVE A0
            LEA.L    SINE_TBL,A0
            EXT.L    D7                   * SET D7(31) TO SIGN OF THETA
            BPL.S    *+4
            NEG.W    D7
SINE_1: SUBI.W   #HDEG_360,D7
            BCC.S    SINE_1               * HIGH OR SAME
            ADDI.W   #HDEG_360,D7
            CMPI.W   #HDEG_180,D7
            BLS.S    SINE_2
            SUBI.W   #HDEG_180,D7
            BCHG.L   #31,D7
SINE_2: CMPI.W   #HDEG_90,D7
            BLS.S    SINE_3
            NEG.W    D7
            ADDI.W   #HDEG_180,D7
SINE_3: EQU          *
            ADD.W    D7,D7
            MOVE.W   0(A0,D7.W),D7
            MOVE.L   (SP)+,A0
            TST.L    D7
            BPL.S    *+4
            NEG.W    D7
            EXT.L    D7
            RTS
```

Address / object code column:

```
9:0000A6
9:0000A6
9:0000A6   064700B4
9:0000AA
9:0000AA   4850
9:0000AC   41F900000000
9:0000B2   48C7
9:0000B4   6A02
9:0000B6   4447
9:0000B8   044702D0
9:0000BC   64FA
9:0000BE   064702D0
9:0000C2   0C470168
9:0000C6   6308
9:0000C8   04470168
9:0000CC   0847001F
9:0000D0   0C4700B4
9:0000D4   6306
9:0000D6   4447
9:0000D8   06470168
9:0000DC
9:0000DC   DE47
9:0000DE   3E307000
9:0000E2   205F
9:0000E4   4A87
9:0000E6   6A02
9:0000E8   4447
9:0000EA   48C7
9:0000EC   4E75
```

EP 0 191 134 B1

F O L D   A N G L E

```
*        F O L D _ A N G L E
*
*CALL FRAME
* D7=   DELTA_ANGLE = ANGLE2-ANGLE1     ANGLE2.ANGLE1=(-180..+180)
*
*RETURN FRAME
* D7=   DELTA_ANGLE SUCH THAT DELTA_ANGLE=(-180..+180)
*
*REGISTERS DESTROYED    -        NONE
*REGISTERS USED -                D7
*
*FUNCTION
* IF DELTA ANGLE > 180 THEN -360;RETURN
* IF DELTA ANGLE <-180 THEN +360;RETURN

              XDEF      FOLD_ANGLE

              SECTION   $9              * CODE SECTION
FOLD_ANGLE: EQU *
              CMPI.W    #HDEG_180,D7
              BLE.S     FANG_1
              SUBI.W    #HDEG_360,D7
              BRA.S     FANG_2
FANG_1        CMPI.W    #-HDEG_180,D7
              BGE.S     FANG_2
              ADDI.W    #HDEG_360,D7
FANG_2        EXT.L     D7
              RTS

              END
```

Address/object code:
```
9:0000EE
9:0000EE
9:0000EE   0C470168
9:0000F2   6F06
9:0000F4   044702D0
9:0000F8   600A
9:0000FA   0C47FE98
9:0000FE   6C04
9:000100   064702D0
9:000104   48C7
9:000106   4E75
```

94

EP 0 191 134 B1

Module -VII-

```
Readonly  Trig  Tables
Arctangent  Tables


TRIGTABL     9    Arctangent  Tables
TRIGTABL    86    Tangent  Table
TRIGTABL   111    Sine  Table
TRIGTABL   136    Xi  Table
                                        xdef    atn_0_2,atn_2_6,atn_026,tan_80_89,atn_tan_tbl
                                        xdef    sine_tbl,tan_tbl,xi_tbl

     C:000000              +            section $C           * Code Section
```

Readonly Trig Tables
Arctangent Tables

```
C:000000                          tan_80_89: equ  *              * tangent of 80..89 by 1/2deg
C:000000  0BA40C480CFF0DCB        dc.w   2980,3144,3327,3531,3762,4025,4326,4675,5085,5572
C:000014  18121AEA1E842339        dc.w   6162,6890,7812,9017,10659,13031,16758,23465,-26424
C:000026                          atn_0_2: equ  *               * arctangent of 0..2 by 1/128
C:000026  0001020304040506        dc.b   0,1,2,3,4,4,5,6
C:00002E  0708090A0B0C0C0D        dc.b   7,8,9,10,11,12,12,13
C:000036  0E0F101112131414        dc.b   14,15,16,17,18,19,20,20
C:00003E  15161718191A1A1B        dc.b   21,22,23,24,25,26,26,27
C:000046  1C1D1E1F1F202122        dc.b   28,29,30,31,31,32,33,34
C:00004E  2324242526272828        dc.b   35,36,36,37,38,39,40,40
C:000056  292A2B2B2C2D2E2F        dc.b   41,42,43,43,44,45,46,47
C:00005E  2F30313132333434        dc.b   47,48,49,49,50,51,52,52
C:000066  353637373839393A        dc.b   53,54,55,55,56,57,57,58
C:00006E  3B3B3C3D3D3E3F3F        dc.b   59,59,60,61,61,62,63,63
C:000076  4041414243434444        dc.b   64,65,65,66,67,67,68,68
C:00007E  4546464747484949        dc.b   69,70,70,71,71,72,73,73
C:000086  4A4A4B4B4C4D4D4E        dc.b   74,74,75,75,76,77,77,78
C:00008E  4E4F4F5050515152        dc.b   78,79,79,80,80,81,81,82
C:000096  5253535454555556        dc.b   82,83,83,84,84,85,85,86
C:00009E  565757585859595A        dc.b   86,87,87,88,88,89,89,90
C:0000A6  5A5A5B5B5C5C5D5D        dc.b   90,90,91,91,92,92,93,93
C:0000AE  5D5E5E5F5F606060        dc.b   93,94,94,95,95,96,96,96
C:0000B6  6161626262636363        dc.b   97,97,98,98,99,99,99
C:0000BE  6464656565666666        dc.b   100,100,101,101,101,102,102,102
C:0000C6  6767676868686969        dc.b   103,103,103,104,104,104,105,105
C:0000CE  696A6A6A6B6B6B6C        dc.b   105,106,106,106,107,107,107,108
C:0000D6  6C6C6D6D6D6D6E6E        dc.b   108,108,109,109,109,109,110,110
C:0000DE  6E6F6F6F70707070        dc.b   110,111,111,111,112,112,112,112
C:0000E6  7171717172727273        dc.b   113,113,113,113,114,114,114,115
C:0000EE  7373737474747475        dc.b   115,115,115,116,116,116,116,117
C:0000F6  7575757676767676        dc.b   117,117,117,118,118,118,118,118
C:0000FE  7777777778787878        dc.b   119,119,119,119,120,120,120,120
C:000106  79797979797A7A7A        dc.b   121,121,121,121,121,122,122,122
C:00010E  7A7A7B7B7B7B7B7C        dc.b   122,122,123,123,123,123,123,124
C:000116  7C7C7C7C7D7D7D7D        dc.b   124,124,124,124,125,125,125,125
C:00011E  7D7E7E7E7E7E7F7F        dc.b   125,126,126,126,126,126,127,127
C:000026                          atn_026: set atn_0_2    * atn_0_2 is followed by atn_2_6
C:000026                          atn_tan_tbl: set atn_0_2      * tan_80_90 is -19 shortwords of tan_0_2
C:000126                          atn_2_6: equ  *               * arctangent 2..6 by 1/64
C:000126  7F7F808080818181        dc.b   127,127,-128,-128,-128,-127,-127,-127
C:00012E  8282828383838384        dc.b   -126,-126,-126,-125,-125,-125,-125,-124
C:000136  8484858585868686        dc.b   -124,-124,-123,-123,-123,-122,-122,-122
C:00013E  8687878787888888        dc.b   -122,-121,-121,-121,-121,-120,-120,-120
C:000146  88898989898A8A8A        dc.b   -120,-119,-119,-119,-119,-118,-118,-118
C:00014E  8A8B8B8B8B8B8C8C        dc.b   -118,-117,-117,-117,-117,-117,-116,-116
C:000156  8C8C8C8D8D8D8D8D        dc.b   -116,-116,-116,-115,-115,-115,-115,-115
C:00015E  8E8E8E8E8E8F8F8F        dc.b   -114,-114,-114,-114,-114,-113,-113,-113
C:000166  8F8F8F9090909090        dc.b   -113,-113,-113,-112,-112,-112,-112,-112
C:00016E  9191919191919192        dc.b   -111,-111,-111,-111,-111,-111,-111,-110
C:000176  9292929292939393        dc.b   -110,-110,-110,-110,-110,-109,-109,-109
C:00017E  9393939394949494        dc.b   -109,-109,-109,-109,-108,-108,-108,-108
C:000186  9494949595959595        dc.b   -108,-108,-108,-107,-107,-107,-107,-107
C:00018E  9595959696969696        dc.b   -107,-107,-107,-106,-106,-106,-106,-106
```

Readonly Trig Tables
Arctangent Tables

```
C:000196   9696969697979797   dc.b   -106,-106,-106,-106,-105,-105,-105,-105
C:00019E   9797979797989898   dc.b   -105,-105,-105,-105,-105,-104,-104,-104
C:0001A6   9898989898989999   dc.b   -104,-104,-104,-104,-104,-104,-103,-103
C:0001AE   9999999999999999   dc.b   -103,-103,-103,-103,-103,-103,-103,-103
C:0001B6   9A9A9A9A9A9A9A9A   dc.b   -102,-102,-102,-102,-102,-102,-102,-102
C:0001BE   9A9A9A9B9B9B9B9B   dc.b   -102,-102,-102,-101,-101,-101,-101,-101
C:0001C6   9B9B9B9B9B9B9B9C   dc.b   -101,-101,-101,-101,-101,-101,-101,-100
C:0001CE   9C9C9C9C9C9C9C9C   dc.b   -100,-100,-100,-100,-100,-100,-100,-100
C:0001D6   9C9C9C9C9D9D9D9D   dc.b   -100,-100,-100,-100,-99,-99,-99,-99
C:0001DE   9D9D9D9D9D9D9D9D   dc.b   -99,-99,-99,-99,-99,-99,-99,-99
C:0001E6   9D9D9E9E9E9E9E9E   dc.b   -99,-99,-98,-98,-98,-98,-98,-98
C:0001EE   9E9E9E9E9E9E9E9E   dc.b   -98,-98,-98,-98,-98,-98,-98,-98
C:0001F6   9E9E9F9F9F9F9F9F   dc.b   -98,-98,-97,-97,-97,-97,-97,-97
C:0001FE   9F9F9F9F9F9F9F9F   dc.b   -97,-97,-97,-97,-97,-97,-97,-97
C:000206   9F9FA0A0A0A0A0A0   dc.b   -97,-97,-96,-96,-96,-96,-96,-96
C:00020E   A0A0A0A0A0A0A0A0   dc.b   -96,-96,-96,-96,-96,-96,-96,-96
C:000216   A0A0A0A0A0A1A1A1   dc.b   -96,-96,-96,-96,-96,-95,-95,-95
C:00021E   A1A1A1A1A1A1A1A1   dc.b   -95,-95,-95,-95,-95,-95,-95,-95
C:000226                    +   ds.w   0
                           +

C:000226   tan_tbl:        equ *              * tangent of 0..90 degrees by 1/2 binary(15,8)
C:000226   0000000200040007   dc.w   0,2,4,7,9,11,13,16
C:000236   0012001400160019   dc.w   18,20,22,25,27,29,31,34
C:000246   002400260029002B   dc.w   36,38,41,43,45,47,50,52
C:000256   00360039003B003D   dc.w   54,57,59,61,64,66,69,71
C:000266   0049004C004E0051   dc.w   73,76,78,81,83,86,88,91
C:000276   005D006000620065   dc.w   93,96,98,101,103,106,109,111
C:000286   007200750077007A   dc.w   114,117,119,122,125,128,130,133
C:000296   0088008B008E0091   dc.w   136,139,142,145,148,151,154,157
C:0002A6   00A000A300A600A9   dc.w   160,163,166,169,173,176,179,183
C:0002B6   00BA00BD00C100C4   dc.w   186,189,193,196,200,204,207,211
C:0002C6   00D700DB00DF00E2   dc.w   215,219,223,226,231,235,239,243
C:0002D6   00F700FC01000105   dc.w   247,252,256,261,265,270,275,279
C:0002E6   011C01210126012C   dc.w   284,289,294,300,305,311,316,322
C:0002F6   0148014E0154015A   dc.w   328,334,340,346,352,359,366,372
C:000306   017C0183018A0192   dc.w   380,387,394,402,410,418,426,435
C:000316   01BB01C401CE01D7   dc.w   443,452,462,471,481,492,502,513
C:000326   020D021902250232   dc.w   525,537,549,562,575,589,603,618
C:000336   027A028A029B02AD   dc.w   634,650,667,685,703,723,743,765
C:000346   0314032C03450360   dc.w   788,812,837,864,893,923,955,990
C:000356   0403042A04550483   dc.w   1027,1066,1109,1155,1204,1258,1317,1381
C:000366   05AC05FA065006B1   dc.w   1452,1530,1616,1713,1822,1945,2085,2247
C:000376   09840A630B6E0CB5   dc.w   2436,2659,2926,3253,3661,4186,4885,5863
C:000386   1CA32630394A7297   dc.w   7331,9776,14666,29335,32767
```

Read only Trig Tables

```
C:000390  0000011E023C035A  sine_tbl: equ  *        * sine of 0..90 degrees by 1/2 Binary(15,15)
C:000390  0000011E023C035A        dc.w  0,286,572,858,1144,1429,1715,2000
C:0003A0  08EE0A0B0B280C45        dc.w  2286,2571,2856,3141,3425,3709,3993,4277
C:0003B0  11D012EB14061520        dc.w  4560,4843,5126,5408,5690,5971,6252,6533
C:0003C0  1A9D1BB41CCB1DE2        dc.w  6813,7092,7371,7650,7927,8204,8481,8757
C:0003D0  2348245B256C267E        dc.w  9032,9307,9580,9854,10126,10397,10668,10938
C:0003E0  2BC72CD42DDF2EEA        dc.w  11207,11476,11743,12010,12275,12540,12803,13066
C:0003F0  341035153618371B        dc.w  13328,13589,13848,14107,14363,14621,14876,15131
C:000400  3C183D143E0E3F08        dc.w  15384,15636,15886,16136,16384,16631,16877,17121
C:000410  43D444C645B746A6        dc.w  17364,17606,17847,18086,18324,18560,18795,19028
C:000420  4B3D4C234D084DEC        dc.w  19261,19491,19720,19948,20174,20399,20622,20843
C:000430  5247532153FA54D1        dc.w  21063,21281,21498,21713,21926,22138,22348,22556
C:000440  58EB59B75A825B4C        dc.w  22763,22967,23170,23372,23571,23769,23965,24159
C:000450  5F1F5FDE609A6155        dc.w  24351,24542,24730,24917,25102,25285,25466,25645
C:000460  64DE65BD663A66E5        dc.w  25822,25997,26170,26341,26510,26677,26842,27005
C:000470  6A1E6ABD6B5A6BF4        dc.w  27166,27325,27482,27636,27789,27939,28088,28234
C:000480  6EDA6F686FF4707D        dc.w  28378,28520,28660,28797,28932,29066,29197,29325
C:000490  730C73887402747A        dc.w  29452,29576,29698,29818,29935,30050,30163,30274
C:0004A0  76AE7718778077E5        dc.w  30382,30488,30592,30693,30792,30888,30983,31075
C:0004B0  79BC7A137A687ABB        dc.w  31164,31251,31336,31419,31499,31576,31651,31724
C:0004C0  7C337C777CB87CF7        dc.w  31795,31863,31928,31991,32052,32110,32166,32219
C:0004D0  7E0E7E3F7E6D7E98        dc.w  32270,32319,32365,32408,32449,32488,32524,32557
C:0004E0  7F4C7F697F837F9B        dc.w  32588,32617,32643,32667,32688,32707,32723,32737
C:0004F0  7FEC7FF57FFB7FFF        dc.w  32748,32757,32763,32767,32767

C:0004FA  0000011E023C035A  xi_tbl: equ  *        * (1+abs(cos(theta)))*sin(theta))/2 0..45 by 1/2
C:0004FA  0000011E023C035A        dc.w  0,286,572,858,1143,1429,1714,1999
C:00050A  08EB0A070B220C3D        dc.w  2283,2567,2850,3133,3416,3698,3979,4259
C:00051A  11BA12D113E614FB        dc.w  4538,4817,5094,5371,5647,5921,6195,6467
C:00052A  1A531B601C6D1D78        dc.w  6739,7008,7277,7544,7810,8074,8336,8598
C:00053A  2299239B249B259A        dc.w  8857,9115,9371,9626,9878,10129,10378,10624
C:00054A  2A752B682C592D48        dc.w  10869,11112,11353,11592,11828,12063,12295,12524
C:00055A  31D032B13390346C        dc.w  12752,12977,13200,13420,13638,13853,14066,14276
C:00056A  389339603A2A3AF2        dc.w  14483,14688,14890,15090,15286,15480,15671,15860
C:00057A  3EAD3F64401740C8        dc.w  16045,16228,16407,16584,16757,16928,17095,17260
C:00058A  440D44AC454745DF        dc.w  17421,17580,17735,17887,18036,18181,18324,18463
C:00059A  48A7492C49AD4A2B        dc.w  18599,18732,18861,18987,19110,19230,19346,19459
C:0005AA  4C704CDA4D41            dc.w  19568,19674,19777

C:0005B0                    total_tables: set  *
                                  end
```

## Claims

1. A method of creating a data base on a storage medium useable in defining a memory in a computing device including the step of encoding data in the memory, said data representing knots on an outline defined relative to a coordinate plane, said step of encoding said data including the substeps of
   (i) generating signals representing nodes on a locus of a curve defined by a set of said knots, and
   (ii) encoding said node signals in said storage medium for use in representing said curve in a separate curve generating process in correspondence to said curve locus,
said method of creating said data base comprising the steps of:

(a) selecting sets of coordinates on said outline to represent said knots,

(b) establishing a successive order of said knots,

(c) encoding said knots in a data order in said memory, which is indicative of said successive knot order,

(d) said encoding in step (c) providing an information set of data in the form of a control code indicative of at least one of:

   i. the coordinate locations of said knots,

   ii. a direction to be followed to reach a knot from a preceding knot,

   iii. a predetermined desired shape of said outline between a pair of said knots, and

   iv. a shape of said outline at a knot,

(e) for a first knot $(Z_a)$, representing a first end point of a first curve segment (21) to be generated, deriving a first angle (a) measured with respect to an arbitrary reference line and indicative of an average of two interknot angles $(B_{a-1}$ and $B_a)$, wherein $(Z_{a-1})$ is the knot immediately preceding knot $(Z_a)$ in said successive order and interknot angle $(B_{a-1})$ is the angle formed between the reference line and a straight line connecting the two knots $(Z_a$ and $Z_{a-1})$, and wherein $(Z_{a+1})$ is the knot immediately succeeding knot $(Z_a)$ in said successive order and interknot angle $B_a$ is the angle formed between the reference line and a straight line connecting said knots $(Z_a$ and $Z_{a+1})$, and encoding as data in said memory, signals indicative of said first angle (a),

(f) at a second of said knots $(Z_{a+1})$, representing a second end point of said first curve segment (21), establishing a second angle $(B_{a+1})$ for said first curve segment, and encoding as data in said memory said computing device signals indicative of said second angle $(B_{a+1})$,

(g) establishing a compiler in said memory, which generates locus points for compiling data as a function of:

   i. a predetermined cubic parametric polynomial function of a parameter "t" which is incremented in steps;

   ii. said knots; and

   iii. said angles at said end points of said first curve segments;

(h) establishing a limited range "R" of values for parameter "t" in the compiler,

(i) in said memory, applying said signals indicative of said locations of said first and second knots of said first curve segment to said compiler,

(j) in said memory, applying said signals indicative of said first and second angles of said first curve segment (21) to said compiler,

(k) generating a signal indicative of a distinct selected value of parameter "t" within range "R" by incremental signal generation, and applying said signal to said compiler to derive a signal indicative of a respective node location on said first curve segment according to said predetermined cubic parametric polynomial function,

(l) repeating step (k) by applying signals indicative of additional distinct selected values of said parameter "t" within said range "R" to derive a plurality of signals indicative of respective node locations on said locus of said first curve segment for respective values of paramter "t", and

(m) encoding said signals derived in steps (k) and (l), in said data base in said memory for later sorting to represent said first curve segment for later generation of a visual representation of said curve by using said data encoded signals directly to control a display process and visually display the curve.

2. A method as in claim 1, further comprising repeating steps (a) through (l) for at least a second curve segment within the locus of said curve.

3. A method as in claim 1, wherein said compiler is of a Hermite form.

4. A method as in claim 1, wherein the reference line is a straight, horizontal line in a normalized coordinate system formed on a master grid and within which said angles are measured.

5. A method as in claim 1, wherein said step (a) further comprises defining said knot locations with respect to an encoding grid having first and second coordinates, and said range of values "R" is defined independently of said first and second coordinates.

6. A method as in claim 1, wherein said incremental signal generation in step (k) further comprises generating a signal corresponding to an incremental value of said parameter "t" and generating a multiple of said incremental value as said signal indicative of said distinct selected value.

7. A method as in claim 6, wherein said step (a) of defining said knot locations further comprises defining said knot locations with respect to an encoding grid having first and second coordinates and said step of generating a signal corresponding to an incremental value of parameter "t" further comprises generating said incremental value signal corresponding to a multiple of the reciprocal of the distance between said first and second knots.

8. A method as in claim 1, wherein in step (c), said successive order of knots defines an outline loop and said encoding signals further comprises encoding said knot signals in a data order indicative of said knot order and said data order defines a data loop indicative of said outline loop.

9. The method as in claim 8, wherein step (m) further comprises encoding said node signals in said data loop, in an order indicative of the order of said nodes along the curve segment generated between knots in the knot order whereby the encoded node signals for a respective curve segment are positioned in the data loop between the encoded knot signals corresponding to the end points of that respective curve segment.

10. A method as in claim 1, wherein said second angle at said second knot ($Z_{a+1}$) is $\phi$ and said first angle at said first knot ($Z_a$) is $\theta$ and wherein said compiler generates node location signals ($Z(t)$) between knots ($Z_a$) and ($Z_{a+1}$) according to the equations:

$$Z(t) = Z_a + (3t^2 - 2t^3)(Z_a + 1 - Z_a) + rt(1-t)^2 S_1 - st^2(1-t)S_2$$

$$S_1 = e^{j\theta} (Z_{a+1} - Z_a)$$

$$S_2 = e^{-j\phi} (Z_{a+1} - Z_a)$$

$$0 \leq t \leq 1$$

where r and s are positive real numbers.

11. The method as in claim 10, wherein said angle $\theta$ is an entrance angle for said first curve segment, at said first knot ($Z_a$), and said angle $\phi$ is an exit angle for said first curve segment at said second knot ($Z_{a+1}$).

12. A method as in claim 1, wherein said step (c) further comprises encoding the coordinate positions of said knots with regard to a normalized encoding grid thereby defining the outline loop at a normalized size, deriving a conversion factor relating the normalized encoding grid to a display coordinate grid, and applying said conversion factor to the coordinate positions for each knot thereby defining the outline loop with respect to the display coordinate grid.

13. A method as in claim 1, wherein step (d) comprises encoding said information set in a data order indicative of said knot order and as a series of data words, with a designated part of said series providing a control code value indicative of said control code.

14. A method as in claim 13, wherein said encoding of said information set further comprises encoding said designated part of said series of data words as the first one in said series of data words.

## Revendications

1. Procédé pour créer une base de données dans un support d'enregistrement utilisable pour définir une mémoire dans un dispositif de calcul, comprenant l'étape consistant à coder des données dans la mémoire, lesdites données représentant des noeuds sur un contour défini par rapport à un plan de coordonnées, ladite étape de codage desdites données comprenant les étapes partielles consistant à
    (i) produire des signaux représentant des noeuds sur un lieu d'une courbe définie par un ensemble desdits noeuds, et

(ii) coder lesdits signaux de noeuds dans ledit support d'enregistrement en vue de leur utilisation pour représenter ladite courbe lors d'un processus séparé de production d'une courbe en correspondance avec ledit lieu de la courbe,

ledit procédé de création de ladite base de données comprenant les étapes consistant à :

(a) sélectionner des ensembles de coordonnées sur ledit contour pour représenter lesdits noeuds,

(b) établir un ordre séquentiel desdits noeuds,

(c) coder lesdits noeuds dans un ordre des données dans ladite mémoire, qui est indicatif dudit ordre séquentiel des noeuds,

(d) ledit codage effectué lors de l'étape (c) fournissant un ensemble d'informations de données sous la forme d'un code de commande indicatif d'au moins l'un des éléments suivants :

i. les emplacements des coordonnées desdits noeuds,

ii. une direction devant être suivie pour atteindre un noeud à partir d'un noeud précédent,

iii. une forme prédéterminée désirée dudit contour entre un couple desdits noeuds, eet

iv. une forme dudit contour au niveau d'un noeud,

(e) pour un premier noeud ($Z_a$), représenter un premier point d'extrémité d'un premier segment de courbe (21) devant être produit, obtenir un premier angle (a) mesuré par rapport à une ligne de référence quelconque et indicatif d'une moyenne de deux angles entre noeuds ($B_{a-1}$ et $B_a$), ($Z_{a-1}$) étant le noeud précédant immédiatement le noeud ($Z_a$) dans ledit ordre séquentiel et l'angle entre noeuds ($B_{a-1}$) étant l'angle formé entre la ligne de référence et une ligne droite raccordant les deux noeuds ($Z_a$ et $Z_{a-1}$), alors que ($Z_{a+1}$) est le noeud succédant directement ou noeud ($Z_a$) dans ledit ordre séquentiel et l'angle entre noeuds ($B_a$) est l'angle formé entra la ligne de référence et une ligne droite raccordant lesdits noeuds ($Z_a$ et $Z_{a+1}$), et coder, en tant que données dans ladite mémoire, des signaux indicatifs dudit premier angle (a),

(f) en un second desdits noeuds ($Z_{a+1}$), représenter un second point d'extrémité dudit premier segment de courbe (21), établir un second angle ($B_{a+1}$) pour ledit segment de courbe et coder, sous la forme de données, dans ladite mémoire, lesdits signaux du dispositif de calcul indicatifs dudit second angle ($B_{a+1}$),

(g) établir, dans ladite mémoire, un compilateur qui produit des points de lieu pour compiler des données en fonction de :

i. une fonction polynomiale cubique paramétrique prédéterminée d'un paramètre "t", qui est incrémenté selon des échelons;

ii. lesdits noeuds; et

iii. lesdits angles au niveau desdits points d'extrémité desdits premiers segments de courbe;

(h) établir une gamme limitée "R" de valeurs pour le paramètre "t" dans le compilateur,

(i) dans ladite mémoire, appliquer lesdits signaux indicatifs desdits emplacements desdits premier et second noeuds dudit premier segment de courbe audit compilateur,

(j) dans ladite mémoire, appliquer lesdits signaux indicatifs desdits premier et second angles dudit premier segment de courbe (21) audit compilateur,

(k) produire un signal indicatif d'une valeur sélectionnée distincte du paramètre "t" dans la gamme "R" au moyen d'une production incrémentale de signaux, et appliquer ledit signal audit compilateur pour obtenir un signal indicatif d'un emplacement respectif d'un noeud sur ledit premier segment de courbe conformément à ladite fonction polynomiale cubique paramétrique prédéterminée,

(l) répéter l'étape (k) en appliquant des signaux indicatifs de valeurs sélectionnées additionnelles distinctes dudit paramètre "t" dans ladite gamme "R" pour obtenir une pluralité de signaux indicatifs des emplacements respectifs de noeuds sur ledit lieu dudit premier segment de courbe pour des valeurs respectives du paramètre "t", et

(m) coder lesdits signaux obtenus lors des étapes (k) et (l), dans ladite base de données dans ladite mémoire pour un échantillonnage ultérieur on vue de représenter ledit premier segment de courbe pour produire ultérieurement une représentation visuelle de ladite courbe moyennant l'utilisation desdits signaux codés de données pour commander directement un processus d'affichage et afficher optiquement la courbe.

2. Procédé selon la revendication 1, comprenant en outre une répétition des étapes (a) à (l) pour au moins un second segment de courbe faisant partie du lieu de ladite courbe.

3. Procédé selon la revendication 1, dans lequel ledit compilateur est une forme de Hermite.

4. Procédé selon la revendication 1, selon lequel la ligne de référence est une ligne droite horizontale dans un système de coordonnées normalisées, formée sur une grille maître et par rapport à laquelle les angles sont mesurés.

5. Procédé selon la revendication 1, selon lequel ladite étape (a) comprend en outre la définition desdits emplacements de noeuds pur rapport à une grille de codage possédant des première et seconde coordonnées, et ladite gamme de valeur "R" est définie indépendamment desdites première et seconde coordonnées.

6. Procédé selon la revendication 1, selon lequel ladite production incrémentale des signaux lors de l'étape (k) comprend en outre la production d'un signal correspondant à une valeur incrémentale dudit paramètre "t" et la production d'un multiple de ladite valeur incrémentale pour constituer ledit signal indicatif de ladite valeur distincte sélectionnée.

7. Procédé selon la revendication 6, selon lequel ladite étape (a) consistant à définir lesdits emplacements de noeuds comprend en outre la définition desdits emplacements de noeuds par rapport à une grille de codage possédant des première et seconde coordonnées, et ladite étape consistant à produire un signal correspondant à une valeur incrémentale du paramètre "t" comprend en outre la production dudit signal de valeur incrémentale correspondant à un multiple de l'inverse de la distance entre lesdits premier et second noeuds,

8. Procédé selon la revendication 1, selon lequel lors de l'étape (c), ledit ordre séquentiel des noeuds définit une boucle du contour et lesdits signaux de codage comprend en outre un codage desdits signaux de noeuds dans un ordre des données indicatif dudit ordre des noeuds, et ledit ordre des données définit une boucle de données indicative de ladite boucle de contour.

9. Procédé selon la revendication 8, selon lequel l'étape (m) comprend en outre le codage desdits signaux de noeuds dans ladite boucle de données, dans un ordre indicatif de l'ordre desdits noeuds le long du segment de courbe produit entre des noeuds dans l'ordre des noeuds, ce qui permet de positionner les signaux codés de noeuds pour un segment de courbe respectif dans la boucle des données entre les signaux codés de noeuds correspondant aux points d'extrémité de ce segment de courbe respectif.

10. Procédé selon la revendication 1, selon lequel ledit second angle au niveau dudit second noeud ($Z_{a+1}$) est $\phi$ et ledit premier angle au niveau dudit premier noeud ($Z_a$) est $\theta$, et selon lequel ledit compilateur produit des signaux d'emplacement de noeuds ($Z(t)$) entre des noeuds ($Z_a$) et ($Z_{a+1}$) conformément aux équations :

$$Z(t) = Z_a + (3t^2 - 2t^3)(Z_a + 1 - Z_a) + rt(1-t)^2 S_1 - st^2(1-t)S_2$$

$$S_1 = e^{j\theta} (Z_{a+1} - Z_a)$$

$$S_2 = e^{-j\phi} (Z_{a+1} - Z_a)$$

$$0 \leq t \leq 1$$

r et s étant des nombres réels positifs.

11. Procédé selon la revendication 10, selon lequel ledit angle $\theta$ est un angle d'entrée pour ledit premier segment de courbe, au niveau dudit premier noeud ($Z_a$), et ledit angle $\phi$ est un angle de sortie pour ledit premier segment de courbe au niveau dudit second noeud ($Z_{a+1}$).

12. Procédé selon la revendication 1, selon lequel ladite étape (c) comprend en outre le codage des positions de coordonnées desdits noeuds par rapport à une grille normalisée de codage, ce qui permet de définir la boucle de contour à une taille normalisée, obtenir un facteur de conversion rapportant la grille normalisée de codage à une grille de coordonnées d'affichage, et appliquer ledit facteur de conversion aux positions de coordonnées pour chaque noeud, ce qui définit la boucle de contour par rapport à la grille de coordonnées d'affichage.

13. Procédé selon la revendication 1, selon lequel l'étape (d) comprend le codage de ladite information réglée dans un ordre de données indicatif dudit ordre des noeuds et sous la forme d'une série de mots de données, une partie désignée de ladite série fournissant une valeur de code de commande indicative dudit code de commande.

14. Procédé selon la revendication 13, selon lequel ledit codage de ladite information réglée comprend en outre le codage de ladite partie désignée de ladite série de mots de données en tant que première partie dans ladite série de mots de donnés.

**Patentansprüche**

1. Verfahren zur Erzeugung einer Datenbank auf einem Speichermedium, welches zur Bildung eines Speichers in einem Rechner verwendbar ist, mit dem Schritt des Kodierens von Daten in dem Speicher, wobei die Daten Knoten an einer Umrißlinie darstellen, die bezüglich einer Koordinatenebene definiert ist, wobei der Schritt des Kodierens der Daten die Unterschritte umfaßt:

(i) Erzeugung von Signalen, die Knotenpunkte auf einem Ort der Kurve darstellen, die durch einen Satz Knoten definiert ist, und

(ii) Kodieren der Knotenpunktsignale in dem Speichermedium zur Verwendung bei der Darstellung der Kurve in einem gesonderten Kurvendarstellungsverfahren entsprechend dem Kurvenort,

wobei das Verfahren zur Erzeugung der Datenbank die Schritte umfaßt:

(a) Auswählen von Koordinatensätzen auf der Umrißlinie, welche Knoten darstellen,

(b) Schaffen einer Abfolge der Knoten,

(c) Kodieren der Knoten in einer Datenfolge in dem Speicher, der die Knotenabfolge angibt,

(d) wobei das Kodieren in Schritt (c) einen Informationssatz von Daten in Form eines Steuerkodes schafft, der wenigstens eines der folgenden Elemente umfaßt:

i. die Koordinatenlagen der Knoten,

ii. die einzuschlagende Richtung, um einen Knoten von einem vorangehenden Knoten zu erreichen,

iii. eine vorbestimmte gewünschte Form der Umrißlinie zwischen einem Knotenpaar, und

iv. eine Form der Umrißlinie bei einem Knoten,

(e) für einen ersten Knoten ($Z_a$), der einen ersten Endpunkt eines ersten zu generierenden Kurvensegments darstellt, Ableiten eines ersten Winkels (a), der bezüglich einer willkürlichen Bezugslinie gemessen wird und einen Durchschnitt zweier Zwischenknoten-Winkel ($B_{a-1}$ und $B_a$) angibt, wobei ($Z_{a-1}$) der dem Knoten unmittelbar vorangehende Knoten ($Z_a$) in der Abfolge ist und der Zwischenknoten-Winkel ($B_{a-1}$) der zwischen der Bezugslinie und einer geraden Linie gebildete Winkel ist, der die beiden Knoten ($Z_a$ und $Z_{a-1}$) verbindet, und wobei ($Z_{a+1}$) der Knoten ist, der dem Knoten ($Z_a$) in der Abfolge unmittelbar folgt, und der Zwischenknoten-Winkel $B_a$ der Winkel ist, der zwischen der Bezugslinie und einer geraden Linie gebildet ist, welche die Knoten ($Z_a$ und $Z_{a+1}$) verbindet, sowie Kodieren als Daten in dem Speicher, wobei die Signale den ersten Winkel (a) angeben,

(f) bei einem zweiten der Knoten ($Z_{a+1}$), der einen zweiten Endpunkt des ersten Kurvenabschnitts (21) darstellt, Ansetzen eines zweiten Winkels ($B_{a+1}$) für das erste Kurvensegment und Kodieren der Rechnersignale, welche den zweiten Winkel ($B_{a+1}$) angeben, als Daten in dem Speicher,

(g) Bilden eines Kompilierers in dem Speicher, der Ortspunkte zum Kompilieren von Daten als Funktion folgender Elemente erzeugt:

i. eine vorherbestimmte kubische parametrische Polynominalfunktion eines Parameters "t", der in Schritten inkrementiert ist;

ii. der Knoten; und

iii. der Winkel an den Endpunkten der ersten Kurvensegmente;

(h) Aufstellen eines begrenzten Wertebereichs "R" für Parameter "t" in dem Kompilierer,

(i) in dem Speicher Einsetzen der Signale, welche die Positionen der ersten und zweiten Knoten des ersten Kurvensegments angeben, in den Kompilierer,

(j) in dem Speicher Einsetzen der Signale, welche die ersten und zweiten Winkel des ersten Kurvensegments (21) darstellen, in den Kompilierer,

(k) Generieren eines Signals, welches einen bestimmten ausgewählten Wert des Parameters "t" innerhalb des Bereichs "R" angibt, durch inkrementale Signalerzeugung, und Eingeben des Signals in den Kompilierer, um ein Signal abzuleiten, welches eine entsprechende Knotenposition auf dem ersten Kurvensegment entsprechend der vorbestimmten kubischen parametrischen Polynominalfunk-

tion angibt,

(l) Wiederholen von Schritt (k) durch Eingeben von Signalen, welche zusätzliche bestimmte ausgewählte Werte des Parameters "t" innerhalb des Bereichs "R" darstellen, um eine Vielzahl von Signalen abzuleiten, welche entsprechende Knotenorte auf dem Ort des ersten Kurvensegments für entsprechende Werte des Parameters "t" darstellen,

(m) Kodieren der in den Schritten (k) und (l) abgeleiteten Signale in der Datenbank in dem Speicher zum späteren Sortieren, um das erste Kurvensegment zum anschließenden Generieren einer sichtbaren Darstellung der Kurve darzustellen, indem die kodierten Datensignale zur direkten Steuerung eines Darstellungsvorgangs und sichtbarer Darstellung der Kurve verwendet werden.

2. Verfahren nach Anspruch 1,
**dadurch gekennzeichnet,**
daß die Schritte (a) bis (l) für wenigstens ein zweites Kurvensegment innerhalb des Orts der Kurve wiederholt werden.

3. Verfahren nach Anspruch 1,
**dadurch gekennzeichnet,**
daß der Kompilierer in Hermit-Form vorliegt.

4. Verfahren nach Anspruch 1,
**dadurch gekennzeichnet,**
daß die Bezugslinie eine gerade, horizontale Linie in einem normalisierten Koordinatensystem ist, welches auf einer Gittervorlage (Schriftzeichenvorlage) ausgebildet ist und innerhalb dessen die Winkel gemessen werden.

5. Verfahren nach Anspruch 1,
**dadurch gekennzeichnet,**
daß Schritt (a) weiterhin eine Bestimmung der Knotenstellen hinsichtlich eines Kodier-Gitternetzes mit ersten und zweiten Koordinaten umfaßt und daß der Wertebereich "R" unabhängig von den ersten und zweiten Koordinaten bestimmt wird.

6. Verfahren nach Anspruch 1,
**dadurch gekennzeichnet,**
daß das inkrementale Erzeugen der Signale nach Schritt (k) weiterhin das Erzeugen eines Signals entsprechend einem inkrementalen Wert des Parameters "t" und das Erzeugen einer Vielzahl des inkrementalen Werts als Signal, welches den bestimmten ausgewählten Wert darstellt, umfaßt.

7. Verfahren nach Anspruch 6,
**dadurch gekennzeichnet,**
daß Schritt (a), mit dem die Orte der Knoten bestimmt werden, weiterhin das Bestimmen der Orte der Knoten bezüglich eines Kodiernetzes mit ersten und zweiten Koordinaten umfaßt, und daß der Schritt, der das Erzeugen eines Signals entsprechend einem inkrementalen Wert des Parameters "t" umfaßt, weiterhin das Erzeugen des Signals des inkrementalen Werts einschließt, der einem Vielfachen des Kehrwerts der Entfernung zwischen den ersten und zweiten Knoten entspricht.

8. Verfahren nach Anspruch 1,
**dadurch gekennzeichnet,**
daß nach Schritt (c) die Abfolge der Knoten eine Umrißlinienschleife bestimmt und die Signalkodierung weiterhin eine Kodierung der Knotensignale in einer Folge der Daten einschließt, welche die Folge der Knoten angibt, und daß die Folge der Daten eine Datenschleife definiert, welche die der Umrißlinienschleife bestimmt.

9. Verfahren nach Anspruch 8,
**dadurch gekennzeichnet,**
daß Schritt (m) weiterhin das Kodieren der Knotensignale in der Datenschleife in einer Folge umfaßt, welche die Folge der Knoten entlang dem Kurvensegment angibt, welches zwischen Knoten in der Knotenfolge gebildet wird, wodurch die für ein entsprechendes Kurvensegment kodierten Knotensignale in der Datenschleife zwischen den kodierten Knotensignalen entsprechend den Endpunkten des entsprechenden Kurvensegments angeordnet werden.

**10.** Verfahren nach Anspruch 1,
**dadurch gekennzeichnet,**
daß für den zweiten Winkel bei dem zweiten Knoten ($Z_{a+1}$) gleich $\phi$ und den ersten Winkel bei dem ersten Knoten ($Z_a$) gleich $\theta$ der Kompilierer Signale der Knotenorte ($Z(t)$) zwischen ($Z_a$) und ($Z_{a+1}$) entsprechend den Gleichungen generiert:

$$Z(t) = Z_a + (3t^2 - 2t^3)(Z_a + 1 - Z_a) + rt(1-t)^2 S_1 - st^2(1-t)S_2$$

$$S_1 = e^{j\theta} (Z_{a+1} - Z_a)$$

$$S_2 = e^{-j\phi} (Z_{a+1} - Z_a)$$

$$0 \leq t \leq 1$$

worin r und s positive reelle Zahlen sind.

**11.** Verfahren nach Anspruch 10,
**dadurch gekennzeichnet,**
daß der Winkel $\theta$ ein Eintrittswinkel für das erste Kurvensegment bei dem ersten Knoten ($Z_a$) ist und der Winkel $\phi$ ein Austrittswinkel für das erste Kurvensegment bei dem zweiten Knoten ($Z_{a+1}$) ist.

**12.** Verfahren nach Anspruch 1,
**dadurch gekennzeichnet,**
daß Schritt (c) weiterhin ein Kodieren der Koordinatenpositionen der Knoten bezüglich eines normalisierten Kodier-Gitternetzes umfaßt, wodurch die Umrißlinienschleife mit einer normalisierten Größe bestimmt wird, Ableiten eines Umrechnungsfaktors bezüglich des normalisierten Kodier-Gitternetzes auf ein Darstellungskoordinatengitternetz umfaßt und Anwenden des Umrechnugsfaktors auf Koordinatenpositionen für jeden Knoten umfaßt, wodurch die Umrißschleife bezüglich dem Darstellungskoordinatengitternetz bestimmt wird.

**13.** Verfahren nach Anspruch 1,
**dadurch gekennzeichnet,**
daß Schritt (d) ein Kodieren des Informationssatzes in einer Datenfolge, welche die Knotenfolge angibt, als eine Reihe von Datenworten umfaßt, wobei ein vorbestimmter Teil der Reihe einen Steuercodewert enthält, welcher den Steuercode angibt.

**14.** Verfahren nach Anspruch 12,
**dadurch gekennzeichnet,**
daß das Kodieren der Information ferner ein Kodieren des bestimmten Teils der Reihe der Datenworte als ersten in der Reihe der Datenworte umfaßt.

**FIG. 1a**

**FIG. 1b**

FIG. 1d

FIG. 1e

FIG. 1c

FIG. 2

$$T_2 = t(1-t)^2$$

$$T_3 = t^2(1-t)$$

FIG. 4

MASTER ENCODING
GRID

LEFT SIDE
BEARING

RIGHT SIDE
BEARING    2047,2047

0,2047

0,1600    592,1600            M2            1456,1600

592,736
(RELATIVE 0,0)                            1456,448

0,736
Y-OFFSET

BASELINE
902,448
(RELATIVE 400,0)

0,448

0,0              592,0              1456,0              2047,0

X-OFFSET

FIG. 3

110

EDITING OVERIDE CONTROL CODE 8

*FIG. 5*

EDITING OVERIDE CONTROL CODE 9

*FIG.6α*

EDITING OVERIDE CONTROL CODE 9

FIG. 6b

FIG. 10

EDITING OVERIDE CONTROL CODE 10

FIG. 7a

FIG.7b

EP 0 191 134 B1

FIG. 8

FIG. 9